# EUROPEAN PATENT APPLICATION

(11) **EP 4 564 875 A1**
(43) Date of publication of application: **04.06.2025**
(21) Application number: 23851434.3
(22) Date of filing: 29.06.2023
(51) Int. Cl.: H04W 12/069

(54) **COMMUNICATION METHOD, APPARATUS AND SYSTEM**

(30) Priority: 12.08.2022 CN 202210968996
(71) Applicant: Huawei Technologies Co., Ltd., Shenzhen, Guangdong 518129 (CN)
(72) Inventor: GUO, Longhua, Shenzhen, Guangdong 518129 (CN); ZHU, Yuanping, Shenzhen, Guangdong 518129 (CN); WU, Rong, Shenzhen, Guangdong 518129 (CN)
(74) Representative: Gill Jennings & Every LLP
(86) International application number: PCT/CN2023/103565
(87) International publication number: WO 2024/032207

(57) **Abstract**

A communication system, method, and apparatus are provided, which are applied to a scenario in which an integrated access and backhaul node migrates from a central unit of a source donor node to a central unit of a target donor node. The communication system includes: the central unit of the target donor node, configured to: derive a first pre-shared key based on a first root key, a first Internet protocol address of the integrated access and backhaul node, and a second Internet protocol address of the central unit of the source donor node, and send the first pre-shared key to the central unit of the source donor node; and the central unit of the source donor node, configured to: receive the first pre-shared key, and perform security authentication on the integrated access and backhaul node based on the first pre-shared key, to establish a secure transmission channel between the central unit of the source donor node and the integrated access and backhaul node. According to the method, the secure transmission channel may be established between the central unit of the source donor node and the integrated access and backhaul node, improving communication security.

## Description

This application claims priority to Chinese Patent Application No. 202210968996.X, filed with the China National Intellectual Property Administration on August 12, 2022 and entitled "COMMUNICATION METHOD, APPARATUS, AND SYSTEM", which is incorporated herein by reference in its entirety.

### TECHNICAL FIELD

This application relates to an integrated access and backhaul network, and in particular, to a communication method, apparatus, and system.

### BACKGROUND

To meet an ultra-high capacity requirement of a 5th generation (the 5th generation, 5G) mobile communication system, high-frequency small cell networking becomes a mainstream manner. A high-frequency carrier has a poor propagation characteristic, is greatly attenuated if blocked, and has small coverage. Therefore, a large quantity of small cells need to be densely deployed. An integrated access and backhaul (integrated access and backhaul, IAB) technology provides a solution to the foregoing problems. A wireless transmission solution is used for both an access link (access Link) and a backhaul link (backhaul link) of an IAB network, which can avoid deploying optical fibers.

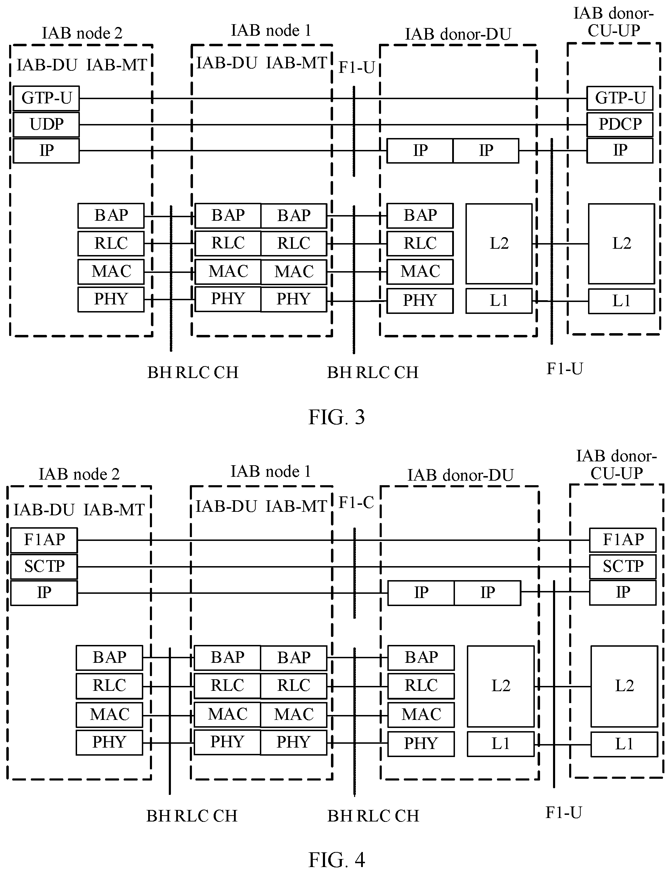

As shown in FIG. 3 and FIG. 4, an F1 interface needs to be established between an IAB node and a donor node. To protect security of the F1 interface, a secure transmission channel, such as an Internet protocol (internet protocol, IP) security (IP security, IPsec) channel, may be established between the IAB node and an IAB donor.

However, in some cases, the secure transmission channel between the IAB node and the IAB donor may fail to be established, causing a security risk in communication between the IAB node and the IAB donor. Therefore, how to establish a secure transmission channel between the IAB node and a central unit of the IAB donor to improve security performance between the IAB node and the IAB donor is a problem that needs to be resolved currently.

### SUMMARY

This application provides a communication method, apparatus, and system, to improve security of communication between an integrated access and backhaul node and a source donor node.

According to a first aspect, a communication system is provided, for use in a scenario in which an integrated access and backhaul node migrates from a central unit of a source donor node to a central unit of a target donor node. The system includes the central unit of the target donor node and the central unit of the source donor node. The central unit of the target donor node is configured to: derive a first pre-shared key based on a first root key, a first Internet protocol address of the integrated access and backhaul node, and a second Internet protocol address of the central unit of the source donor node, and send the first pre-shared key to the central unit of the source donor node. The central unit of the source donor node is configured to: receive the first pre-shared key from the central unit of the target donor node, and perform security authentication on the integrated access and backhaul node based on the first pre-shared key, to establish a first secure transmission channel between the central unit of the source donor node and the integrated access and backhaul node.

In the foregoing solution, the central unit of the source donor node establishes the first secure transmission channel between the central unit of the source donor node and the integrated access and backhaul node based on the first pre-shared key obtained from the central unit of the target donor node, to avoid a case in which the first secure transmission channel fails to be established because a pre-shared key used by the central unit of the source donor node is different from a pre-shared key used by the integrated access and backhaul node. Therefore, security of communication between the central unit of the source donor node and the integrated access and backhaul node can be improved.

With reference to the first aspect, in some implementations of the first aspect, the central unit of the target donor node is further configured to send address information corresponding to the first pre-shared key to the central unit of the source donor node, where the address information includes the first Internet protocol address and/or the second Internet protocol address. The central unit of the source donor node is further configured to: receive the address information from the central unit of the target donor node, and store a correspondence between the first pre-shared key and the address information.

In the foregoing solution, in addition to sending the first pre-shared key to the central unit of the source donor node, the central unit of the target donor node further sends the address information corresponding to the first pre-shared key to the central unit of the source donor node, so that the central unit of the source donor node determines that the first pre-shared key is used to establish a secure transmission channel corresponding to the address information.

With reference to the first aspect, in some implementations of the first aspect, that the central unit of the source donor node is configured to perform security authentication on the integrated access and backhaul node based on the first pre-shared key includes: The central unit of the source donor node is configured to: receive a request message from the integrated access and backhaul node, where the request message is used to request to establish the secure transmission channel, and the request message includes the address information; determine the first pre-shared key based on the address information and the correspondence between the first pre-shared key and the address information; and perform security authentication on the integrated access and backhaul node based on the first pre-shared key.

Based on the foregoing solution, after receiving, from the integrated access and backhaul node, the request message used to request to establish the secure transmission channel, the central unit of the source donor node searches, in a local storage based on the address information carried in the request message, for the first pre-shared key corresponding to the address information, to establish, by using the first pre-shared key, the secure transmission channel corresponding to the address information.

With reference to the first aspect, in some implementations of the first aspect, the central unit of the source donor node is further configured to send the second Internet protocol address to the central unit of the target donor node. The central unit of the target donor node is further configured to receive the second Internet protocol address from the central unit of the source donor node.

In the foregoing solution, the central unit of the source donor node may further send the second Internet protocol address to the central unit of the target donor node, so that the central unit of the target donor node may derive the first pre-shared key based on the address information. This ensures that the central unit of the target donor node and the integrated access and backhaul node derive the pre-shared keys by using a same parameter, so that the first pre-shared key is the same as the pre-shared key derived by the integrated access and backhaul node. Therefore, the case in which the first secure transmission channel fails to be established because the pre-shared key used by the central unit of the source donor node is different from the pre-shared key used by the integrated access and backhaul node can be avoided.

With reference to the first aspect, in some implementations of the first aspect, that the central unit of the source donor node is further configured to send the second Internet protocol address to the central unit of the target donor node includes: The central unit of the source donor node is further configured to send a handover request message to the central unit of the target donor node, where the handover request message includes the second Internet protocol address, and the handover request message is used to request handover of the integrated access and backhaul node from the central unit of the source donor node to the central unit of the target donor node. That the central unit of the target donor node is further configured to receive the second Internet protocol address from the central unit of the source donor node includes: The central unit of the target donor node is further configured to receive, from the central unit of the source donor node, the handover request message including the second Internet protocol address.

In the foregoing solution, when the integrated access and backhaul node migrates from the central unit of the source donor node to the central unit of the target donor node by using a handover procedure, the central unit of the source donor node sends the handover request message to the central unit of the target donor node, where the handover request message carries the second Internet protocol address.

With reference to the first aspect, in some implementations of the first aspect, the central unit of the target donor node is further configured to: receive a reestablishment request message from the integrated access and backhaul node, where the reestablishment request message is used to request to establish a radio resource control connection between the integrated access and backhaul node and the central unit of the target donor node; and send a context request message to the central unit of the source donor node in response to the reestablishment request message, where the context request message is used to request to obtain a context of the integrated access and backhaul node. That the central unit of the source donor node is further configured to send the second Internet protocol address to the central unit of the target donor node includes: The central unit of the source donor node is further configured to: receive the context request message from the target donor node, and send a context response message to the central unit of the target donor node in response to the context request message, where the context response message includes the context of the integrated access and backhaul node, and the context includes the second Internet protocol address. That the central unit of the target donor node is further configured to receive the second Internet protocol address from the central unit of the source donor node includes: The central unit of the target donor node is further configured to receive the context of the integrated access and backhaul node from the central unit of the source donor node, where the context includes the second Internet protocol address.

In the foregoing solution, when the integrated access and backhaul node migrates from the central unit of the source donor node to the central unit of the target donor node by using a reestablishment procedure, the central unit of the source donor node may add the second Internet protocol address to the context when sending the context of the integrated access and backhaul node to the central unit of the target donor node.

With reference to the first aspect, in some implementations of the first aspect, the central unit of the source donor node is further configured to send a key request message to the central unit of the target donor node, where the key request message is used to request to obtain the first pre-shared key. The central unit of the target donor node is further configured to receive the key request message from the central unit of the source donor node.

In the foregoing solution, the central unit of the target donor node may send the first pre-shared key to the central unit of the source donor node based on a request of the central unit of the source donor node.

With reference to the first aspect, in some implementations of the first aspect, the communication system further includes the integrated access and backhaul node, where the integrated access and backhaul node is configured to: derive a second pre-shared key based on the first root key, the first Internet protocol address, and the second Internet protocol address, where the second pre-shared key is the same as the first pre-shared key; and perform security authentication on the central unit of the source donor node based on the second pre-shared key, to establish the first secure transmission channel.

In the foregoing solution, the integrated access and backhaul node derives the second pre-shared key based on the first root key, the first Internet protocol address, and the second Internet protocol address, that is, the integrated access and backhaul node and the central unit of the target donor node derive the pre-shared keys by using the same parameter, so that the first pre-shared key is the same as the second pre-shared key. Therefore, the case in which the first secure transmission channel fails to be established because the pre-shared key used by the central unit of the source donor node is different from the pre-shared key used by the integrated access and backhaul node is avoided.

With reference to the first aspect, in some implementations of the first aspect, the integrated access and backhaul node is further configured to perform migration from the central unit of the source donor node to the central unit of the target donor node before deriving the second pre-shared key based on the first root key, the first Internet protocol address, and the second Internet protocol address.

In the foregoing solution, the integrated access and backhaul node migrates from the central unit of the source donor node to the central unit of the target donor node. In other words, the solution provided in this application may be applied to a scenario in which the integrated access and backhaul node has migrated. When the integrated access and backhaul node establishes the secure transmission channel with the central unit of the source donor node after migration, the integrated access and backhaul node and the central unit of the source donor node may establish the first secure transmission channel by using a same pre-shared key, to avoid the case in which the first secure transmission channel fails to be established because the pre-shared key used by the central unit of the source donor node is different from the pre-shared key used by the integrated access and backhaul node.

With reference to the first aspect, in some implementations of the first aspect, the central unit of the target donor node is further configured to: receive a migration complete message from the integrated access and backhaul node, where the migration complete message indicates that the integrated access and backhaul node completes migration from the central unit of the source donor node to the central unit of the target donor node; send a path switching request message to an access and mobility management function network element in response to the migration complete message, where the path switching request message includes identification information of the integrated access and backhaul node; receive a path switching response message from the access and mobility management function network element, where the path switching response message includes a next hop parameter; and derive the first root key based on the next hop parameter.

In the foregoing solution, after the integrated access and backhaul node completes migration, the central unit of the target donor node may derive the first root key based on the next hop parameter obtained from the access and mobility management function network element, so that a root key used by the central unit of the target donor node to derive the first pre-shared key is the same as a root key used by the integrated access and backhaul node to derive the second pre-shared key. Therefore, it is ensured that the first pre-shared key is the same as the second pre-shared key derived by the integrated access and backhaul node.

With reference to the first aspect, in some implementations of the first aspect, the first Internet protocol address is address information generated by a network management device or the central unit of the target donor node for a distributed unit of the integrated access and backhaul node after the integrated access and backhaul node migrates from the central unit of the source donor node to the central unit of the target donor node.

With reference to the first aspect, in some implementations of the first aspect, the central unit of the target donor node is further configured to generate the first Internet protocol address for the distributed unit of the integrated access and backhaul node after the integrated access and backhaul node migrates from the central unit of the source donor node to the central unit of the target donor node.

With reference to the first aspect, in some implementations of the first aspect, the central unit of the target donor node is further configured to send the first Internet protocol address to the integrated access and backhaul node.

According to a second aspect, a communication system is provided, for use in a scenario in which an integrated access and backhaul node migrates from a central unit of a source donor node to a central unit of a target donor node. The system includes the central unit of the source donor node and the integrated access and backhaul node. The integrated access and backhaul node is configured to perform migration from the central unit of the source donor node to the central unit of the target donor node. The central unit of the source donor node is configured to derive a third pre-shared key based on a second root key, a first Internet protocol address of the integrated access and backhaul node, and a second Internet protocol address of the central unit of the source donor node, where the second root key is a key shared by the central unit of the source donor node and the integrated access and backhaul node. The integrated access and backhaul node is configured to derive a fourth pre-shared key based on the second root key, the first Internet protocol address, and the second Internet protocol address, where the fourth pre-shared key is the same as the third pre-shared key. The central unit of the source donor node is further configured to perform security authentication on the integrated access and backhaul node based on the third pre-shared key, to establish a first secure transmission channel between the central unit of the source donor node and the integrated access and backhaul node. The integrated access and backhaul node is further configured to perform security authentication on the central unit of the source donor node based on the fourth pre-shared key, to establish the first secure transmission channel.

In the foregoing solution, after the integrated access and backhaul node migrates from the central unit of the source donor node to the central unit of the target donor node, the integrated access and backhaul node and the central unit of the source donor node respectively derive the third pre-shared key and the fourth pre-shared key by using a same parameter, so that the third pre-shared key is the same as the fourth pre-shared key. Further, the integrated access and backhaul node and the central unit of the source donor node respectively establish the first secure transmission channel by using the third pre-shared key and the fourth pre-shared key, so that a case in which the first secure transmission channel fails to be established because a pre-shared key used by the central unit of the source donor node is different from a pre-shared key used by the integrated access and backhaul node is avoided, and security of communication between the integrated access and backhaul node and the central unit of the source donor node is improved.

With reference to the second aspect, in some implementations of the second aspect, the second root key is the same as a third root key, or is a key derived by using a third root key or a next hop parameter, where the third root key is a key obtained by the integrated access and backhaul node and the central unit of the source donor node in a process in which the integrated access and backhaul node registers with a network via the central unit of the source donor node.

With reference to the second aspect, in some implementations of the second aspect, the third root key is used to derive, before the integrated access and backhaul node migrates from the central unit of the source donor node to the central unit of the target donor node, a fifth pre-shared key used to establish a second secure transmission channel between the integrated access and backhaul node and the central unit of the source donor node.

With reference to the second aspect, in some implementations of the second aspect, the central unit of the source donor node is further configured to store the second root key. The integrated access and backhaul node is further configured to store the second root key.

In the foregoing solution, the integrated access and backhaul node and the source donor node may pre-store the second root key, to subsequently derive the pre-shared keys by using the second root key.

With reference to the second aspect, in some implementations of the second aspect, that the central unit of the source donor node is further configured to store the second root key includes: The central unit of the source donor node is further configured to store the second root key when a first preset condition is satisfied. That the integrated access and backhaul node is further configured to store the second root key includes: The integrated access and backhaul node is further configured to store the second root key when a second preset condition is satisfied.

With reference to the second aspect, in some implementations of the second aspect, the first preset condition includes one or more of the following: The central unit of the source donor node determines that the integrated access and backhaul node is a node having an access and backhaul function. The central unit of the source donor node determines that the integrated access and backhaul node has migrated. The central unit of the source donor node determines that before the integrated access and backhaul node migrates from the central unit of the source donor node to the central unit of the target donor node, a transport mode is used for the second secure transmission channel established by the source donor node and the integrated access and backhaul node. The central unit of the source donor node determines, according to a local policy, to establish a secure transmission channel with the integrated access and backhaul node after the integrated access and backhaul node migrates. The central unit of the source donor node determines that before the integrated access and backhaul node migrates from the central unit of the source donor node to the central unit of the target donor node, the second secure transmission channel has been established between the source donor node and the integrated access and backhaul node by using a pre-shared key derived based on the second root key.

With reference to the second aspect, in some implementations of the second aspect, the second preset condition includes one or more of the following: It is determined that the integrated access and backhaul node has migrated from the central unit of the source donor node to the central unit of the target donor node. The integrated access and backhaul node determines that before migration from the central unit of the source donor node to the central unit of the target donor node, the transport mode is used for the second secure transmission channel established by the integrated access and backhaul node and the central unit of the source donor node. The integrated access and backhaul node determines, according to a local policy, to establish the secure transmission channel with the central unit of the source donor node after migration. The integrated access and backhaul node determines that before migration from the central unit of the source donor node to the central unit of the target donor node, the second secure transmission channel has been established between the source donor node and the integrated access and backhaul node by using the pre-shared key derived based on the second root key.

With reference to the second aspect, in some implementations of the second aspect, the central unit of the source donor node is further configured to: store first indication information corresponding to the second root key, where the first indication information indicates that the second root key is used to derive the pre-shared key after the integrated access and backhaul node migrates from the central unit of the source donor node to the central unit of the source donor node; and determine, based on the first indication information, to derive the third pre-shared key by using the second root key. The integrated access and backhaul node is further configured to: store second indication information corresponding to the second root key, where the second indication information indicates that the second root key is used to derive the pre-shared key after the integrated access and backhaul node migrates from the central unit of the source donor node to the central unit of the target donor node; and determine, based on the second indication information, to derive the fourth pre-shared key by using the second root key.

In the foregoing solution, the central unit of the source donor node may store the first indication information, to determine, based on the first indication information after the integrated access and backhaul node migrates, to derive the pre-shared key by using the second root key. Similarly, the integrated access and backhaul node may store the second indication information, to determine, based on the second indication information after migration, to derive the pre-shared key by using the second root key.

With reference to the second aspect, in some implementations of the second aspect, the central unit of the source donor node is further configured to receive the first Internet protocol address from a network management device or the central unit of the target donor node after the integrated access and backhaul node migrates from the central unit of the source donor node to the central unit of the target donor node. The integrated access and backhaul node is further configured to receive the first Internet protocol address from the network management device or the central unit of the target donor node after migration from the central unit of the source donor node to the central unit of the target donor node.

According to a third aspect, a communication system is provided, for use in a scenario in which an integrated access and backhaul node migrates from a central unit of a source donor node to a central unit of a target donor node. The system includes the central unit of the source donor node and the integrated access and backhaul node. The integrated access and backhaul node is configured to determine a fifth pre-shared key in a local storage, where the fifth pre-shared key is used to establish a second secure transmission channel between the central unit of the source donor node and the integrated access and backhaul node before the integrated access and backhaul node migrates from the central unit of the source donor node to the central unit of the target donor node. The central unit of the source donor node is configured to determine the fifth pre-shared key in a local storage. The central unit of the source donor node is further configured to perform security authentication on the integrated access and backhaul node based on the fifth pre-shared key, to establish a first secure transmission channel between the integrated access and backhaul node and the central unit of the source donor node. The integrated access and backhaul node is further configured to perform security authentication on the central unit of the source donor node based on the fifth pre-shared key, to establish the first secure transmission channel.

In the foregoing solution, before the integrated access and backhaul node migrates from the central unit of the source donor node to the central unit of the target donor node, the integrated access and backhaul node and the central unit of the source donor node establish the second secure transmission channel by using the fifth pre-shared key. When the integrated access and backhaul node and the central unit of the source donor node need to establish the first secure channel, the integrated access and backhaul node and the central unit of the source donor node still establish the first secure transmission channel by using the fifth pre-shared key. Therefore, a case in which the first secure transmission channel fails to be established because a pre-shared key used by the central unit of the source donor node is different from a pre-shared key used by the integrated access and backhaul node can be avoided, and security of communication between the central unit of the source donor node and the integrated access and backhaul node can be improved.

With reference to the third aspect, in some implementations of the third aspect, the integrated access and backhaul node is further configured to perform migration from the central unit of the source donor node to the central unit of the target donor node before determining the fifth pre-shared key in the local storage. The central unit of the source donor node is further configured to determine, before determining the fifth shared key in the local storage, that the integrated access and backhaul node has migrated from the central unit of the source donor node to the central unit of the target donor node.

With reference to the third aspect, in some implementations of the third aspect, the integrated access and backhaul node is further configured to store a correspondence between address information and the fifth pre-shared key, where the address information includes a first Internet protocol address of a distributed unit of the integrated access and backhaul node and/or a second Internet protocol address of the central unit of the source donor node. That the integrated access and backhaul node is configured to determine a fifth pre-shared key in a local storage includes: The integrated access and backhaul node is configured to: when determining to establish the second secure transmission channel by using the address information, determine the fifth pre-shared key based on the address information and the correspondence between the address information and the fifth pre-shared key in the local storage. The integrated access and backhaul node is further configured to send a request message to the central unit of the source donor node, where the request message includes the address information, and the request message is used to request to establish the first secure transmission channel. The central unit of the source donor node is further configured to store the correspondence between the address information and the fifth pre-shared key. That the central unit of the source donor node is configured to determine the fifth pre-shared key in a local storage includes: The central unit of the source donor node is configured to: receive the request message from the integrated access and backhaul node, and determine the fifth pre-shared key based on the address information and the correspondence between the address information and the fifth pre-shared key in the local storage.

In the foregoing solution, the integrated access and backhaul node and the central unit of the source donor node store a correspondence between address information and a pre-shared key, to determine to establish, by using the pre-shared key, a secure transmission channel corresponding to the address information.

With reference to the third aspect, in some implementations of the third aspect, the system further includes the central unit of the target donor node. The central unit of the target donor node is configured to send a correspondence between the address information and a third Internet protocol address of the integrated access and backhaul node to the integrated access and backhaul node, where the third Internet protocol address is used to derive the fifth pre-shared key before the integrated access and backhaul node migrates from the central unit of the source donor node to the central unit of the target donor node. That the integrated access and backhaul node is further configured to store a correspondence between address information and the fifth pre-shared key includes: The integrated access and backhaul node is further configured to: receive the correspondence between the address information and the third Internet protocol address from the central unit of the target donor node, determine, based on the third Internet protocol address, the fifth pre-shared key corresponding to the third Internet protocol address, and store the correspondence between the address information and the fifth pre-shared key. The central unit of the target donor node is configured to send the correspondence between the address information and the third Internet protocol address to the central unit of the source donor node. That the central unit of the source donor node is further configured to store the correspondence between the address information and the fifth pre-shared key includes: The central unit of the source donor node is further configured to: receive the correspondence between the address information and the third Internet protocol address from the central unit of the target donor node, determine, based on the third Internet protocol address, the fifth pre-shared key corresponding to the third Internet protocol address, and store the correspondence between the address information and the fifth pre-shared key.

According to a fourth aspect, a communication method is provided. The method is applied to a scenario in which a central unit of an integrated access and backhaul node migrates from a source donor node to a central unit of a target donor node. The method may be performed by the central unit of the target donor node, or may be performed by a component (for example, a chip or a circuit) in the central unit of the target donor node. This is not limited. For convenience, an example in which the method is performed by the central unit of the target donor node is used for description.

The method includes: The central unit of the target donor node derives a first pre-shared key based on a first root key, a first Internet protocol address of the integrated access and backhaul node, and a second Internet protocol address of a central unit of the source donor node, where the first pre-shared key is used to establish a secure transmission channel between the integrated access and backhaul node and the central unit of the source donor node. The central unit of the target donor node sends the first pre-shared key to the central unit of the source donor node.

With reference to the fourth aspect, in some implementations of the fourth aspect, the method further includes: The central unit of the target donor node sends address information corresponding to the first pre-shared key to the central unit of the source donor node, where the address information includes the first Internet protocol address and/or the second Internet protocol address.

With reference to the fourth aspect, in some implementations of the fourth aspect, the method further includes: The central unit of the target donor node receives a key request message from the central unit of the source donor node, where the key request message is used to request to obtain the first pre-shared key.

With reference to the fourth aspect, in some implementations of the fourth aspect, before the central unit of the target donor node derives the first pre-shared key based on the first root key, the first Internet protocol address of the integrated access and backhaul node, and the second Internet protocol address of the central unit of the source donor node, the method further includes: The central unit of the target donor node receives the second Internet protocol address from the central unit of the source donor node.

With reference to the fourth aspect, in some implementations of the fourth aspect, that the central unit of the target donor node receives the second Internet protocol address from the central unit of the source donor node includes: The central unit of the target donor node receives a handover request message from the central unit of the source donor node, where the handover request message includes the second Internet protocol address, and the handover request message is used to request handover of the integrated access and backhaul node from the central unit of the source donor node to the central unit of the target donor node.

With reference to the fourth aspect, in some implementations of the fourth aspect, that the central unit of the target donor node receives the second Internet protocol address from the central unit of the source donor node includes: The central unit of the target donor node receives a reestablishment request message from the integrated access and backhaul node, where the reestablishment request message is used to request to establish a radio resource control connection between the integrated access and backhaul node and the central unit of the target donor node. The central unit of the target donor node sends a context request message to the central unit of the source donor node in response to the reestablishment request message, where the context request message is used to request to obtain a context of the integrated access and backhaul node. The central unit of the target donor node receives a context response message from the central unit of the source donor node, where the context response message includes the context of the integrated access and backhaul node, and the context includes the second Internet protocol address.

With reference to the fourth aspect, in some implementations of the fourth aspect, the method further includes: After the central unit of the target donor node receives, from the integrated access and backhaul node, a message indicating that the integrated access and backhaul node completes migration from the central unit of the source donor node to the central unit of the target donor node, the central unit of the target donor node sends a path switching request message to an access and mobility management function network element, where the path switching request message includes identification information of the integrated access and backhaul node. The central unit of the target donor node receives a path switching response message from the access and mobility management function network element, where the path switching response message includes a next hop parameter. The central unit of the target donor node derives the first root key based on the next hop parameter.

With reference to the fourth aspect, in some implementations of the fourth aspect, the method further includes: The central unit of the target donor node generates the first Internet protocol address for a distributed unit of the integrated access and backhaul node after the integrated access and backhaul node migrates from the central unit of the source donor node to the central unit of the target donor node.

With reference to the fourth aspect, in some implementations of the fourth aspect, the method further includes: The central unit of the target donor node sends the first Internet protocol address to the integrated access and backhaul node.

According to a fifth aspect, a communication method is provided. The method is applied to a scenario in which a central unit of an integrated access and backhaul node migrates from a source donor node to a central unit of a target donor node. The method may be performed by a central unit of the source donor node, or may be performed by a component (for example, a chip or a circuit) in a central unit of the source donor node. This is not limited. For convenience, an example in which the method is performed by the central unit of the source donor node is used for description.

The method includes: receiving a first pre-shared key from the central unit of the target donor node; and performing security authentication on the integrated access and backhaul node based on the first pre-shared key, to establish a first secure transmission channel between the central unit of the source donor node and the integrated access and backhaul node.

With reference to the fifth aspect, in some implementations of the fifth aspect, the performing security authentication on the integrated access and backhaul node based on the first pre-shared key, to establish a first secure transmission channel between the central unit of the source donor node and the integrated access and backhaul node includes: after the integrated access and backhaul node migrates from the central unit of the source donor node to the central unit of the target donor node, performing security authentication on the integrated access and backhaul node based on the first pre-shared key, to establish the first secure transmission channel.

For example, after the central unit of the source donor node receives a handover request message from the central unit of the target donor node, or after receiving a context request message from the central unit of the target donor node, the central unit of the source donor node performs security authentication on the integrated access and backhaul node based on the first pre-shared key, to establish the first secure transmission channel, where the handover request message is used to request handover of the integrated access and backhaul node from the central unit of the source donor node to the central unit of the target donor node, and the context request message is used to request a context of the integrated access and backhaul node.

With reference to the fifth aspect, in some implementations of the fifth aspect, the first pre-shared key is different from a fifth pre-shared key, where the fifth pre-shared key is used to establish a second secure transmission channel between the central unit of the source donor node and the integrated access and backhaul node before the integrated access and backhaul node migrates from the central unit of the source donor node to the central unit of the target donor node.

With reference to the fifth aspect, in some implementations of the fifth aspect, the method includes: receiving, from the central unit of the target donor node, address information corresponding to the first pre-shared key, where the address information includes a first Internet protocol address of the integrated access and backhaul node and/or a second Internet protocol address of the central unit of the target donor node; and storing a correspondence between the first pre-shared key and the address information.

With reference to the fifth aspect, in some implementations of the fifth aspect, the performing security authentication on the integrated access and backhaul node based on the first pre-shared key, to establish a first secure transmission channel between the central unit of the source donor node and the integrated access and backhaul node includes: receiving a request message from the integrated access and backhaul node, where the request message is used to request to establish the first secure transmission channel, and the request message includes the address information; determining the first pre-shared key based on the address information and the correspondence between the first pre-shared key and the address information; and performing security authentication on the integrated access and backhaul node based on the first pre-shared key.

With reference to the fifth aspect, in some implementations of the fifth aspect, before the receiving a first pre-shared key from the central unit of the target donor node, the method further includes: sending a key request message to the central unit of the target donor node, where the key request message is used to request to obtain the first pre-shared key.

With reference to the fifth aspect, in some implementations of the fifth aspect, the method further includes: sending the second Internet protocol address of the central unit of the source donor node to the central unit of the target donor node, where the second Internet protocol address is used to generate the first pre-shared key.

With reference to the fifth aspect, in some implementations of the fifth aspect, the sending the second Internet protocol address of the central unit of the source donor node to the central unit of the target donor node includes: sending the handover request message to the central unit of the target donor node, where the handover request message includes the second Internet protocol address, the handover request message is used to request handover of the integrated access and backhaul node from the central unit of the source donor node to the central unit of the target donor node, and the handover request message includes the second Internet protocol address.

With reference to the fifth aspect, in some implementations of the fifth aspect, the sending the second Internet protocol address of the central unit of the source donor node to the central unit of the target donor node includes: receiving the context request message from the target donor node, where the context request message is used to request the context of the integrated access and backhaul node; and sending a context response message to the central unit of the target donor node in response to the context request message, where the context response message includes the context of the integrated access and backhaul node, and the context includes the second Internet protocol address.

According to a sixth aspect, a communication method is provided. The method is applied to a scenario in which a central unit of an integrated access and backhaul node migrates from a source donor node to a central unit of a target donor node. The method may be performed by a central unit of the source donor node, or may be performed by a component (for example, a chip or a circuit) in a central unit of the source donor node. This is not limited. For convenience, an example in which the method is performed by the central unit of the source donor node is used for description.

The method includes: after the integrated access and backhaul node migrates from the central unit of the source donor node to the central unit of the target donor node, deriving a third pre-shared key based on a second root key, a first Internet protocol address of the integrated access and backhaul node, and a second Internet protocol address of the central unit of the source donor node, where the second root key is a key shared by the central unit of the source donor node and the integrated access and backhaul node; and performing security authentication on the integrated access and backhaul node based on the third pre-shared key, to establish a first secure transmission channel between the central unit of the source donor node and the integrated access and backhaul node.

With reference to the sixth aspect, in some implementations of the sixth aspect, the second root key is the same as a third root key, or is a key derived by using a third root key or a next hop parameter, where the third root key is a key obtained by the central unit of the source donor node from a network in a process in which the integrated access and backhaul node registers with the network via the central unit of the source donor node.

With reference to the sixth aspect, in some implementations of the sixth aspect, the third root key is used to derive, before the integrated access and backhaul node migrates from the central unit of the source donor node to the central unit of the target donor node, a fifth pre-shared key used to establish a second secure transmission channel between the integrated access and backhaul node and the central unit of the source donor node.

With reference to the sixth aspect, in some implementations of the sixth aspect, before the deriving a third pre-shared key based on a second root key, a first Internet protocol address of the integrated access and backhaul node, and a second Internet protocol address of the central unit of the source donor node, the method further includes: storing the second root key.

With reference to the sixth aspect, in some implementations of the sixth aspect, the storing the second root key includes: storing the second root key when a first preset condition is satisfied.

With reference to the sixth aspect, in some implementations of the sixth aspect, the first preset condition includes one or more of the following: It is determined that the integrated access and backhaul node is a node having an access and backhaul function. It is determined that the integrated access and backhaul node has migrated. It is determined that before the integrated access and backhaul node migrates from the central unit of the source donor node to the central unit of the target donor node, a transport mode is used for the second secure transmission channel established by the source donor node and the integrated access and backhaul node. A secure transmission channel is determined, according to a local policy, to be established with the integrated access and backhaul node after the integrated access and backhaul node migrates. It is determined that before the integrated access and backhaul node migrates from the central unit of the source donor node to the central unit of the target donor node, the second secure transmission channel has been established between the source donor node and the integrated access and backhaul node by using a pre-shared key derived based on the second root key.

With reference to the sixth aspect, in some implementations of the sixth aspect, the method further includes: storing first indication information corresponding to the second root key, where the first indication information indicates that the second root key is used to derive the third pre-shared key after the integrated access and backhaul node migrates from the central unit of the source donor node to the central unit of the source donor node; and determining, based on the first indication information, to derive the third pre-shared key by using the second root key.

With reference to the sixth aspect, in some implementations of the sixth aspect, the method further includes: after the integrated access and backhaul node migrates from the central unit of the source donor node to the central unit of the target donor node, receiving the first Internet protocol address from a network management device or the central unit of the target donor node.

According to a seventh aspect, a communication method is provided. The method is applied to a scenario in which a central unit of an integrated access and backhaul node migrates from a source donor node to a central unit of a target donor node. The method may be performed by the integrated access and backhaul node, or may be performed by a component (for example, a chip or a circuit) in the integrated access and backhaul node. This is not limited. For convenience, an example in which the method is performed by the integrated access and backhaul node is used for description.

The method includes: performing migration from a central unit of the source donor node to the central unit of the target donor node; deriving a fourth pre-shared key based on a second root key, a first Internet protocol address of the integrated access and backhaul node, and a second Internet protocol address of the central unit of the source donor node, where the second root key is a key shared by the central unit of the source donor node and the integrated access and backhaul node; and performing security authentication on the central unit of the source donor node based on the fourth pre-shared key, to establish a first secure transmission channel between the central unit of the source donor node and the integrated access and backhaul node.

With reference to the seventh aspect, in some implementations of the seventh aspect, before the deriving a fourth pre-shared key based on a second root key, a first Internet protocol address of the integrated access and backhaul node, and a second Internet protocol address of the central unit of the source donor node, the method further includes: storing the second root key.

With reference to the seventh aspect, in some implementations of the seventh aspect, the storing the second root key includes: storing the second root key when a second preset condition is satisfied.

With reference to the seventh aspect, in some implementations of the seventh aspect, the second preset condition includes one or more of the following: It is determined that the integrated access and backhaul node has migrated from the central unit of the source donor node to the central unit of the target donor node. It is determined that before migration from the central unit of the source donor node to the central unit of the target donor node, a transport mode is used for a second secure transmission channel established by the integrated access and backhaul node and the central unit of the source donor node. A secure transmission channel is determined, according to a local policy, to be established with the central unit of the source donor node after migration. It is determined that before migration from the central unit of the source donor node to the central unit of the target donor node, the second secure transmission channel has been established between the source donor node and the integrated access and backhaul node by using a pre-shared key derived based on the second root key.

With reference to the seventh aspect, in some implementations of the seventh aspect, the method further includes: storing second indication information corresponding to the second root key, where the second indication information indicates that the second root key is used to derive the fourth pre-shared key after the integrated access and backhaul node migrates from the central unit of the source donor node to the central unit of the source donor node; and determining, based on the second indication information, to derive the fourth pre-shared key by using the second root key.

With reference to the seventh aspect, in some implementations of the seventh aspect, after the performing migration from a central unit of the source donor node to the central unit of the target donor node, the method further includes: receiving the first Internet protocol address from a network management device or the central unit of the target donor node.

According to an eighth aspect, a communication method is provided. The method is applied to a scenario in which a central unit of an integrated access and backhaul node migrates from a source donor node to a central unit of a target donor node. The method may be performed by a central unit of the source donor node, or may be performed by a component (for example, a chip or a circuit) in a central unit of the source donor node. This is not limited. For convenience, an example in which the method is performed by the central unit of the source donor node is used for description.

The method includes: determining a fifth pre-shared key in a local storage, where the fifth pre-shared key is used to establish a second secure transmission channel between the integrated access and backhaul node and the central unit of the source donor node before the integrated access and backhaul node migrates from the central unit of the source donor node to the central unit of the target donor node; and performing security authentication on the integrated access and backhaul node based on the fifth pre-shared key, to establish a first secure transmission channel between the integrated access and backhaul node and the central unit of the source donor node.

With reference to the eighth aspect, in some implementations of the eighth aspect, before the determining a fifth pre-shared key in a local storage, the method further includes: determining that the integrated access and backhaul node has migrated from the central unit of the source donor node to the central unit of the target donor.

With reference to the eighth aspect, in some implementations of the eighth aspect, before the determining a fifth pre-shared key in a local storage, the method further includes: storing a correspondence between address information and the fifth pre-shared key, where the address information includes a first Internet protocol address of the integrated access and backhaul node and/or a second Internet protocol address of the central unit of the source donor node. The determining a fifth pre-shared key in a local storage includes: receiving a request message from the integrated access and backhaul node, where the request message is used to request to establish the first secure transmission channel, and the request message includes the address information; and determining the fifth pre-shared key based on the address information and the correspondence between the address information and the fifth pre-shared key in the local storage.

With reference to the eighth aspect, in some implementations of the eighth aspect, the storing a correspondence between address information and the fifth pre-shared key includes: receiving a correspondence between the address information and a third Internet protocol address from the central unit of the target donor node, where the third Internet protocol address is used to derive the fifth pre-shared key before the integrated access and backhaul node migrates from the central unit of the source donor node to the central unit of the target donor node; determining, based on the third Internet protocol address, the fifth pre-shared key corresponding to the third Internet protocol address; and storing the correspondence between the address information and the fifth pre-shared key.

According to a ninth aspect, a communication method is provided. The method is applied to a scenario in which a central unit of an integrated access and backhaul node migrates from a source donor node to a central unit of a target donor node. The method may be performed by the integrated access and backhaul node, or may be performed by a component (for example, a chip or a circuit) in the integrated access and backhaul node. This is not limited. For convenience, an example in which the method is performed by the integrated access and backhaul node is used for description.

The method includes: determining a fifth pre-shared key in a local storage, where the fifth pre-shared key is used to establish a second secure transmission channel between the integrated access and backhaul node and a central unit of the source donor node before the integrated access and backhaul node migrates from the central unit of the source donor node to the central unit of the target donor node; and performing security authentication on the central unit of the source donor node based on the fifth pre-shared key, to establish a first secure transmission channel between the integrated access and backhaul node and the central unit of the source donor node.

With reference to the ninth aspect, in some implementations of the ninth aspect, before the determining a fifth pre-shared key in a local storage, the method further includes: performing migration from the central unit of the source donor node to the central unit of the target donor node.

With reference to the ninth aspect, in some implementations of the ninth aspect, before the determining a fifth pre-shared key in a local storage, the method further includes: storing a correspondence between address information and the fifth pre-shared key, where the address information includes a first Internet protocol address of the integrated access and backhaul node and/or a second Internet protocol address of the central unit of the source donor node. The determining a fifth pre-shared key in a local storage includes: when determining to establish the first secure transmission channel by using the address information, determining the fifth pre-shared key based on the address information and the correspondence between the address information and the fifth pre-shared key in the local storage.

With reference to the ninth aspect, in some implementations of the ninth aspect, the storing a correspondence between address information and the fifth pre-shared key includes: receiving a correspondence between the address information and a third Internet protocol address from the central unit of the target donor node, where the third Internet protocol address is used to derive the fifth pre-shared key before the integrated access and backhaul node migrates from the central unit of the source donor node to the central unit of the target donor node; determining, based on the third Internet protocol address, the fifth pre-shared key corresponding to the third Internet protocol address; and storing the correspondence between the address information and the fifth pre-shared key.

According to a tenth aspect, a communication apparatus is provided. The apparatus includes: a processing module, configured to derive a first pre-shared key based on a first root key, a first Internet protocol address of an integrated access and backhaul node, and a second Internet protocol address of a central unit of a source donor node, where the first pre-shared key is used to establish a secure transmission channel between the integrated access and backhaul node and the central unit of the source donor node; and a transceiver module, configured to send the first pre-shared key to the central unit of the source donor node.

With reference to the tenth aspect, in some implementations of the tenth aspect, the transceiver module is further configured to send address information corresponding to the first pre-shared key to the central unit of the source donor node, where the address information includes the first Internet protocol address and/or the second Internet protocol address.

With reference to the tenth aspect, in some implementations of the tenth aspect, the transceiver module is further configured to receive a key request message from the central unit of the source donor node, where the key request message is used to request to obtain the first pre-shared key.

With reference to the tenth aspect, in some implementations of the tenth aspect, the transceiver module is further configured to receive the second Internet protocol address from the central unit of the source donor node.

With reference to the tenth aspect, in some implementations of the tenth aspect, the transceiver module is specifically configured to receive a handover request message from the central unit of the source donor node, where the handover request message includes the second Internet protocol address, and the handover request message is used to request handover of the integrated access and backhaul node from the central unit of the source donor node to a central unit of a target donor node.

With reference to the tenth aspect, in some implementations of the tenth aspect, the transceiver module is specifically configured to: receive a reestablishment request message from the integrated access and backhaul node, where the reestablishment request message is used to request to establish a radio resource control connection between the integrated access and backhaul node and the central unit of the target donor node; send a context request message to the central unit of the source donor node, where the context request message is used to request to obtain a context of the integrated access and backhaul node; and receive a context response message from the central unit of the source donor node, where the context response message includes the context of the integrated access and backhaul node, and the context includes the second Internet protocol address.

With reference to the tenth aspect, in some implementations of the tenth aspect, the transceiver module is further configured to: send a path switching request message to an access and mobility management function network element, where the path switching request message includes identification information of the integrated access and backhaul node; receive a path switching response message from the access and mobility management function network element, where the path switching response message includes a next hop parameter; and derive the first root key based on the next hop parameter.

With reference to the tenth aspect, in some implementations of the tenth aspect, the processing module is further configured to generate the first Internet protocol address for a distributed unit of the integrated access and backhaul node after the integrated access and backhaul node migrates from the central unit of the source donor node to the central unit of the target donor node.

With reference to the tenth aspect, in some implementations of the tenth aspect, the transceiver module is further configured to send the first Internet protocol address to the integrated access and backhaul node.

According to an eleventh aspect, a communication apparatus is provided. The apparatus includes: a transceiver module, configured to receive a first pre-shared key from a central unit of a target donor node; and a processing module, configured to perform security authentication on an integrated access and backhaul node based on the first pre-shared key, to establish a first secure transmission channel between a central unit of a source donor node and the integrated access and backhaul node.

With reference to the eleventh aspect, in some implementations of the eleventh aspect, the processing module is specifically configured to perform security authentication on the integrated access and backhaul node based on the first pre-shared key, to establish the first secure transmission channel.

With reference to the eleventh aspect, in some implementations of the eleventh aspect, the first pre-shared key is different from a fifth pre-shared key, where the fifth pre-shared key is used to establish a second secure transmission channel between the central unit of the source donor node and the integrated access and backhaul node before the integrated access and backhaul node migrates from the central unit of the source donor node to the central unit of the target donor node.

With reference to the eleventh aspect, in some implementations of the eleventh aspect, the transceiver module is further configured to: receive, from the central unit of the target donor node, address information corresponding to the first pre-shared key, where the address information includes a first Internet protocol address of the integrated access and backhaul node and/or a second Internet protocol address of the central unit of the target donor node; and store a correspondence between the first pre-shared key and the address information.

With reference to the eleventh aspect, in some implementations of the eleventh aspect, the transceiver module is specifically configured to receive a request message from the integrated access and backhaul node, where the request message is used to request to establish the first secure transmission channel, and the request message includes the address information. The processing module is specifically configured to determine the first pre-shared key based on the address information and the correspondence between the first pre-shared key and the address information. The processing module is further specifically configured to perform security authentication on the integrated access and backhaul node based on the first pre-shared key.

With reference to the eleventh aspect, in some implementations of the eleventh aspect, the transceiver module is further configured to send a key request message to the central unit of the target donor node, where the key request message is used to request to obtain the first pre-shared key.

With reference to the eleventh aspect, in some implementations of the eleventh aspect, the transceiver module is further configured to send the second Internet protocol address of the central unit of the source donor node to the central unit of the target donor node, where the second Internet protocol address is used to generate the first pre-shared key.

With reference to the eleventh aspect, in some implementations of the eleventh aspect, the transceiver module is specifically configured to send a handover request message to the central unit of the target donor node, where the handover request message includes the second Internet protocol address, the handover request message is used to request handover of the integrated access and backhaul node from the central unit of the source donor node to the central unit of the target donor node, and the handover request message includes the second Internet protocol address.

With reference to the eleventh aspect, in some implementations of the eleventh aspect, the transceiver module is specifically configured to: receive a context request message from the target donor node, where the context request message is used to request a context of the integrated access and backhaul node; and send a context response message to the central unit of the target donor node, where the context response message includes the context of the integrated access and backhaul node, and the context includes the second Internet protocol address.

According to a twelfth aspect, a communication apparatus is provided. The apparatus includes a processing module, configured to: after an integrated access and backhaul node migrates from a central unit of a source donor node to a central unit of a target donor node, derive a third pre-shared key based on a second root key, a first Internet protocol address of the integrated access and backhaul node, and a second Internet protocol address of the central unit of the source donor node, where the second root key is a key shared by the central unit of the source donor node and the integrated access and backhaul node; and perform security authentication on the integrated access and backhaul node based on the third pre-shared key, to establish a first secure transmission channel between the central unit of the source donor node and the integrated access and backhaul node.

With reference to the twelfth aspect, in some implementations of the twelfth aspect, the second root key is the same as a third root key, or is a key derived by using a third root key or a next hop parameter, where the third root key is a key obtained by the central unit of the source donor node from a network in a process in which the integrated access and backhaul node registers with the network via the central unit of the source donor node.

With reference to the twelfth aspect, in some implementations of the twelfth aspect, the third root key is used to derive, before the integrated access and backhaul node migrates from the central unit of the source donor node to the central unit of the target donor node, a fifth pre-shared key used to establish a second secure transmission channel between the integrated access and backhaul node and the central unit of the source donor node.

With reference to the twelfth aspect, in some implementations of the twelfth aspect, the processing module is further configured to store the second root key.

With reference to the twelfth aspect, in some implementations of the twelfth aspect, the processing module is specifically configured to store the second root key when a first preset condition is satisfied.

With reference to the twelfth aspect, in some implementations of the twelfth aspect, the first preset condition includes one or more of the following: It is determined that the integrated access and backhaul node is a node having an access and backhaul function. It is determined that the integrated access and backhaul node has migrated. It is determined that before the integrated access and backhaul node migrates from the central unit of the source donor node to the central unit of the target donor node, a transport mode is used for the second secure transmission channel established by the source donor node and the integrated access and backhaul node. A secure transmission channel is determined, according to a local policy, to be established with the integrated access and backhaul node after the integrated access and backhaul node migrates. It is determined that before the integrated access and backhaul node migrates from the central unit of the source donor node to the central unit of the target donor node, the second secure transmission channel has been established between the source donor node and the integrated access and backhaul node by using a pre-shared key derived based on the second root key.

With reference to the twelfth aspect, in some implementations of the twelfth aspect, the processing module is further configured to: store first indication information corresponding to the second root key, where the first indication information indicates that the second root key is used to derive the third pre-shared key after the integrated access and backhaul node migrates from the central unit of the source donor node to the central unit of the source donor node; and determine, based on the first indication information, to derive the third pre-shared key by using the second root key.

With reference to the twelfth aspect, in some implementations of the twelfth aspect, a transceiver module is further configured to receive the first Internet protocol address from a network management device or the central unit of the target donor node.

According to a thirteenth aspect, a communication apparatus is provided. The apparatus includes: a transceiver module, configured to perform migration from a central unit of a source donor node to a central unit of a target donor node; and a processing module, configured to derive a fourth pre-shared key based on a second root key, a first Internet protocol address of an integrated access and backhaul node, and a second Internet protocol address of the central unit of the source donor node, where the second root key is a key shared by the central unit of the source donor node and the integrated access and backhaul node. The processing module is further configured to perform security authentication on the central unit of the source donor node based on the fourth pre-shared key, to establish a first secure transmission channel between the central unit of the source donor node and the integrated access and backhaul node.

With reference to the thirteenth aspect, in some implementations of the thirteenth aspect, the processing module is further configured to store the second root key.

With reference to the thirteenth aspect, in some implementations of the thirteenth aspect, the processing module is specifically configured to store the second root key when a second preset condition is satisfied.

With reference to the thirteenth aspect, in some implementations of the thirteenth aspect, the second preset condition includes one or more of the following: It is determined that the integrated access and backhaul node has migrated from the central unit of the source donor node to the central unit of the target donor node. It is determined that before migration from the central unit of the source donor node to the central unit of the target donor node, a transport mode is used for a second secure transmission channel established by the integrated access and backhaul node and the central unit of the source donor node. A secure transmission channel is determined, according to a local policy, to be established with the central unit of the source donor node after migration. It is determined that before migration from the central unit of the source donor node to the central unit of the target donor node, the second secure transmission channel has been established between the source donor node and the integrated access and backhaul node by using a pre-shared key derived based on the second root key.

With reference to the thirteenth aspect, in some implementations of the thirteenth aspect, the processing module is further configured to: store second indication information corresponding to the second root key, where the second indication information indicates that the second root key is used to derive the fourth pre-shared key after the integrated access and backhaul node migrates from the central unit of the source donor node to the central unit of the source donor node; and determine, based on the second indication information, to derive the fourth pre-shared key by using the second root key.

With reference to the thirteenth aspect, in some implementations of the thirteenth aspect, the transceiver module is further configured to receive the first Internet protocol address from a network management device or the central unit of the target donor node.

According to a fourteenth aspect, a communication apparatus is provided. The apparatus includes a processing module, configured to determine a fifth pre-shared key in a local storage, where the fifth pre-shared key is used to establish a second secure transmission channel between an integrated access and backhaul node and a central unit of a source donor node before the integrated access and backhaul node migrates from the central unit of the source donor node to a central unit of a target donor node. The processing module is further configured to perform security authentication on the integrated access and backhaul node based on the fifth pre-shared key, to establish a first secure transmission channel between the integrated access and backhaul node and the central unit of the source donor node.

With reference to the fourteenth aspect, in some implementations of the fourteenth aspect, the processing module is specifically configured to determine that the integrated access and backhaul node has migrated from the central unit of the source donor node to the central unit of the target donor node.

With reference to the fourteenth aspect, in some implementations of the fourteenth aspect, the processing module is further configured to store a correspondence between address information and the fifth pre-shared key, where the address information includes a first Internet protocol address of the integrated access and backhaul node and/or a second Internet protocol address of the central unit of the source donor node. A transceiver module is specifically configured to receive a request message from the integrated access and backhaul node, where the request message is used to request to establish the first secure transmission channel, and the request message includes the address information. The processing module is specifically configured to determine the fifth pre-shared key based on the address information and the correspondence between the address information and the fifth pre-shared key in the local storage.

With reference to the fourteenth aspect, in some implementations of the fourteenth aspect, the transceiver module is specifically configured to receive a correspondence between the address information and a third Internet protocol address from the central unit of the target donor node, where the third Internet protocol address is used to derive the fifth pre-shared key before the integrated access and backhaul node migrates from the central unit of the source donor node to the central unit of the target donor node. The processing module is specifically configured to: determine, based on the third Internet protocol address, the fifth pre-shared key corresponding to the third Internet protocol address; and store the correspondence between the address information and the fifth pre-shared key.

According to a fifteenth aspect, a communication apparatus is provided. The apparatus includes a processing module, configured to: determine a fifth pre-shared key in a local storage, where the fifth pre-shared key is used to establish a second secure transmission channel between an integrated access and backhaul node and a central unit of a source donor node before the integrated access and backhaul node migrates from the central unit of the source donor node to a central unit of a target donor node; and perform security authentication on the central unit of the source donor node based on the fifth pre-shared key, to establish a first secure transmission channel between the integrated access and backhaul node and the central unit of the source donor node.

With reference to the fifteenth aspect, in some implementations of the fifteenth aspect, a transceiver module is further configured to perform migration to the central unit of the target donor node.

With reference to the fifteenth aspect, in some implementations of the fifteenth aspect, the processing module is further configured to store a correspondence between address information and the fifth pre-shared key, where the address information includes a first Internet protocol address of the integrated access and backhaul node and/or a second Internet protocol address of the central unit of the source donor node. The processing module is specifically configured to: when determining to establish the first secure transmission channel by using the address information, determine the fifth pre-shared key based on the address information and the correspondence between the address information and the fifth pre-shared key in the local storage.

With reference to the fifteenth aspect, in some implementations of the fifteenth aspect, the transceiver module is specifically configured to: receive a correspondence between the address information and a third Internet protocol address from the central unit of the target donor node, where the third Internet protocol address is used to derive the fifth pre-shared key before the integrated access and backhaul node migrates from the central unit of the source donor node to the central unit of the target donor node; determine, based on the third Internet protocol address, the fifth pre-shared key corresponding to the third Internet protocol address; and store the correspondence between the address information and the fifth pre-shared key.

According to a sixteenth aspect, a communication apparatus is provided. The apparatus is configured to perform any method provided in the fourth aspect to the ninth aspect. Specifically, the apparatus may include a unit and/or a module configured to perform the methods provided in the fourth aspect to the ninth aspect, for example, a processing module and/or a transceiver module (which may also be referred to as a communication module).

In an implementation, the apparatus is a network device. For example, the apparatus is a central unit of a target donor node or a central unit of a source donor node. When the apparatus is the network device, the communication module may be a transceiver or an input/output interface, and the processing module may be a processor.

For example, the apparatus is a chip, a chip system, or a circuit used in the central unit of the target donor node. When the apparatus is the chip, the chip system, or the circuit used in the central unit of the target donor node, the transceiver module may be an input/output interface, an interface circuit, an output circuit, an input circuit, a pin, a related circuit, or the like on the chip, the chip system, or the circuit; and the processing module may be a processor, a processing circuit, a logic circuit, or the like.

In a possible case, the apparatus is the central unit of the target donor node, or the chip, the chip system, or the circuit in the central unit of the target donor node. In this case, the apparatus may include a unit and/or a module configured to perform the method provided in the fourth aspect, for example, a processing module and/or a transceiver module.

For example, the apparatus is a chip, a chip system, or a circuit used in the central unit of the source donor node. When the apparatus is the chip, the chip system, or the circuit used in the central unit of the source donor node, the transceiver module may be an input/output interface, an interface circuit, an output circuit, an input circuit, a pin, a related circuit, or the like on the chip, the chip system, or the circuit; and the processing module may be a processor, a processing circuit, a logic circuit, or the like.

In a possible case, the apparatus is the chip, the chip system, or the circuit in the central unit of the source donor node. In this case, the apparatus may include a unit and/or a module configured to perform the method provided in any one of the fifth aspect, the sixth aspect, and the eighth aspect, for example, a processing module and/or a transceiver module.

In another implementation, the apparatus is an integrated access and backhaul node. When the apparatus is the integrated access and backhaul node, the communication unit may be a transceiver or an input/output interface, and the processing unit may be a processor.

In a possible case, the apparatus is the integrated access and backhaul node, or a chip, a chip system, or a circuit in the integrated access and backhaul node. In this case, the apparatus may include a unit and/or a module configured to perform the method provided in the seventh aspect or the ninth aspect, for example, a processing module and/or a transceiver module.

Optionally, the transceiver may be a transceiver circuit. Optionally, the input/output interface may be an input/output circuit.

Optionally, the transceiver may be a transceiver circuit. Optionally, the input/output interface may be an input/output circuit.

According to a seventeenth aspect, a communication apparatus is provided. The apparatus includes: a memory, configured to store a program; and a processor, configured to execute the program stored in the memory. When the program stored in the memory is executed, the processor is configured to perform any method provided in the fourth aspect to the ninth aspect.

According to an eighteenth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the foregoing information, the processor outputs the foregoing information to a transceiver, so that the transceiver transmits the information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information and then the foregoing information is input into the processor.

Based on the foregoing principle, for example, receiving the request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a nineteenth aspect, a computer-readable storage medium is provided. The computer-readable medium stores program code to be executed by a device. The program code is used to perform any method provided in the fourth aspect to the ninth aspect.

According to a twentieth aspect, a computer program product including instructions is provided. When the computer program product is run on a computer, the computer is enabled to perform any method provided in the fourth aspect to the ninth aspect.

According to a twenty-first aspect, a chip is provided. The chip includes a processor and a communication interface. The processor reads, through the communication interface, instructions stored in a memory, to perform any method provided in the fourth aspect to the ninth aspect.

Optionally, in an implementation, the chip may further include the memory. The memory stores the instructions. The processor is configured to execute the instructions stored in the memory. When the instructions are executed, the processor is configured to perform any method provided in the fourth aspect to the ninth aspect.

### BRIEF DESCRIPTION OF DRAWINGS

FIG. 1 is a diagram of an architecture in which a central unit-control plane entity and a central unit-user plane entity are split according to an embodiment of this application;
FIG. 2 is a diagram of an architecture of an IAB system applicable to a technical solution of this application;
FIG. 3 shows an example of a user plane protocol stack architecture of a multi-hop IAB network;
FIG. 4 shows an example of a control plane protocol stack architecture of a multi-hop IAB network;
FIG. 5 is a schematic flowchart of a method 500 according to an embodiment of this application;
FIG. 6 shows connection relationships between a migration IAB node, and a source donor-CU and a target donor-CU before and after migration;
FIG. 7 is a schematic flowchart of a method 700 according to an embodiment of this application;
FIG. 8 is a schematic flowchart of a method 800 according to an embodiment of this application;
FIG. 9 is a schematic flowchart of a method 900 according to an embodiment of this application;
FIG. 10 is a schematic flowchart of a method 1000 according to an embodiment of this application;
FIG. 11 is a schematic flowchart of a method 1100 according to an embodiment of this application;
FIG. 12 is a schematic flowchart of a method 1200 according to an embodiment of this application;
FIG. 13 is a schematic flowchart of a method 1300 according to an embodiment of this application;
FIG. 14 is a schematic flowchart of a method 1400 according to an embodiment of this application;
FIG. 15 is a schematic block diagram of a communication apparatus according to an embodiment of this application;
FIG. 16 is a schematic block diagram of a communication apparatus according to another embodiment of this application; and
FIG. 17 is a schematic block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise stated, "a plurality of" means two or more than two.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numerals used in this application are merely differentiated for ease of description, but are not intended to limit the scope of this application. Sequence numbers of the foregoing processes do not mean an execution sequence, and the execution sequence of the processes should be determined based on functions and internal logic of the processes.

In the specification, claims, and accompanying drawings of this application, the terms "first", "second", "third", and "fourth", various other ordinal number terms, and the like (if existing) are intended to distinguish between similar objects but do not necessarily indicate a specific order or sequence. It should be understood that the data termed in such a way is interchangeable in proper circumstances so that embodiments described herein can be implemented in other orders than the order illustrated or described herein. In addition, the terms "include" and "have" and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

Embodiments of this application may be applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rate for GSM evolution (enhanced data rate for gsm evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a long term evolution (long term evolution, LTE) system, satellite communication, a 5th generation (5th generation, 5G) system, or a new communication system emerging in the future.

A terminal device in embodiments of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

A network device in embodiments of this application may be a device configured to communicate with the terminal device. The network device may be a base transceiver station (base transceiver station, BTS) in the global system for mobile communications (global System of mobile communication, GSM) or the code division multiple access (code division multiple access, CDMA) system, a NodeB (NodeB, NB) in the wideband code division multiple access (wideband code division multiple access, WCDMA) system, an evolved NodeB (evolved NodeB, eNB or eNodeB) in the LTE system, a gNB (gNB) in the 5G system, or a radio controller in a scenario of a cloud radio access network (cloud radio access network, CRAN). Alternatively, the network device may be a relay station, an access point, a vehicle-mounted device, a wearable device, a network device in a future 5G network, a network device in a future evolved PLMN network, or the like. This is not limited in embodiments of this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module in the terminal device or the network device that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a radio channel, and various other media that can store, contain and/or carry instructions and/or data.

In a 5G technology, an access network device (for example, a gNB) may include one gNB central unit (central unit, CU) and one or more gNB distributed units (distributed units, DUs). The gNB-CU and the gNB-DU are different logical nodes, and may be deployed on different physical devices or deployed on a same physical device.

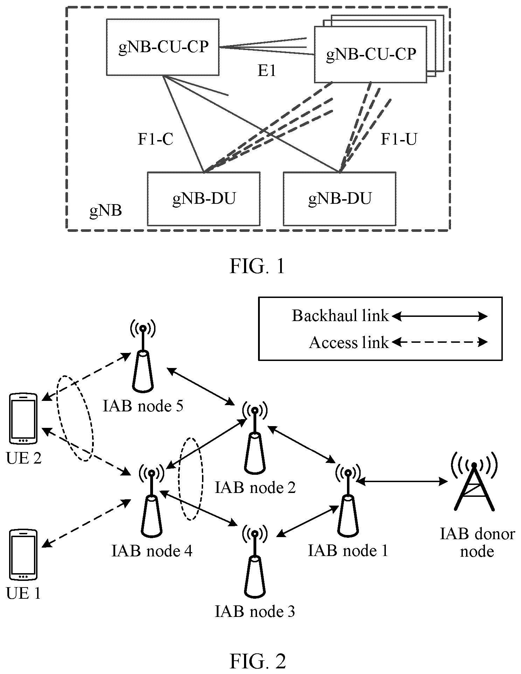

If a control plane-user plane split architecture is considered, the gNB-CU may be further divided into a central unit-control plane (central unit-control plane, CU-CP) entity (or referred to as a CU-CP node) and a central unit-user plane (central unit-user plane, CU-UP) entity (or referred to as a CU-UP node). The gNB-CU-CP is a control plane entity, and is configured to provide signaling control. The gNB-CU-UP is a user plane entity, and is configured to provide transmission of data of the terminal device. The gNB-CU-CP is connected to the gNB-CU-UP through an E1 interface, the gNB-CU-CP is connected to the gNB-DU through an F1-C interface, and the gNB-CU-UP is connected to the gNB-DU through an F1-U interface. A structure is shown in FIG. 1.

In the architecture shown in FIG. 1, the following characteristics are further included:
one gNB includes one gNB-CU-CP, a plurality of gNB-CU-UPs, and a plurality of gNB-DUs;
one gNB-DU may be connected to only one gNB-CU-CP;
one gNB-CU-UP may be connected to only one gNB-CU-CP;
one gNB-DU may be connected to a plurality of gNB-CU-UPs under control of a same gNB-CU-CP; and
one gNB-CU-UP may be connected to a plurality of gNB-DUs under control of a same gNB-CU-CP.

It should be understood that FIG. 1 is merely an example and should not impose any limitation on the architecture of the gNB. For example, in an architecture in which a CU and a DU are split and a CP and a UP are split, the gNB may include only one gNB-CU-UP, one gNB-CU-CP, and one gNB-DU, or may include more gNB-CU-UPs and gNB-DUs. This is not limited in this application.

Compared with a 4th generation mobile communication system, 5G poses stricter requirements on all network performance indicators, for example, a capacity indicator improved by 1000 times, a wider coverage requirement, ultra-high reliability, and ultra-low latency. On the one side, considering that a high-frequency carrier has abundant frequency resources, it is increasingly popular to perform high-frequency small cell networking in hotspot areas, to meet an ultra-high capacity requirement of 5G. The high-frequency carrier has a poor propagation characteristic, is greatly attenuated if blocked, and has small coverage. Therefore, a large quantity of small cells need to be densely deployed. Correspondingly, providing optical fiber backhaul for the large quantity of small cells that are densely deployed needs high costs and has great difficulty in construction. Therefore, an economical and convenient backhaul solution is needed. In addition, from a perspective of a requirement for wide coverage, network coverage is provided in some remote areas, but optical fiber deployment is difficult and costly. Therefore, a flexible and convenient access and backhaul solution also needs to be designed.

An integrated access and backhaul (integrated access and backhaul, IAB) technology provides a solution to the foregoing problems. A wireless transmission solution is used for both an access link (access link) and a backhaul link (backhaul link) of the IAB technology, which can avoid optical fiber deployment. FIG. 2 is a diagram of a wireless relay scenario. In an IAB network, a relay node (relay node, RN) may be referred to as an IAB node, and may provide a radio access service for user equipment (user equipment, UE). Service transmission of the UE is implemented by an IAB donor node (donor node) to which the IAB node is connected through a wireless backhaul link, where the donor node is also referred to as a donor base station (donor gNodeB, DgNB). The IAB node may play two roles: a mobile termination (mobile termination, MT) and a DU. When the IAB node is oriented to a parent node of the IAB node, the IAB node may be considered as a terminal device, that is, the role of the MT, where the parent node may be a donor base station. When the IAB node is oriented to a child node of the IAB node, the IAB node may be considered as a network device, that is, the role of the DU, where the child node may be another IAB node or common UE. The donor base station may be an access network element having a complete base station function, or may be an access network element in a form that a central unit and a distributed unit are split. The donor base station is connected to a core network element that serves the UE, for example, connected to a 5G core network, to provide a wireless backhaul function for the IAB node. For ease of description, a central unit of the donor base station is referred to as a donor CU for short or directly referred to as a CU, and a distributed unit of the donor base station is referred to as a donor DU for short or directly referred to as a DU. The donor CU may alternatively be in a form that a control plane (control plane, CP) and a user plane (user plane, UP) are split. For example, the CU may include one CU-CP and one or more CU-UPs.

As shown in FIG. 3 and FIG. 4, an F1 interface (or referred to as an F1* interface, which may be collectively referred to as an F1 interface in this specification, but a name is not limited) needs to be established between an IAB node (IAB-DU) and a donor node (IAB-donor-CU). The interface supports a user plane protocol (F1-U/F1*-U) and a control plane protocol (F1-C/F1*C). The user plane protocol includes one or more of the following protocol layers: a general packet radio service tunneling protocol user plane (general packet radio service tunneling protocol user plane, GTP-U) layer, a user datagram protocol (user datagram protocol, UDP) layer, an Internet protocol (internet network, IP) layer, an L2 layer (layer 2), an L1 layer (layer 1), a radio link control (radio link control, RLC) layer, a media access control (media access control, MAC) layer, a physical (physical, PHY) layer, and a backhaul adaptation protocol (backhaul adaptation protocol, BAP) layer. The control plane protocol includes one or more of the following protocol layers: an F1 application protocol (F1 application protocol, F1AP) layer, a stream control transport protocol (stream control transport protocol, SCTP) layer, an IP layer, an L2 layer, an L1 layer, an RLC layer, a MAC layer, a PHY layer, and a BAP layer.

In FIG. 3 and FIG. 4, a wireless backhaul link between an IAB node 2 and an IAB node 1 and a wireless backhaul link between the IAB node 1 and an IAB donor DU may be referred to as wireless backhaul radio link control channels (backhaul radio link control channels, BH RLC CHs).

With the use of the control plane of the F1 interface, interface management, IAB-DU management, UE context related configuration, and the like may be performed between the IAB node and the IAB donor. With the use of the user plane of the F1 interface, functions such as user plane data transmission and downlink transmission status feedback may be performed between the IAB node and the IAB donor.

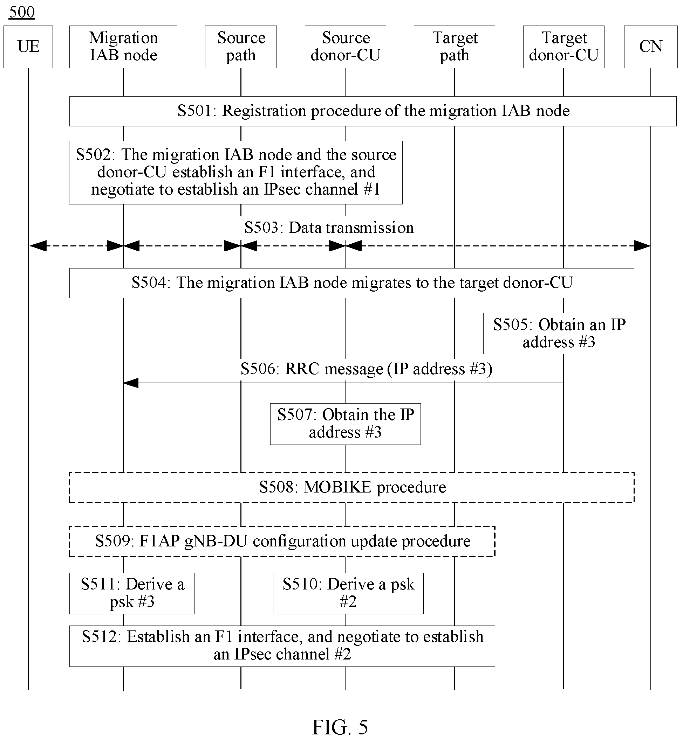

To protect security of the F1 interface, a secure transmission channel, such as an IPsec channel, may be established between the IAB node and an IAB donor. However, in some cases, the secure transmission channel between the IAB node and the IAB donor may fail to be established, causing a security risk in communication between the IAB node and the IAB donor. The following first describes a possible scenario of the problem with reference to a method 500 in FIG. 5.

The method 500 mainly includes the following steps.

In S501, a migration IAB node performs a registration procedure.

For example, the migration IAB node (migration IAB Node) accesses a source donor-CU (source donor-CU) through a source path (source Path), and registers with a core network.

The migration IAB node represents an IAB node that may migrate in this embodiment, and the name is merely used as an example. The migration IAB node in this embodiment of this application may alternatively be an IAB node. Migration of the IAB node means handover or reestablishment of the IAB node (which may be specifically an MT part of the IAB node) from a central unit of one donor to a central unit of another donor. For a specific process, refer to descriptions of S504. The source path represents a transmission path between the migration IAB node and the source donor-CU. In other words, the source path represents a node on a transmission path between the migration IAB node and the source donor-CU. For example, the source path includes a source donor-DU (source donor-DU), and optionally, further includes a current IAB node (a parent IAB node) and/or an intermediate hop IAB node (an intermediate hop IAB node).

The following describes a specific process by using an example.

The MT part (denoted as an IAB-MT) of the migration IAB node sends an RRC setup request (RRC setup request) message to the source donor-DU, to trigger an RRC setup process. It may be understood that a source donor in this embodiment of this application is a donor node that is accessed by the migration IAB node before migration, and the name is merely used as an example. It may be further understood that the IAB-MT has some or all functions of UE. After the migration IAB node is powered on, the IAB-MT selects a donor (that is, the source donor in this embodiment of this application) that supports an IAB service for access. After receiving the RRC setup request message, the source donor-DU sends an initial uplink (uplink, UL) RRC message transfer (initial UL RRC message transfer) to a control plane (control plane, CP) entity of the source donor-CU (denoted as a source donor-CU-CP). The source donor-CU-CP then sends a downlink (downlink, DL) message transfer (DL message transfer) to the source donor-DU. The source donor-DU sends an RRC setup (RRC setup) message to the IAB-MT.

Further, the IAB-MT sends an RRC setup complete (RRC setup complete) message to the source donor-DU, where the RRC setup complete message carries an IAB indication (IAB-indication), and the IAB-indication indicates that a current node (that is, the migration IAB node) is an IAB node. After receiving the RRC complete message, the source donor-CU may store the IAB-indication carried in the RRC message in a context of the migration IAB node. The source donor-CU-CP sends an initial UE message (initial UE message) to an access and mobility management function (access and mobility management function, AMF) network element, where the initial UE message carries an "IAB-indication" information element.

Then, an authentication procedure is performed between the core network and the migration IAB node. After authentication succeeds, the core network checks subscription data, and determines whether the migration IAB node is an IAB node. If the migration IAB node is an IAB node, the AMF sends an initial context setup request (initial context setup request) message to the source donor-CU-CP, and adds "IAB-authorized (IAB-authorized)" information to the initial context setup request message, where the "IAB-authorized" information indicates that the core network has authorized the migration IAB node as an IAB node. The initial context setup request message further carries a root key of the source donor, denoted as a KgNB#1. The KgNB#1 herein is a root key that is derived by the AMF and that is used to generate an encryption key and an integrity key for protecting air interface security. After receiving the initial context setup request message, the source donor-CU-CP stores, in the context of the migration IAB node, the KgNB#1 carried in the initial context setup request message. Correspondingly, the migration IAB node derives the same KgNB#1 based on a key preset in a USIM.

Further, the migration IAB node and the source donor-CU perform a procedure of negotiation about a security algorithm and a security key, and the like. A specific process is not limited in this application.

In S502, the migration IAB node and the source donor-CU establish an F1 interface, and negotiate to establish an IPsec channel #1.

For example, after completing the registration procedure, the migration IAB node obtains an IP address (denoted as an IP address #1) of the migration IAB node and an IP address (denoted as an IP address #2) of the source donor-CU. It may be understood that the IP address of the migration IAB node in this embodiment of this application is an IP address of a distributed unit (IAB-DU) of the migration IAB node, or in other words, is an IP address used to establish the F1 interface between the migration IAB node (which may be specifically the IAB-DU) and the donor-CU. Similar parts are not described again subsequently. It may be further understood that the IP address #1 may include one or more IP addresses, and the IP address #2 may also include one or more IP addresses. This is not limited herein.

In an example, after establishing a PDU session with OAM via the core network, the migration IAB node obtains the IP address #1 and the IP address #2 from the OAM via a user plane.

In another example, the migration IAB node obtains the IP address #1 and the IP address #2 from the source donor-CU-CP. Specifically, for example, after establishing an IP connection to OAM, the source donor-CU-CP obtains the IP address #1 and the IP address #2 from the OAM. Further, the source donor-CU-CP sends an RRC message to the migration IAB node, where the RRC message includes the IP address #1 and the IP address #2.

The migration IAB node derives a KIAB#1 by using the KgNB#1 as an input key and using the IP address #1 and the IP address #2 as input parameters.

Correspondingly, the source donor-CU-CP derives the same KIAB #1 by using the KgNB#1 as an input key and using the IP address #1 and the IP address #2 as input parameters.

The migration IAB node (which may be specifically the IAB-DU) establishes the F1 interface with the source donor-CU through the source path, and negotiates to establish a secure transmission channel for the F1 interface. A type of the secure transmission channel is not limited in this application. In an example, the secure transmission channel (referred to as the IPsec channel) may be established based on an IPsec protocol, or the secure transmission channel may be established based on a TLS protocol or another protocol. For ease of description, an example in which the secure transmission channel is the IPsec channel is used for description in subsequent embodiments, and the IPsec channel established in S502 by the migration IAB node and the source donor-CU is denoted as an IPsec channel #1. An authentication credential used in a process in which the migration IAB node and the source donor-CU negotiate to establish the IPsec channel #1 is the KIAB#1. In other words, the migration IAB node and the source donor-CU negotiate to establish the IPsec channel #1 by using the KIAB#1 as a pre-shared key (pre-shared secret key, psk). For ease of description, the psk herein is denoted as a psk #1.

After the migration IAB node establishes the IPsec channel #1 with the source donor-CU, the source donor-CU may configure a parameter for the migration IAB node through the F1 interface. After the source donor-CU configures the parameter for the migration IAB node through the F1 interface, the migration IAB node may provide a mobile network service for the UE.

Optionally, in S503, the UE and the core network (core network, CN) perform data transmission with each other via the migration IAB node, the source path, and the source donor-CU.

For example, the UE accesses a network via the migration IAB node, and performs authentication. A specific process is not limited in this application. Then, the UE and the CN may perform data transmission with each other via the migration IAB node, the source path, and the source donor-CU.

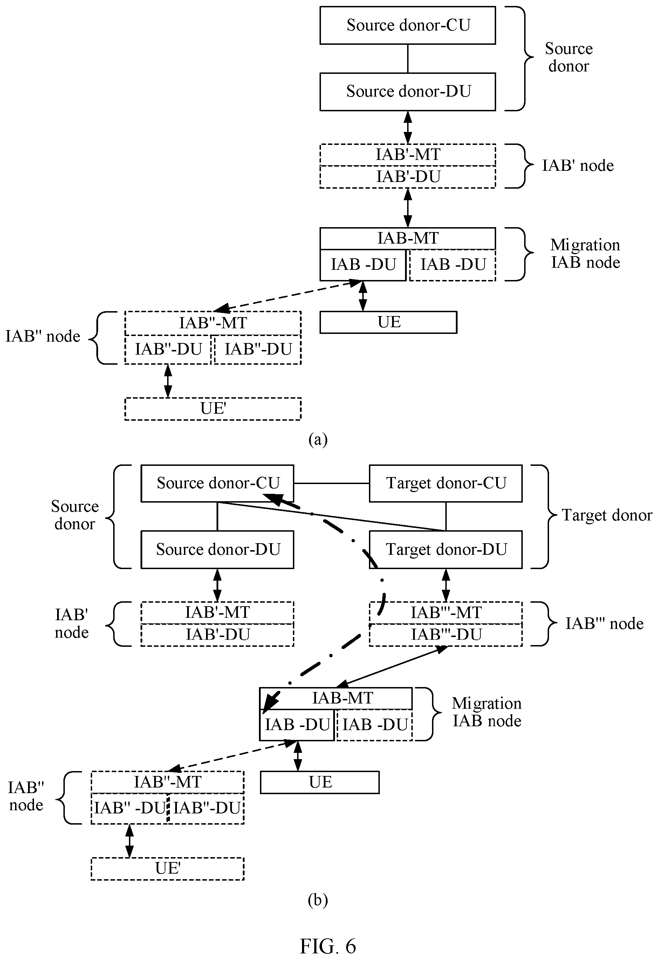

It may be understood that in the foregoing procedure, the migration IAB node (which may be specifically the IAB-MT) establishes an RRC connection to the source donor-CU, and the migration IAB node (which may be specifically the IAB-DU) establishes the F1 interface with the source donor-CU. The following describes a possible connection relationship between the migration IAB node and the source donor with reference to (a) in FIG. 6. It can be learned from (a) in FIG. 6 that the migration IAB node includes the IAB-MT and one or more IAB-DUs, there may be another IAB node (for example, an IAB' node in the figure) between the migration IAB node and the source donor, and the UE camping on the migration IAB node is connected to the source donor via the migration IAB node, so that the UE can access the core network via the source donor. Optionally, the migration IAB node may be used as an intermediate node of other UE. For example, in (a) in FIG. 6, UE' accesses the source donor via an IAB" node and the migration IAB node. During data transmission, the source donor-CU sends downlink data to the UE via the source donor-DU, the IAB' node (optional), and the migration IAB node.

In S504, the migration IAB node migrates to a target donor-CU.

For example, the migration IAB node may migrate from the source donor-CU to the target donor-CU in a case of poor signal quality or signal interruption between the migration IAB node and the source donor. The migration IAB node migrating from the source donor-CU to the target donor-CU may mean that the MT part (denoted as the IAB-MT) of the migration IAB node migrates the RRC connection from the source donor-CU to the target donor-CU, and a DU part (the IAB-DU) of the migration IAB node maintains an F1 connection (F1 connection) to the source donor-CU (the DU part of the migration IAB node needs to reestablish an F1 interface with the source donor-CU via a target path).

The following describes a specific implementation of migration of the migration IAB node by using an example.

The migration IAB node (which may be specifically the IAB-MT) selects the target path (target path) for access to the target donor-CU, where the target path represents a transmission path between the migration IAB node and the target donor-CU, or in other words, the target path represents a node on a transmission path between the migration IAB node and the target donor-CU. For example, the target path includes a target donor-DU (target donor-DU), and optionally, further includes the current IAB node (the parent IAB node) and/or the intermediate hop IAB node (the intermediate hop IAB node). Specifically, the migration IAB node may be connected to the target donor-CU by using a handover procedure or an RRC reestablishment procedure. The following describes the two scenarios separately by using examples.

In a handover scenario (that is, the migration IAB node is connected to the target donor-CU by using the handover procedure, for example, an Xn handover procedure or an N2 handover procedure, which is not limited in this application), the source donor-CU derives a KgNB#2 based on the KgNB#1 or a next hop (next hop, NH) parameter (denoted as NH#1), and then sends a handover request (handover request) message to the target donor-CU, where the handover request message carries the KgNB#2 and a next hop chaining counter (next hop chaining counter, NCC) #1, and the handover request message is used to request migration of the migration IAB node from the source donor-CU to the target donor-CU. Correspondingly, the target donor-CU receives the handover request message from the source donor-CU, and sends a handover request ACK message to the source donor-CU, to indicate that the message is successfully received, where the ACK message carries the NCC #1. After receiving the ACK message from the target donor-CU, the source donor-CU deletes the KgNB#1.

Further, the source donor-CU sends a reconfiguration message to the migration IAB node, where the reconfiguration message carries the NCC #1. After receiving the reconfiguration message from the source donor-CU, the migration IAB node calculates the same KgNB#2 based on the NCC #1, and returns a handover complete message to the target donor-CU. Then, the migration IAB node deletes the KgNB#1. After receiving the handover complete message from the migration IAB node, the target donor-CU sends a path switching request message to the AMF. After receiving the path switching request message, the AMF sends a path switching request acknowledgment (ACK) message to the target donor-CU, where the path switching request acknowledgment message carries an NCC #2 and NH#2. The target donor-CU receives the path switching request message from the AMF, then calculates a KgNB#3 based on the NH#2 carried in the path switching request message, and sends a reconfiguration message to the migration IAB node, where the reconfiguration message carries the NCC #2. After receiving the reconfiguration message from the target donor-CU, the migration IAB node calculates the same KgNB#3 based on the NCC #2.

In a reestablishment scenario (that is, the migration IAB node is connected to the target donor-CU by using the RRC reestablishment procedure), the migration IAB node sends a reestablishment request message to the target donor-CU. After receiving the reestablishment request message from the migration IAB node, the target donor-CU sends a context request message to the source donor-CU, where the context request message is used to request to obtain the context of the migration IAB node. After receiving the context request message from the target donor-CU, the source donor-CU derives a KgNB#2 based on the KgNB#1 or a next hop parameter NH#1. Then, the source donor-CU sends a context response message to the target donor-CU, where the context response message carries the context of the migration IAB node, the KgNB#2, and an NCC #1. It may be understood that the KgNB#2 and the NCC #1 may be included in the context of the migration IAB node, or may be information elements independent of the context of the IAB node. Then, the source donor-CU deletes the KgNB#1.

Further, the target donor-CU sends a reconfiguration message to the UE, where the reconfiguration message carries the NCC #1. The migration IAB node calculates the KgNB#2 based on the NCC #1, and then sends a reconfiguration complete message to the target donor-CU. Then, the target donor-CU sends a path switching request message to the AMF. After receiving the path switching request message from the target donor-CU, the AMF sends a path switching request ACK message to the target donor-CU, where the message carries an NCC #2 and NH#2. The target donor-CU calculates a KgNB#3 based on the NH#2, and sends a reconfiguration message to the migration IAB node, where the reconfiguration message carries the NCC #2. After receiving the reconfiguration message from the target donor-CU, the migration IAB node calculates the KgNB#3 based on the NCC #2.

In S505, the target donor-CU obtains an IP address #3. For example, the target donor-CU may generate the IP address #3.

For example, after the migration IAB node migrates to the target donor-CU, the target donor-CU generates the new IP address #3 for the IAB-DU, where the IP address #3 is used by the migration IAB node to establish a connection to the source donor-CU through the target path. In an example, in the handover scenario, the target donor-CU generates the IP address #3 after receiving the migration complete message from the migration IAB node. In another example, in the reestablishment scenario, the target donor-CU generates the IP address #3 after receiving the reconfiguration complete message from the migration IAB node.

In another implementation solution, the OAM may generate the IP address #3, and then send the IP address #3 to the target donor-CU.

In S506, the target donor-CU sends an RRC message to the migration IAB node, where the RRC message carries the IP address #3. The RRC message may be specifically an RRC reconfiguration (RRC Reconfiguration) message.

It may be understood that S505 and S506 may be steps independent of S504, or may be some steps in S504 (that is, a handover process or a reestablishment process).

In S507, the source donor-CU obtains the IP address #3. For example, the target donor-CU sends an IAB transport migration message to the source donor-CU, where the IAB transport migration message includes the IP address #3.

For example, after obtaining the IP address #3, the target donor-CU sends the IAB transport migration message (IAB transport migration message) to the source donor-CU, where the IAB transport migration message includes the IP address #3. After receiving the IAB transport migration message, the source donor-CU obtains the IP address #3 from the IAB transport migration message.

It may be understood that the source donor-CU may alternatively obtain the IP address #3 in another manner. For example, the migration IAB node reports the IP address #3 to the source donor-CU after obtaining the IP address #3 from the target donor-CU, and the source donor-CU receives the IP address #3 from the migration IAB node.

In S508, optionally, a MOBIKE procedure is performed.

Optionally, the migration IAB node may perform the MOBIKE procedure via the source donor-CU.

When a transport mode (transport mode) is used for the IPsec channel #1, the migration IAB node and the source donor-CU need to reestablish an IPsec channel, that is, S510 to S512 need to be performed. In this case, S508 may not be performed.

When a tunnel mode (tunnel mode) is used for the IPsec channel #1, the migration IAB node may choose to reestablish an IPsec channel, that is, S510 to S512 are performed. In this case, S508 may not be performed, or the migration IAB node may choose to perform IP address migration on the original IPsec channel #1 (that is, perform the MOBIKE procedure). The MOBIKE procedure may include procedures such as initial IKE exchange (Initial IKE Exchange), signaling support for MOBIKE (Signaling Support for MOBIKE), initial tunnel header addresses (Initial Tunnel Header Addresses), additional addresses (Additional Addresses), and changing addresses in IPsec SAs (Changing Addresses in IPsec SAs). For details, refer to an existing protocol. This is not limited in this application.

If the MOBIKE procedure fails, the source donor-CU sends, to the IAB node, indication information indicating that the MOBIKE procedure fails.

Optionally, in S509, the migration IAB node and the source donor-CU perform an F1AP gNB-CU configuration update procedure (F1AP gNB-CU Configuration Update procedure).

For example, if the MOBIKE procedure is successfully performed, the migration IAB node and the source donor-CU perform the F1AP gNB-CU configuration update procedure through the target path. Specifically, for example, the migration IAB node sends a configuration update message to the source donor-CU through the target path. After receiving the configuration update procedure from the migration IAB node, the source donor-CU determines whether a bearer with an updated IP address is available, that is, determines availability of the IP address and the bearer. When the bearer is unavailable, the source donor-CU sends, to the migration IAB node through the target path, indication information indicating that the F1AP gNB-CU configuration update procedure fails.

In S510, the source donor-CU derives a psk #2.

For example, the source donor-CU derives the psk #2 after obtaining the IP address #3. Specifically, for example, the source donor-CU node derives the psk #2 by using the KgNB#2 as an input key and using the IP address #2 and the IP address #3 as input parameters. The psk #2 is used by the source donor-CU to perform security authentication on the migration IAB node, to establish the secure transmission channel, for example, the IPsec channel, between the migration IAB node and the source donor-CU.

It may be understood that the IP address #2 may include one or more IP addresses, and the IP address #3 may also include one or more IP addresses. When the IP address #2 or the IP address #3 includes a plurality of IP addresses, the psk #2 includes a plurality of psks.

In S511, the migration IAB node derives a psk #3.

For example, the migration IAB node derives the psk #3 after receiving the RRC message from the target donor-CU. Specifically, for example, the migration IAB node derives the psk #3 by using the KgNB#3 as an input key and using the IP address #2 and the IP address #3 as input parameters. The psk #3 is used by the migration IAB node to perform security authentication on the source donor-CU, to establish the secure transmission channel between the migration IAB node and the source donor-CU.

In S512, the migration IAB node and the source donor-CU establish an F1 interface, and negotiate to establish an IPsec channel #2.

For example, the migration IAB node (which may be specifically the DU of the migration IAB node, that is, the IAB-DU) establishes the F1 interface with the source donor-CU through the target path.

The migration IAB node completes a migration process by using the foregoing procedure. The following describes, with reference to (b) in FIG. 6, a possible connection relationship between the migration IAB node, and the source donor and a target donor after migration. It can be learned from (b) in FIG. 6 that after the migration IAB node migrates from the source donor-CU to the target donor-CU, for the migration IAB node, the IAB-MT establishes the RRC connection to the target donor-CU, and the IAB-DU reestablishes the F1 interface with the source donor-DU. For the IAB' node, an IAB'-MT maintains an RRC connection to the source donor-CU, and an IAB'-DU maintains an F1 connection to the source donor-CU. For the IAB" node, an IAB"-MT maintains an RRC connection to the source donor-CU, and an IAB"-DU maintains an F1 connection to the source donor-CU. For an IAB‴ node, an IAB‴-MT maintains an RRC connection to the target donor-CU, and an IAB"'-DU maintains an F1 connection to the target donor-CU. The UE and the UE' maintain RRC connections to the source donor.

During data transmission, the source donor-CU sends the downlink data to the UE via the target donor-DU, the IAB‴ node (optional), and the migration IAB node (a specific communication path is shown by a dotted line in the figure).

Further, after establishment of the F1 interface is completed, the migration IAB node and the source donor-CU negotiate to establish the secure transmission channel for the F1 interface, that is, the IPsec channel #2. When the IPsec channel #2 is established, the migration IAB node and the source donor-CU respectively authenticate the peer end by using the psk #2 and the psk #3 as authentication credentials.

Because the migration IAB node calculates the psk #2 by using the root key KgNB#3 determined after migration is completed, and the source donor-CU calculates the psk #3 by using the root key KgNB#2 before migration is completed, the psk #2 and the psk #3 may be different. If the psk #2 and the psk #3 are different, the IPsec channel #2 may fail to be established. As a result, there is a security risk in subsequent communication between the migration IAB node and the source donor-CU.

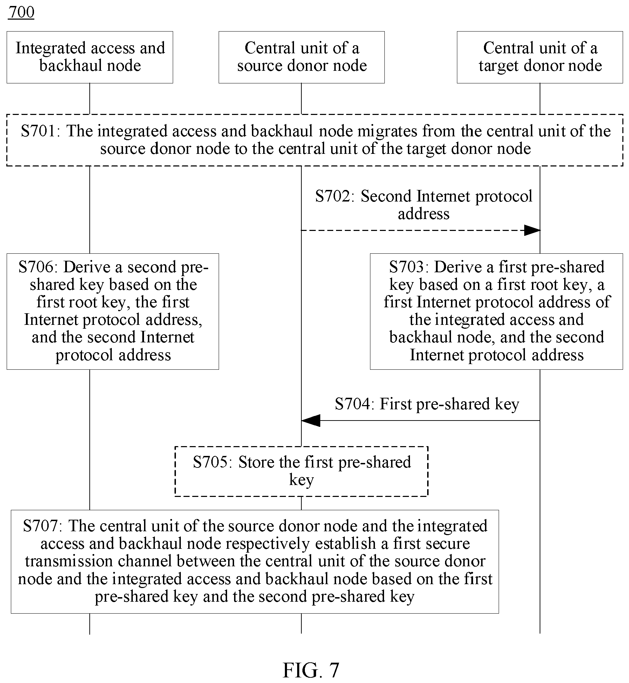

With reference to the embodiment in FIG. 5, FIG. 7 is an example flowchart of a method 700 according to an embodiment of this application. The following describes the method 700 by using an example with reference to steps in FIG. 7.

Optionally, in S701, an integrated access and backhaul node migrates from a central unit of a source donor node to a central unit of a target donor node.

For example, before S701, the integrated access and backhaul node accesses the central unit of the source donor node through a source path, and registers with a core network, where the source path represents a transmission path between the integrated access and backhaul node and the central unit of the source donor node, and the source path includes a distributed unit of the source donor node.

To protect security of a connection between the integrated access and backhaul node and the central unit of the source donor node, the integrated access and backhaul node and the central unit of the source donor node negotiate to establish a second secure transmission channel. For example, after completing a registration procedure, the integrated access and backhaul node obtains a third Internet protocol address of the integrated access and backhaul node and a second Internet protocol address of the central unit of the source donor node. It may be understood that an Internet protocol address of the integrated access and backhaul node in this embodiment of this application is an Internet protocol address of a distributed unit of the integrated access and backhaul node, that is, the third Internet protocol address is the Internet protocol address of the distributed unit of the integrated access and backhaul node, and similar parts are not described again subsequently. The integrated access and backhaul node may obtain the third Internet protocol address and the second Internet protocol address from a network management system or the central unit of the source donor node. This is not limited in this application. Then, the integrated access and backhaul node derives a fifth pre-shared key by using a third root key as an input key and using the third Internet protocol address and the second Internet protocol address as input parameters, where the third root key is a key obtained by the integrated access and backhaul node in a process of registration with the network. For example, the integrated access and backhaul node derives the third root key based on a key preset in a global subscriber identity module in the registration procedure.

Correspondingly, the central unit of the source donor node derives the fifth pre-shared key by using the third root key as an input key and using the third Internet protocol address and the second Internet protocol address as input parameters, where the third root key is obtained by the central unit of the source donor node from the network in the process in which the integrated access and backhaul node registers with the network. For example, in the process in which the integrated access and backhaul node registers with the network, a mobility management network element obtains the third root key through derivation, and then sends the third root key to the central unit of the source donor node.

Further, the integrated access and backhaul node and the central unit of the source donor node respectively establish the second secure transmission channel between the integrated access and backhaul node and the central unit of the source donor node by using the fifth pre-shared key.

The integrated access and backhaul node may migrate from the central unit of the source donor node to the central unit of the target donor node in a case of poor signal quality or signal interruption between the integrated access and backhaul node and the source donor node. The integrated access and backhaul node migrating from the central unit of the source donor node to the central unit of the target donor node may mean that a mobile termination part of the integrated access and backhaul node migrates a radio resource control connection from the central unit of the source donor node to the central unit of the target donor node, and the distributed unit of the integrated access and backhaul node still maintains a connection to the central unit of the source donor node (or in other words, the distributed unit of the integrated access and backhaul node reestablishes a connection to the central unit of the source donor node).

The integrated access and backhaul node may migrate to the central unit of the target donor node by using a handover procedure or a reestablishment procedure. For a specific process, refer to S504 in the method 500. Details are not described herein again.

Optionally, in S702, the central unit of the source donor node sends the second Internet protocol address of the central unit of the source donor node to the central unit of the target donor node. Correspondingly, the central unit of the source donor node receives the second Internet protocol address from the central unit of the source donor node.

For example, the central unit of the source donor node may send the second Internet protocol address to the central unit of the target donor node when one or more of the following conditions are satisfied.
(1) When the central unit of the source donor node determines, according to a local policy, that the integrated access and backhaul node on the central unit of the source donor node has migrated to the central unit of the target donor node, the central unit of the source donor node sends the second Internet protocol address to the central unit of the target donor node.
(2) The central unit of the source donor node determines that a transport mode is used for the second secure transmission channel.
(3) The central unit of the source donor node receives, from the central unit of the target donor node, a request message used to request to obtain the second Internet protocol address.

It may be understood that the central unit of the source donor node may reuse an existing message to send the second Internet protocol address to the central unit of the target donor node in a migration process of the integrated access and backhaul node. For example, when the integrated access and backhaul node accesses the central unit of the target donor node by using the handover procedure, the central unit of the source donor node sends a handover request message to the central unit of the target donor node, where the handover request message is used to request migration of the integrated access and backhaul node from the central unit of the source donor node to the central unit of the target donor node, and the central unit of the donor node adds the second Internet protocol address to the handover request message. For another example, when the integrated access and backhaul node accesses the central unit of the target donor node by using the reestablishment procedure, after receiving a reestablishment request message from the integrated access and backhaul node, the central unit of the target donor node sends a context request message to the central unit of the source donor node, where the context request message is used to request a context of the integrated access and backhaul node. After receiving the context request message, the central unit of the source donor node sends a context response message to the central unit of the target donor node, where the context response message includes the context of the integrated access and backhaul node, and the central unit of the source donor node adds the second Internet protocol address to the context.

In S703, the central unit of the target donor node derives a first pre-shared key based on a first root key, a first Internet protocol address of the integrated access and backhaul node, and the second Internet protocol address of the central unit of the source donor node.

For example, after the central unit of the target donor node receives the second Internet protocol address from the central unit of the source donor node, or after the central unit of the target donor node receives, from the central unit of the source donor node, a request message used to request to obtain the first pre-shared key, the first pre-shared key is derived based on the first root key, the first Internet protocol address, and the second Internet protocol address. For example, the central unit of the target donor node derives the first pre-shared key by using the first root key as an input key and using the first Internet protocol address and the second Internet protocol address as input parameters. The first root key is derived by the central unit of the target donor node in the process in which the integrated access and backhaul node migrates from the central unit of the source donor node to the central unit of the target donor node, or is obtained by the central unit of the target donor node from the mobility management network element. For example, after receiving, from the integrated access and backhaul node, a message used indicating that the integrated access and backhaul node completes migration from the central unit of the source donor node to the central unit of the target donor node, the central unit of the target donor node sends a path switching request message to an access and mobility management function network element, where the path switching request message includes identification information of the integrated access and backhaul node. Specifically, for example, when the integrated access and backhaul node accesses the central unit of the target donor node by using the handover procedure, after receiving a handover complete message from the integrated access and backhaul node, the central unit of the target donor node sends the path switching request message to the access and mobility management function network element. Alternatively, when the integrated access and backhaul node accesses the central unit of the target donor node by using the reestablishment procedure, after receiving a reestablishment complete message from the integrated access and backhaul node, the central unit of the target donor node sends the path switching request message to the access and integrated backhaul node. Correspondingly, after receiving the path switching request message from the central unit of the target donor node, the access and mobility management function network element sends a path switching response message to the central unit of the target donor node. In an implementation, the access and mobility management function network element adds a next hop parameter to the path switching response message, and the central unit of the target donor node derives the first root key based on the next hop parameter. In another implementation, the access and mobility management function network element adds the first root key to the path switching response message after deriving the first root key based on a next hop parameter, and the central unit of the target donor node obtains the first root key from the path switching response message.

In S704, the central unit of the target donor node sends the first pre-shared key to the central unit of the source donor node. Correspondingly, the central unit of the source donor node receives the first pre-shared key from the target donor node.

For example, after deriving the first pre-shared key, the central unit of the target donor node sends the first pre-shared key to the central unit of the source donor node, where the first pre-shared key is used by the central unit of the source donor node to establish a first secure transmission channel between the integrated access and backhaul node and the central unit of the source donor node.

Optionally, the central unit of the target donor node further sends address information to the central unit of the source donor node. There is a correspondence between the address information and the first pre-shared key. The correspondence indicates that the first pre-shared key is used to establish a secure transmission channel for a connection corresponding to the address information. In other words, the correspondence indicates that the first pre-shared key is used to perform security authentication in a process of establishing a secure transmission channel corresponding to the address information. The address information includes the first Internet protocol address of the integrated access and backhaul node and/or the second Internet protocol address of the central unit of the source donor node.

Optionally, in S705, the central unit of the source donor node stores the first pre-shared key.

For example, the central unit of the source donor node stores the first pre-shared key after receiving the first pre-shared key from the central unit of the target donor node.

If the central unit of the source donor node further receives, from the central unit of the target donor node, the address information corresponding to the first pre-shared key, the central unit of the source donor node stores the correspondence between the first pre-shared key and the address information in S705.

In S706, the integrated access and backhaul node derives a second pre-shared key based on the first root key, the first Internet protocol address, and the second Internet protocol address.

For example, after the integrated access and backhaul node migrates from the central unit of the source donor node to the central unit of the target donor node, when determining to establish a new secure transmission channel, the integrated access and backhaul node derives the second pre-shared key based on the first root key, the first Internet protocol address, and the second Internet protocol address, where the second pre-shared key is used by the integrated access and backhaul node to establish the first secure transmission channel between the integrated access and backhaul node and the central unit of the source donor node. The first root key is derived by the integrated access and backhaul node in the process in which the integrated access and backhaul node migrates from the central unit of the source donor node to the central unit of the target donor node, or is obtained by the integrated access and backhaul node from the central unit of the source donor node. For example, in the migration process of the integrated access and backhaul node, the access and mobility management function network element sends, to the central unit of the source donor node, the next hop parameter used to derive the first root key, the central unit of the source donor node sends the next hop parameter to the integrated access and backhaul node, and then the integrated access and backhaul node derives the first root key based on the next hop parameter. For another example, the access and mobility management function network element sends the first root key to the central unit of the source donor node after deriving the first root key based on the next hop parameter, and then the central unit of the source donor node sends the first root key to the integrated access and backhaul node.

It may be understood that a same parameter and a same algorithm are used to generate the first pre-shared key and the second pre-shared key, so that the first pre-shared key is the same as the second pre-shared key.

In S707, the central unit of the source donor node and the integrated access and backhaul node respectively establish the first secure transmission channel between the central unit of the source donor node and the integrated access and backhaul node based on the first pre-shared key and the second pre-shared key.

For example, when the integrated access and backhaul node determines to establish the first secure transmission channel by using the first Internet protocol address and the second Internet protocol address, the integrated access and backhaul node triggers establishment of the first secure transmission channel. For example, the integrated access and backhaul node sends a request message to the central unit of the source donor node, where the request message includes the first Internet protocol address and the second Internet protocol address, and the request message is used to request to establish the first secure transmission channel. Then, the central unit of the source donor node performs security authentication on the integrated access and backhaul node based on the first pre-shared key, and correspondingly, the integrated access and backhaul node performs security authentication based on the second pre-shared key, to establish the first secure transmission channel. Specifically, for example, after receiving the request message from the integrated access and backhaul node, the central unit of the source donor node sends, to the integrated access and backhaul node, a response message carrying the first Internet protocol address and the second Internet protocol address, and determines the first pre-shared key from a local storage. For example, the central unit of the source donor node stores the correspondence between the first pre-shared key and the address information in S705, where the address information includes the first Internet protocol address and the second Internet protocol address. After receiving the request message from the central unit of the target donor node, the central unit of the source donor node determines the first pre-shared key based on the address information (that is, the first Internet protocol address and the second Internet protocol address) carried in the request message and the correspondence between the first pre-shared key and the address information in the local storage.

After receiving the response message from the central unit of the source donor node, the integrated access and backhaul node generates a first authentication vector based on the second pre-shared key derived in S706, and sends the first authentication vector to the central unit of the source donor node. After receiving the first authentication vector from the integrated access and backhaul node, the central unit of the source donor node checks the first authentication vector based on the first pre-shared key determined in the local storage. If the check succeeds, the central unit of the source donor node generates a second authentication vector based on the first pre-shared key, and then sends the second authentication vector to the integrated access and backhaul node. The integrated access and backhaul node checks the second authentication vector based on the second pre-shared key. If the check succeeds, it indicates that security authentication between the integrated access and backhaul node and the central unit of the source donor node succeeds, and establishment of the first secure transmission channel is completed.

It may be understood that the first pre-shared key and the second pre-shared key are pre-shared keys respectively derived by the central unit of the target donor node and the integrated access and backhaul node based on a same parameter, so that values of the first pre-shared key and the second pre-shared key are the same. Therefore, in S706, the central unit of the source donor node may successfully verify the integrated access and backhaul node by using the first pre-shared key, and the integrated access and backhaul node may also successfully verify the source donor node by using the second pre-shared key. This allows successful establishment of the first secure transmission channel between the central unit of the source donor node and the integrated access and backhaul node.

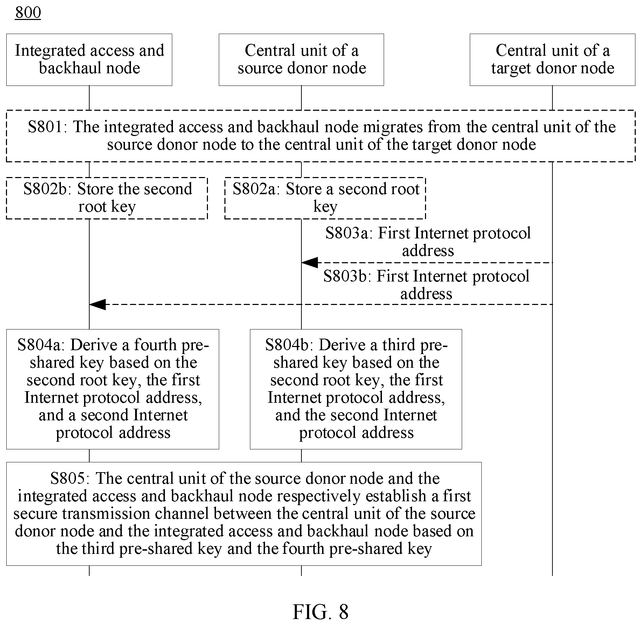

With reference to the embodiment in FIG. 5, FIG. 8 is an example flowchart of a method 800 according to an embodiment of this application. The following describes the method 800 by using an example with reference to steps in FIG. 8.

Optionally, in S801, an integrated access and backhaul node migrates from a central unit of a source donor node to a central unit of a target donor node.

S801 is similar to S501 in the method 500. For brevity, details are not described herein again.

Optionally, in S802a, the central unit of the source donor node stores a second root key.

For example, the second root key is a key shared by the central unit of the source donor node and an integrated access and backhaul node. In other words, both the central unit of the source donor node and the integrated access and backhaul node have the second root key.

In an implementation (denoted as Manner 1), the second root key is a root key obtained from a network by the central unit of the source donor node in a process in which the integrated access and backhaul node registers with the network. For example, in the process in which the integrated access and backhaul node registers with the network, an access and mobility management function network element derives the third root key, and then sends the third root key to the central unit of the source donor node. In other words, the second root key may be the third root key in S701 in the method 700. For details, refer to the descriptions of S701 in the method 700. Details are not described herein again.

Alternatively, in another implementation (denoted as Manner 2), the second root key may alternatively be a root key derived by the source donor node based on the second root key or a next hop parameter in a process in which the integrated access and backhaul node migrates from the central unit of the source donor node to a central unit of a target donor node.

The central unit of the source donor node may store the second root key in all cases, or may store the second root key when a first preset condition is satisfied. The first preset condition may include, for example, one or more of the following.
(1) The central unit of the source donor node determines that the integrated access and backhaul node is a node having an access and backhaul function. For example, the central unit of the source donor node checks whether an IAB-indication indication is stored in a context of the integrated access and backhaul node, and if the IAB-indication indication is stored in the context of the integrated access and backhaul node, determines that the integrated access and backhaul node is a node having the access and backhaul function.
(2) The central unit of the source donor node determines that the integrated access and backhaul node has migrated. For example, the central unit of the source donor node determines that a handover procedure or a reestablishment procedure has occurred on the integrated access and backhaul node. Specifically, for example, the central unit of the source donor node sends a handover request message to the central unit of the target donor node, where the handover request message is used to request migration of the integrated access and backhaul node from the central unit of the source donor node to the central unit of the target donor node. For another example, the central unit of the source donor node receives a context request message from the central unit of the target donor node, where the context request message is used to request the context of the integrated access and backhaul node.
(3) The central unit of the source donor node determines that a transport mode is used for a second secure transmission channel.
(4) The central unit of the source donor node determines that the second secure transmission channel is established based on a pre-shared key derived by using the second root key.
(5) A local policy preset in the source donor node indicates to establish a new secure transmission channel when the integrated access and backhaul node on the source donor node has migrated.

Optionally, the central unit of the source donor node may further store first indication information corresponding to the second root key, where the first indication information indicates that the second root key is used to derive a new pre-shared key after the integrated access and backhaul node migrates from the central unit of the source donor node to the central unit of the target donor node.

Optionally, in S802b, the integrated access and backhaul node stores the second root key.

For example, corresponding to Manner 1, the second root key is derived by the integrated access and backhaul node based on a key preset in a global subscriber identity module in the process in which the integrated access and backhaul node registers with the network. In this case, the second root key is a root key used to derive a second pre-shared key, where the second pre-shared key is used to establish the second secure transmission channel before the integrated access and backhaul node migrates from the central unit of the source donor node to the central unit of the target donor node. For a specific process, refer to the descriptions of S701 in the method 700.

Corresponding to Manner 2, the second root key may alternatively be a root key derived based on the third root key or the next hop parameter in the process in which the integrated access and backhaul node migrates from the central unit of the source donor node to the central unit of the target donor node. For example, the central unit of the source donor node sends a reconfiguration message to the integrated access and backhaul node in the migration process, where the reconfiguration message carries the next hop parameter, and the integrated access and backhaul node derives the second pre-shared key based on the next hop parameter.

The integrated access and backhaul node may store the second root key in all cases, or may store the second root key when a second preset condition is satisfied. The second preset condition may include, for example, one or more of the following.
(1) The integrated access and backhaul node determines that the integrated access and backhaul node has migrated from the central unit of the source donor node to the central unit of the target donor node. For example, the integrated access and backhaul node sends a handover complete message to the central unit of the target donor node. For another example, the integrated access and backhaul node sends a reconfiguration complete message to the central unit of the target donor node.
(2) It is determined that the second secure transmission channel is established based on a pre-shared key derived by using the second root key.
(3) It is determined that a transport mode is used for the second secure transmission channel.
(4) The integrated access and backhaul node determines, according to a local policy, to establish a secure transmission channel with the central unit of the source donor node when migration has occurred.

Optionally, the integrated access and backhaul node may further store second indication information corresponding to the second root key, where the second indication information indicates that the second root key is used to derive a new pre-shared key after the integrated access and backhaul node migrates from the central unit of the source donor node to the central unit of the target donor node.

In S803a, the central unit of the target donor node sends a first Internet protocol address to the central unit of the source donor node. Correspondingly, the central unit of the source donor node receives the first Internet protocol address from the central unit of the target donor node.

The first Internet protocol address is an address generated by the central unit of the target donor node or a network management device for the integrated access and backhaul node in the migration process of the integrated access and backhaul node. For details, refer to the descriptions of S701 in the method 700. Details are not described herein again.

In S803b, the central unit of the target donor node sends the first Internet protocol address to the integrated access and backhaul node. Correspondingly, the integrated access and backhaul node receives the first Internet protocol address from the central unit of the target donor node.

In S804a, the integrated access and backhaul node derives a third pre-shared key based on the second root key, the first Internet protocol address, and a second Internet protocol address.

Optionally, when the integrated access and backhaul node stores, in S802b, the second indication information corresponding to the second root key, the integrated access and backhaul node may determine, based on the second indication information, to derive the new pre-shared key by using the second root key.

The integrated access and backhaul node derives the third pre-shared key abased on the second root key, the first Internet protocol address, and the second Internet protocol address. For example, the central unit of the source donor node derives the fifth pre-shared key by using the second root key as an input key and using the first Internet protocol address and the second Internet protocol address as input parameters.

In S804b, the central unit of the source donor node derives the third pre-shared key based on the second root key, the first Internet protocol address, and the second Internet protocol address.

Optionally, when the central unit of the source donor node further stores, in S802a, the first indication information corresponding to the second root key, the central unit of the source donor node may determine, based on the first indication information, to derive the new pre-shared key by using the second root key.

A specific manner in which the central unit of the source donor node derives the third pre-shared key is similar to a manner in which the integrated access and backhaul node derives the third pre-shared key in S804a. Details are not described herein again.

In S805, the integrated access and backhaul node and the central unit of the source donor node establish a first secure transmission channel between the central unit of the source donor node and the integrated access and backhaul node based on the third pre-shared key.

It may be understood that S805 is similar to S706 in the method 700, and a difference lies in that in S706, the integrated access and backhaul node and the central unit of the source donor node establish the first secure transmission channel based on the first pre-shared key, while in S805, the integrated access and backhaul node and the central unit of the source donor node establish the first secure transmission channel based on the third pre-shared key. For brevity, details are not described herein again.

It may be understood that the third pre-shared key and the fourth pre-shared key are pre-shared keys respectively derived by the central unit of the target donor node and the integrated access and backhaul node based on a same root key (that is, the second root key), so that values of the third pre-shared key and the fourth pre-shared key are the same. Therefore, in S805, the central unit of the source donor node may successfully verify the integrated access and backhaul node by using the third pre-shared key, and the integrated access and backhaul node may also successfully verify the source donor node by using the fourth pre-shared key. This allows successful establishment of the first secure transmission channel between the central unit of the source donor node and the integrated access and backhaul node.

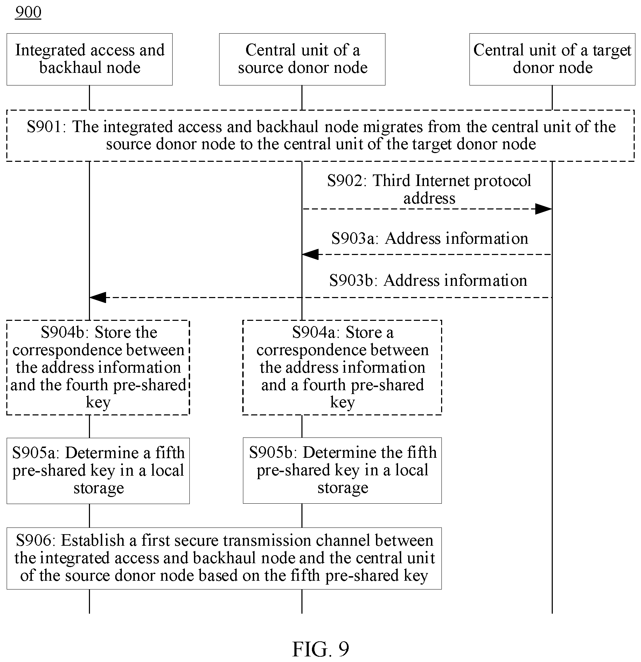

With reference to the embodiment in FIG. 5, FIG. 9 is an example flowchart of a method 900 according to an embodiment of this application. The following describes the method 900 by using an example with reference to steps in FIG. 9.

Optionally, in S901, an integrated access and backhaul node migrates from a central unit of a source donor node to a central unit of a target donor node.

S901 is similar to S701 in the method 700. For brevity, details are not described herein again.

Optionally, in S902, the central unit of the source donor node sends a third Internet protocol address of the integrated access and backhaul node to the central unit of the target donor node. Correspondingly, the target donor node receives the third Internet protocol address from the central unit of the source donor node.

For example, the third Internet protocol address is an address generated by the central unit of the source donor node for a distributed unit of the integrated access and backhaul node before the integrated access and backhaul node migrates from the central unit of the source donor node to the central unit of the target donor node, or is an address of a distributed unit of the integrated access and backhaul node that is obtained by the source donor node from a network management system. The third Internet protocol address is used to derive a fifth pre-shared key before the integrated access and backhaul node migrates, where the fifth pre-shared key is used to establish a first secure transmission channel between the integrated access and backhaul node and the central unit of the source donor node before the integrated access and backhaul node migrates from the central unit of the source donor node to the central unit of the target donor node. For details, refer to the descriptions of S701 in the method 700. Details are not described herein again.

The central unit of the source donor node may actively send the third Internet protocol address to the central unit of the target donor node. For example, in a scenario in which the integrated access and backhaul node accesses the central unit of the target donor node by using a handover procedure, the central unit of the source donor node may add the third Internet protocol address to a handover request message when sending the handover request message to the central unit of the target donor node. For another example, in a scenario in which the integrated access and backhaul node accesses the central unit of the target donor node by using a reestablishment procedure, the central unit of the source donor node may add the third Internet protocol address to a context when sending the context of the integrated access and backhaul node to the central unit of the target donor node. Alternatively, the central unit of the source donor node may send the third Internet protocol address to the central unit of the target donor node based on a request of the central unit of the target donor node. For example, after the integrated access and backhaul node has migrated to the central unit of the target donor node, the central unit of the target donor node sends a request message to the central unit of the source donor node, where the request message is used to request an Internet protocol address used before the integrated access and backhaul node migrates. After receiving the request message, the central unit of the source donor node sends the third Internet protocol address to the central unit of the target donor node.

Optionally, the central unit of the source donor node may further send a second Internet protocol address of the central unit of the source donor node to the central unit of the target donor node. A specific manner is similar to a manner of sending the third Internet protocol address, and details are not described herein again.

Optionally, in S903a, the central unit of the target donor node sends address information to the central unit of the source donor node.

For example, after the integrated access and backhaul node migrates to the central unit of the target donor node, the central unit of the target donor node may send the address information to the central unit of the source donor node, where the address information includes a first Internet protocol address of the integrated access and backhaul node and/or the second Internet protocol address of the central unit of the source donor node. The central unit of the target donor node sends the address information to the central unit of the source donor node, to indicate to establish, by using a pre-shared key used before the integrated access and backhaul node migrates, a secure transmission channel corresponding to the address information. Optionally, the central unit of the target donor node may send a correspondence between the address information and the third Internet protocol address to the central unit of the source donor node, where the correspondence indicates to establish, by using a pre-shared key corresponding to the third Internet protocol address, the secure transmission channel corresponding to the address information.

Optionally, in S903b, the central unit of the target donor node sends the address information to the integrated access and backhaul node.

It may be understood that S903b is similar to S903a, and a difference lies in that in S903a, the central unit of the target donor node sends the address information to the central unit of the source donor node, while in S903b, the central unit of the target donor node sends the address information to the central unit of the target donor node. For brevity, details are not described herein again. It may be further understood that S903a may be performed before S903b, or may be performed after S903b. This is not limited in this application.

Optionally, in S904a, the central unit of the source donor node stores a correspondence between the address information and the fifth pre-shared key.

For example, after receiving the correspondence between the address information and the third Internet protocol address from the central unit of the target donor node, the central unit of the source donor node determines the corresponding fifth pre-shared key based on the third Internet protocol address. Then, the central unit of the source donor node stores the correspondence between the address information and the fifth pre-shared key, where the correspondence indicates to establish, by using the fifth pre-shared key, the secure transmission channel corresponding to the address information.

Optionally, in S904b, the integrated access and backhaul node stores the correspondence between the address information and the fifth pre-shared key.

For example, after receiving the correspondence between the address information and the third Internet protocol address from the central unit of the target donor node, the integrated access and backhaul node determines the corresponding fifth pre-shared key based on the third Internet protocol address. Then, the integrated access and backhaul node stores the correspondence between the address information and the fifth pre-shared key, where the correspondence indicates to establish, by using the fifth pre-shared key, the secure transmission channel corresponding to the address information.

In S905a, the integrated access and backhaul node determines the fifth pre-shared key in a local storage.

For example, when the integrated access and backhaul node determines to establish the secure transmission channel by using the address information, or in other words, when the integrated access and backhaul node determines to establish the secure transmission channel corresponding to the address information, the integrated access and backhaul node determines the fifth pre-shared key based on the address information and the correspondence between the address information and the fifth pre-shared key in the local storage.

In S905b, the central unit of the source donor node determines the fifth pre-shared key in a local storage.

For example, when the central unit of the source donor node determines to establish the secure transmission channel by using the address information, or in other words, when the central unit of the source donor node determines to establish the secure transmission channel corresponding to the address information, the central unit of the source donor node determines the fifth pre-shared key in the local storage.

For example, the central unit of the source donor node receives a request message from the integrated access and backhaul node, where the request message carries the address information, and the request message is used to request to establish the first secure transmission channel. The central unit of the source donor node determines the fifth pre-shared key based on the address information and the correspondence between the address information and the fifth pre-shared key in the local storage.

In S906, the integrated access and backhaul node and the central unit of the source donor node establish the first secure transmission channel between the central unit of the source donor node and the integrated access and backhaul node based on the first pre-shared key.

It may be understood that S906 is similar to S706 in the method 700, and a difference lies in that in S706, the integrated access and backhaul node and the central unit of the source donor node establish the first secure transmission channel based on the first pre-shared key, while in S906, the integrated access and backhaul node and the central unit of the source donor node establish the first secure transmission channel based on the fifth pre-shared key. For brevity, details are not described herein again.

According to the method 700 to the method 900, the central unit of the source donor node and the integrated access and backhaul node establish a secure transmission channel by using a same pre-shared key, so that a case in which the secure transmission channel fails to be established because the source donor node and the integrated access and backhaul node use different pre-shared keys when establishing the secure transmission channel can be avoided.

With reference to the scenario in FIG. 5, the following describes a method 1000 to a method 1400 provided in embodiments of this application.

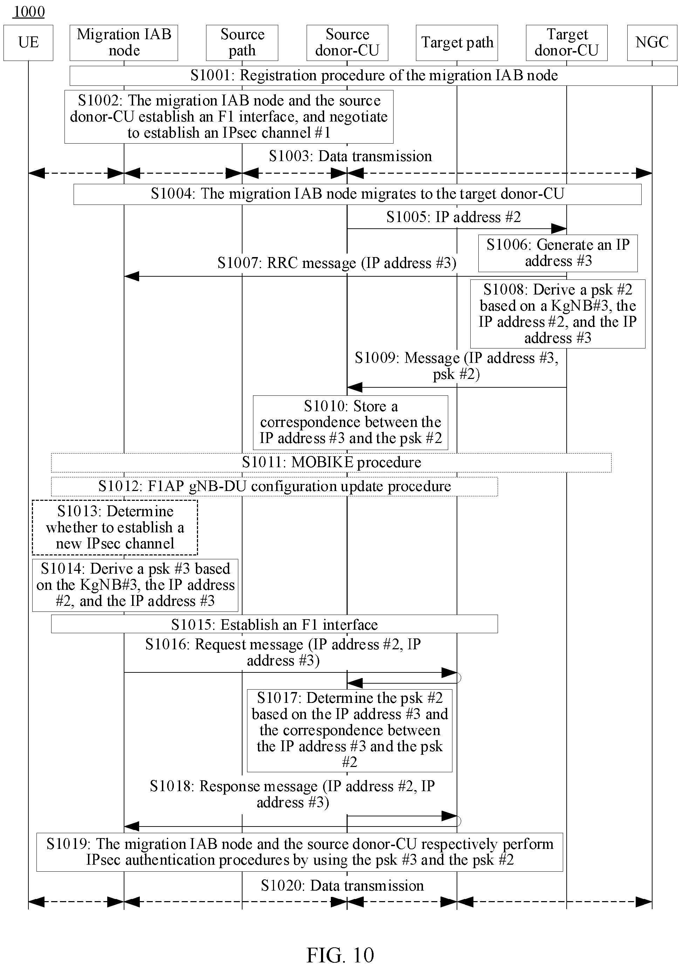

With reference to the embodiment in FIG. 5, FIG. 10 is an example flowchart of the method 1000 according to an embodiment of this application. The method 1000 may be a possible implementation of the method 700. For example, in the method 1000, an example in which the integrated access and backhaul node is a migration IAB node, the central unit of the source donor node is a source donor-CU, and the central unit of the target donor node is a target donor-CU is used for description. In addition, an example in which the first pre-shared key is a psk #2, the second pre-shared key is a psk #3, the second Internet protocol address is an IP address #2, and the first Internet protocol address is an IP address #3 is used for description.

In the method 1000, after the migration IAB node migrates from the source donor-CU to the target donor-CU, the target donor-CU derives a psk by using a new root key determined by negotiating with the migration IAB node, and sends the derived psk to the source donor-CU. The source donor-CU negotiates with the migration IAB node to establish a new IPsec channel by using the psk obtained from the target donor-CU.

The following describes the method 1000 by using an example with reference to steps in FIG. 10.

S1001 to S1004 are similar to S501 to S504 in the method 500, and details are not described herein again.

In S1005, the source donor-CU sends the IP address #2 to the target donor-CU. Correspondingly, the target donor-CU receives the IP address #2 from the source donor-CU.

For example, the IP address #2 represents an IP address of the source donor-CU. The source donor-CU may send the IP address #2 to the target donor-CU in a process in which the migration IAB node migrates to the target donor-CU. In other words, S 1005 may be performed in a process of S1004, or S1005 may be performed after S 1004. This is not limited in this application. The source donor-CU may reuse an existing message to send the IP address #2 to the target donor-CU. For example, in a handover scenario, the source donor-CU adds the IP address #2 to a handover request message when sending the handover request message to the target donor-CU. For another example, in a reestablishment scenario, after receiving a UE context obtaining request message from the target donor-CU, the source donor-CU sends a context of the migration IAB node to the target donor-CU, and adds the IP address #2 to the context of the migration IAB node.

Optionally, the source donor-CU may send the IP address #2 to the target donor-CU when one or more of the following conditions are satisfied.
(1) A local policy of the source donor-CU indicates the source donor-CU to send the IP address #2 to the target donor-CU. For example, the local policy is preset in the source donor-CU, to indicate the source donor-CU to send the IP address #2 to the target donor-CU for the migration IAB node when the migration IAB node on the source donor-CU has migrated.
(2) A transport mode is used for an IPsec channel #1. For example, the transport mode is used for the IPsec channel #1 established in S1002.
(3) A request message is received from the target donor-CU. For example, after the migration IAB node migrates from the source donor-CU to the target donor-CU, the target donor-CU sends the request message to the source donor-CU, to request to obtain the IP address #2. The source donor-CU sends the IP address #2 to the target donor-CU based on a request of the target donor-CU.

Optionally, the source donor-CU may further send indication information #1 to the target donor-CU, where the indication information #1 indicates the target donor-CU to calculate the psk #3 for the source donor-CU, or the indication information #1 is used to request to obtain the psk #3. The indication information #1 may be the IP address #2, or may be another information element independent of the IP address #2. Alternatively, the source donor-CU may implicitly indicate, by using another information element, the target donor-CU to calculate the psk #3 for the source donor-CU. This is not limited in this application.

In S1006, the target donor-CU generates the IP address #3.

In S1007, the target donor-CU sends an RRC message to the migration IAB node, where the message carries the IP address #3.

S1006 and S1007 are similar to S505 and S506 in the method 500, and details are not described herein again.

In S1008, the target donor-CU derives the psk #2 based on a KgNB#3, the IP address #2, and the IP address #3.

For example, the target donor-CU derives the psk #2 by using the KgNB#3 as an input key and using the IP address #2 and the IP address #3 as input parameters. The KgNB#3 is a root key determined by the target donor-CU and the migration IAB node through negotiation. The IP address #3 is a new IP address generated by the target donor-CU or OAM for the migration IAB node after the migration IAB node migrates from the source donor-CU to the target donor-CU. For details, refer to the descriptions of S504 and S505 in the method 500. Details are not described herein again.

It may be understood that the IP address #2 may include one or more IP addresses, and the IP address #3 may also include one or more IP addresses. When the IP address #2 includes a plurality of IP addresses, or the IP address #3 includes a plurality of IP addresses, the psk #2 includes a plurality of psks, and a quantity of psks included in the psk #2 is related to a quantity of IP addresses included in the IP address #2 and the IP address #3.

The following describes a possible example with reference to Table 1.

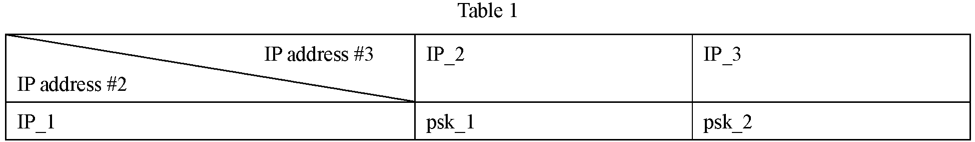

In the example provided in Table 1, the IP address #2 includes one IP address: IP_1, and the IP address #3 includes two IP addresses: IP_2 and IP_3. In this case, the psk #2 includes two psks: psk_1 and psk_2, where psk_1 is derived based on IP_1 and IP_2, that is, psk_1 corresponds to IP_1 and IP_2; and psk_2 is derived based on IP_1 and IP_3, that is, psk_2 corresponds to IP_1 and IP_3.

The following describes another possible example with reference to Table 2.

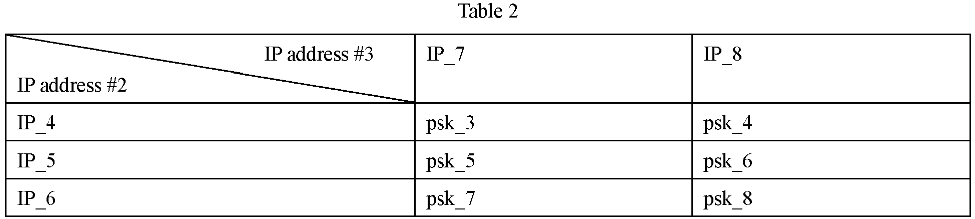

In the example provided in Table 2, the IP address #2 includes three IP addresses: IP_4, IP_5, and IP_6, and the IP address #3 includes two IP addresses: IP_7 and IP_8. In this case, the psk #2 includes six psks: psk_3, psk_4, psk_5, psk_6, psk_7 and psk_8, where psk_3 is derived based on IP_4 and IP_7, that is, psk_3 corresponds to IP_4 and IP_7; psk_4 is derived based on IP_4 and IP_8, that is, psk_4 corresponds to IP_4 and IP_8; psk_5 is derived based on IP_5 and IP_7, that is, psk_5 corresponds to IP_5 and IP_7; psk_6 is derived based on IP_5 and IP_6, that is, psk_6 corresponds to IP_5 and IP_6; psk_7 is derived based on IP_6 and IP_7, that is, psk_7 corresponds to IP_6 and IP_7; and psk_8 is derived based on IP_6 and IP_8, that is, psk_8 corresponds to IP_6 and IP_8.

In S1009, the target donor-CU sends a message to the source donor-CU, where the message includes the IP address #3 and the psk #2.

For example, the target donor-CU sends the message to the source donor-CU after generating the IP address #3, where the message includes the IP address #3 and the psk #2. For example, the message may be an IAB transport migration message (IAB transport migration message).

Optionally, there is a correspondence between the IP address #3 and the psk #2, and the correspondence between the IP address #3 and the psk #2 may be represented by {IP address #3, psk #2}. For convenience, a correspondence between different parameters is represented in a similar manner in subsequent embodiments.

Optionally, the message may further include the IP address #2. In this case, there may be a correspondence between the IP address #2, the IP address #3, and the psk #2, and the correspondence may be represented by {IP address #2, IP address #3, psk #2}. A specific format of the correspondence may be shown in Table 3.

**Table 3**

| IE/Group Name | Presence | Range |
|---|---|---|
| IAB-donor-CU PSK Info Item IEs | | 1..< maxnoofPSKs > |
| ➢ source IAB-Donor-CU IP Address | O/M | |
| ➢ psk | M | |
| ➢ IAB-DU IP Address | M | |

Table 3 includes three IAB donor-CU psk information elements (IAB-donor-CU PSK Info Item IEs): psk, IAB-DU IP Address, and source IAB-Donor-CU IP Address, where the psk represents a psk (that is, the psk #2 in this embodiment of this application) derived by the target donor-CU after the migration IAB node migrates; the IAB-DU IP Address represents a new IP address (that is, the IP address #3 in this embodiment of this application) generated by the target donor-CU or the OAM for the migration IAB node after the migration IAB node migrates; and the source IAB-Donor-CU IP Address represents an IP address (that is, the IP address #2 in this embodiment of this application) of the source donor-CU. The "Present" column in Table 3 represents a status corresponding to each element, where "M" represents mandatory, "O" represents optional, and "O/M" represents optional or mandatory. Therefore, it can be learned from Table 3 that the psk and the IAB-DU IP Address are mandatory elements, and the source IAB-Donor-CU IP Address may be an optional element or a mandatory element.

It may be understood that when the IP address #3 includes only one IP address and the psk #2 includes only one psk, the message may not include the foregoing correspondence, that is, the IP address #3 and the psk #2 in the message may be two independent information elements. When the IP address #3 includes a plurality of IP addresses, or the psk #2 includes a plurality of psks, the message includes the foregoing correspondence, and the correspondence includes correspondences between different IP addresses #3 and different psks #2. The following provides descriptions with reference to examples. With reference to the example in Table 1, the IP address #2 includes IP_1, the IP address #3 includes IP_2 and IP_3, the psk #2 includes psk_1 and psk_2, and the correspondence between the IP address #2, the IP address #3, and the psk #2 includes {IP_1, IP_2, psk_1} and {IP_1, IP_3, psk_2}. Details are shown in Table 4.

**Table 4**

| IE/Group Name | Presence | Range |
|---|---|---|
| IAB-donor-CU PSK Info Item IEs | | 1..< maxnoofPSKs > |
| IP_1 | O/M | |
| IP_2 | M | |
| psk_1 | M | |

| IAB-donor-CU PSK Info Item IEs | | 1..< maxnoofPSKs > |
|---|---|---|
| IP_1 | O/M | |
| IP_3 | M | |
| psk_2 | M | |

With reference to the example in Table 2, the IP address #2 includes IP_4, IP_5, and IP_6, the IP address #3 includes IP_7 and IP_8, the psk #2 includes psk_3, psk_4, psk_5, psk_6, psk_7, psk_8, and the correspondence between the IP address #2, the IP address #3, and the psk #2 includes {IP_4, IP_7, psk_3}, {IP_4, IP_8, psk_4}, {IP_5, IP_7, psk_5}, {IP_5, IP_8, psk_6}, {IP_6, IP_7, psk_7}, and {IP_6, IP_8, psk_8}. Details are shown in Table 5.

**Table 5**

| IE/Group Name | Presence | Range |
|---|---|---|
| IAB-donor-CU PSK Info Item IEs | | 1..< maxnoofPSKs > |
| IP_7 | O/M | |
| IP_7 | M | |
| psk_3 | M | |

| IAB-donor-CU PSK Info Item IEs | | 1..< maxnoofPSKs > |
|---|---|---|
| IP_4 | O/M | |
| IP_8 | M | |
| psk_4 | M | |

| IAB-donor-CU PSK Info Item IEs | | 1..< **maxnoofPSKs** > |
|---|---|---|
| IP_5 | O/M | |
| IP_7 | M | |
| psk_5 | M | |

| IAB-donor-CU PSK Info Item IEs | | 1..< maxnoofPSKs > |
|---|---|---|
| IP_5 | O/M | |
| IP_8 | M | |
| psk_6 | M | |

| IAB-donor-CU PSK Info Item IEs | | 1..< maxnoofPSKs > |
|---|---|---|
| IP_6 | O/M | |
| IP_7 | M | |
| psk_7 | M | |

| IAB-donor-CU PSK Info Item IEs | | 1..< maxnoofPSKs > |
|---|---|---|
| IP_6 | O/M | |
| IP_8 | M | |
| psk_8 | M | |

The foregoing example is described by using an example in which the target donor-CU sends the psk #2 and the IP address #3 to the source donor-CU by using the IAB transport migration message. It may be understood that the target donor-CU may alternatively send the psk #2 and the IP address #3 to the source donor-CU by using another message. This is not limited in this application.

In S1010, the source donor-CU stores the correspondence between the IP address #3 and the psk #2.

For example, after receiving the IP address #3 and the psk #3 from the target donor-CU, the source donor-CU stores the correspondence between the IP address #3 and the psk #3 (that is, stores {IP address #3, psk #3}), where the correspondence is stored in a context of the source donor-CU. The correspondence indicates the source donor-CU to negotiate to establish a secure transmission channel with a node (that is, the migration IAB node in this embodiment of this application) corresponding to the IP address #3 by using the psk #3. In other words, the correspondence indicates the source donor-CU to authenticate a node by using the psk #3 when the node requests, by using the IP address #3, the source donor-CU to establish a secure transmission channel.

Optionally, if the source donor-CU further receives the IP address #2 from the target donor-CU, the source donor-CU may store the correspondence between the IP address #2, the IP address #3, and the psk #3 (that is, store {IP address #2, IP address #3, psk #3}), where the correspondence is stored in a context of the source donor-CU. The correspondence indicates the source donor-CU to negotiate to establish a secure transmission channel corresponding to the IP address #3 and the IP address #2 by using the psk #3. In other words, the correspondence indicates the source donor-CU to authenticate a node by using the psk #3 when the node requests, by using the IP address #3 as a source IP address and the IP address #2 as a target IP address, the source donor-CU to establish a secure transmission channel.

In S1011, a MOBIKE procedure is performed.

Optionally, the migration IAB node may perform the MOBIKE procedure via the source donor-CU.

When the transport mode (transport mode) is used for the IPsec channel #1, the migration IAB node and the source donor-CU need to reestablish an IPsec channel, that is, S1013 to S1018 need to be performed. In this case, S1011 does not need to be performed.

When a tunnel mode (tunnel mode) is used for the IPsec channel #1, the migration IAB node may choose to reestablish an IPsec channel, that is, S1013 to S1018 are performed. In this case, S1011 does not need to be performed, or the migration IAB node may choose to perform IP address migration on the original IPsec channel #1 (that is, perform S1011).

Optionally, in S1013, the migration IAB node determines whether to establish a new IPsec channel.

Alternatively, S1013 may be described as follows: The migration IAB node determines whether to derive the psk #3.

For example, when one or more of the following conditions are satisfied, the migration IAB node triggers establishment of the new IPsec channel, or in other words, the migration IAB node determines to derive the psk #3.
(1) The migration IAB node receives the IP address #3 from the target donor-CU (that is, the IP address #3 is carried in S1007).
(2) A local policy of the migration IAB node indicates the migration IAB node to establish the new IPsec channel. For example, the local policy is preset in the migration IAB node, to indicate to release an original IPsec channel (that is, the IPsec channel #1) and establish the new IPsec channel (that is, an IPsec channel #2) when the migration IAB node has migrated.
(3) The transport mode is used for the IPsec channel #1. For example, the transport mode is used for the IPsec channel #1 established in S1002.
(4) It is determined that the MOBIKE procedure fails. For example, in S1011, the migration IAB node receives a response message indicating that the MOBIKE procedure fails.
(5) It is determined that an F1AP gNB-DU configuration update procedure fails. For example, in S1012, the migration IAB node receives a response message indicating that the F1AP gNB-DU configuration update procedure fails.

In S1014, the migration IAB node derives the psk #3 based on the KgNB#3, the IP address #2, and the IP address #3.

For example, when the migration IAB node determines that the new IPsec channel needs to be established, the migration IAB node derives the psk #3 by using the KgNB#3 as an input key and using the IP address #2 and the IP address #3 as input parameters. In other words, the psk #3 is a psk corresponding to the IP address #2 and the IP address #3. When the migration IAB node initiates an IPsec channel establishment procedure to the source donor-CU by using the IP address #2 and the IP address #3, the migration IAB node may perform an IPsec authentication procedure by using the psk #3.

It may be understood that the IP address #2 may include one or more IP addresses, and the IP address #3 may also include one or more IP addresses. When the IP address #2 includes a plurality of IP addresses, or the IP address #3 includes a plurality of IP addresses #3, the psk #3 includes a plurality of psks. For a specific example, refer to the example in S1008. A difference lies in that S1008 is performed by the target donor-CU, and a psk derived by the target donor-CU is denoted as the psk #2; and S1014 is performed by the migration IAB node, and a psk derived by the migration IAB node is denoted as the psk #3.

It may be further understood that S1013 and S1014 may be performed before S1015, or may be performed after S1015. This is not limited in this application.

In S1015, the migration IAB node establishes an F1 interface with the source donor-CU.

For example, the migration IAB node establishes the F1 interface with the source donor-CU through a target path. A specific process is not limited in this application.

Further, the migration IAB node and the source donor-CU negotiate to establish a secure transmission channel. For example, the migration IAB node establishes the secure transmission channel with the source donor-CU by using an IKEv2 PSK protocol. For convenience, the IPsec secure transmission channel herein is denoted as the IPsec channel #2. The following describes the process by using an example with reference to S1016 to S1018.

In S1016, the migration IAB node sends a request message to the source donor-CU. Correspondingly, the source donor-CU receives the request message from the migration IAB node.

For example, the migration IAB node sends the request message to the source donor-CU through the target path, where the request message includes the IP address #2 and the IP address #3, and the request message is used to request to establish the IPsec channel #2.

The request message may be, for example, an IKE_SA_INIT request message. The IP address #3 carried in the IKE_SA_INIT request message is used as a source IP address, and the IP address #2 carried in the IKE_SA_INIT request message is used as a target IP address.

It may be understood that when the IP address #2 or the IP address #3 includes a plurality of IP addresses, the migration IAB node may repeat the procedure of S1016 for a plurality of times, to trigger establishment of IPsec channels corresponding to different IP addresses. For example, in the example shown in Table 1, the IP address #2 includes one IP address: IP_1, and the IP address #3 includes two IP addresses: IP_2 and IP_3. In this case, the migration IAB node may send two request messages to the source donor-CU, where a first request message carries IP_1 and IP_2, and a second request message carries IP_1 and IP_3. For another example, in the example shown in Table 2, the IP address #2 includes three IP addresses: IP_4, IP_5, and IP_6, and the IP address #3 includes two IP addresses: IP_7 and IP_8. In this case, the migration IAB node may send six request messages to the source donor-CU, where a first request message carries IP_4 and IP_7, a second request message carries IP_4 and IP_8, a third request message carries IP_5 and IP_7, a fourth request message carries IP_5 and IP_8, and a fifth request message carries IP_6 and IP_7, and a sixth request message carries IP_6 and IP_8. It may be understood that a sequence of sending the request messages is not limited in this embodiment of this application.

In S1017, the source donor-CU determines the psk #2 based on the IP address #3 and the correspondence between the IP address #3 and the psk #2.

For example, after receiving the request message from the migration IAB node, the source donor-CU determines the psk #2 based on the IP address #3 carried in the request message and the correspondence that is between the IP address #3 and the psk #2 and that is stored in S1010.

For example, in the example shown in Table 1, the IP address #3 includes two IP addresses: IP_2 and IP_3, the psk #2 includes two psks: psk_1 and psk_2, and the correspondence between the IP address #3 and the psk #2 includes {IP_2, psk_1} and {IP_3, psk_2}. Therefore, if the request message received by the source donor-CU in S1016 carries IP_1 and IP_2 (that is, the IP address #3 is IP_2), the source donor-CU determines the corresponding psk_1 based on IP_2 and the correspondence between the IP address #3 and the psk #2. If the request message received by the source donor-CU in S1016 carries IP_1 and IP_3 (that is, the IP address #3 is IP_3), the source donor-CU determines the corresponding psk_2 based on IP_3 and the correspondence between the IP address #3 and the psk #2.

Alternatively, in another implementation, when the source donor-CU stores the correspondence between the IP address #2, the IP address #3, and the psk #2 in S1010, after receiving the request message from the migration IAB node, the source donor-CU determines the psk #2 based on the IP address #2 and the IP address #3 that are carried in the request message, and the correspondence that is between the IP address #2, the IP address #3, and the psk #2 and that is stored in S 1010.

For example, in the example shown in Table 2, the IP address #2 includes three IP addresses: IP_4, IP_5, and IP_6, the IP address #3 includes two IP addresses: IP_7 and IP_8, the psk #2 includes six psks: psk_3, psk_4, psk_5, psk_6, psk_7, and psk_8, and the correspondence between the IP address #2, the IP address #3, and the psk #2 includes: {psk_3, IP_4, IP_7}, {psk_4, IP_4, IP _8}, {psk_5, IP_5, IP_7}, {psk_5, IP_5, IP_6}, {psk_7, IP_6, IP_7}, and {psk_8, IP_6, IP_8}. Therefore, if the request message received by the source donor-CU in S1016 carries IP_4 and IP_7 (that is, the IP address #2 is IP_4, and the IP address #3 is IP_7), the source donor-CU determines the corresponding psk_3 based on IP_4, IP_7, and the correspondence between the IP address #2, the IP address #3, and the psk #2. If the request message received by the source donor-CU in S1016 carries IP_4 and IP_8 (that is, the IP address #2 is IP_4, and the IP address #3 is IP_8), the source donor-CU determines the corresponding psk_4 based on IP_4, IP_8, and the correspondence between the IP address #2, the IP address #3, and the psk #2. If the request message received by the source donor-CU in S1016 carries IP_5 and IP_7 (that is, the IP address #2 is IP_5, and the IP address #3 is IP_7), the source donor-CU determines the corresponding psk_5 based on IP_5, IP_7, and the correspondence between the IP address #2, the IP address #3, and the psk #2. If the request message received by the source donor-CU in S1016 carries IP_5 and IP_8 (that is, the IP address #2 is IP_5, and the IP address #3 is IP_8), the source donor-CU determines the corresponding psk_6 based on IP_5, IP_8, and the correspondence between the IP address #2, the IP address #3, and the psk #2. If the request message received by the source donor-CU in S1016 carries IP_6 and IP_7 (that is, the IP address #2 is IP_6, and the IP address #3 is IP_7), the source donor-CU determines the corresponding psk_7 based on IP_6, IP_7, and the correspondence between the IP address #2, the IP address #3, and the psk #2. If the request message received by the source donor-CU in S1016 carries IP_6 and IP_8 (that is, the IP address #2 is IP_6, and the IP address #3 is IP_8), the source donor-CU determines the corresponding psk_8 based on IP_6, IP_8, and the correspondence between the IP address #2, the IP address #3, and the psk #2.

It may be understood that S1017 may be performed after S1016, or may be performed after S1018, or may be performed in a process of S1019 (for example, after the source donor-CU receives an authentication vector from the migration IAB node). This is not limited herein.

In S1018, the source donor-CU sends a response message to the migration IAB node. Correspondingly, the migration IAB node receives the response message from the source donor-CU.

For example, the source donor-CU sends the response message to the migration IAB node through the target path, where the response message carries the IP address #2 and the IP address #3. The response message may be, for example, an IKE_SA_INIT response message.

In S1019, the migration IAB node and the source donor-CU respectively perform IPsec authentication procedures by using the psk #3 and the psk #2. It may be understood that the psk #3 herein is a psk corresponding to the IP address #2 and the IP address #3 that are carried by the migration IAB node in S1016, and the psk #2 herein is a psk determined by the source donor-CU in S1017.

For example, the migration IAB node generates an authentication vector #1 based on the psk #3, and sends the authentication vector #1 to the source donor-CU. After receiving the authentication vector #1, the source donor-CU checks the authentication vector #1 based on the psk #2. If the check succeeds, the source donor-CU sends an authentication vector #2 to the migration IAB node, where the authentication vector #2 is an authentication vector generated by the source donor-CU based on the psk #2. After receiving the authentication vector #2, the migration IAB node checks the authentication vector #2 based on the psk #3. If the check succeeds, it indicates that IPsec authentication succeeds.

In an example, the migration IAB node may send the authentication vector #1 to the source donor-CU by using an IKE_AUTH Exchange request message. In other words, the migration IAB node may send the IKE_AUTH Exchange request message to the source donor-CU, where the IKE_AUTH Exchange request message carries the authentication vector #1. The source donor-CU may send the authentication vector #2 to the migration IAB node by using an IKE_AUTH Exchange response message. In other words, the source donor-CU may send the IKE_AUTH Exchange response message to the migration IAB node, where the IKE_AUTH Exchange response message carries the authentication vector #2.

Optionally, in S1020, UE and a CN perform data transmission with each other via the migration IAB node, the target path, and the source donor-CU.

For example, after the migration IAB node and the source donor-CU establish a new F1 interface and the IPsec channel #2 through the target path, the UE may perform data transmission with the CN via the migration IAB node, the target path, and the source donor-CU. When data is transmitted between the source donor-CU and the migration IAB node, security protection is performed by using the IPsec channel #2.

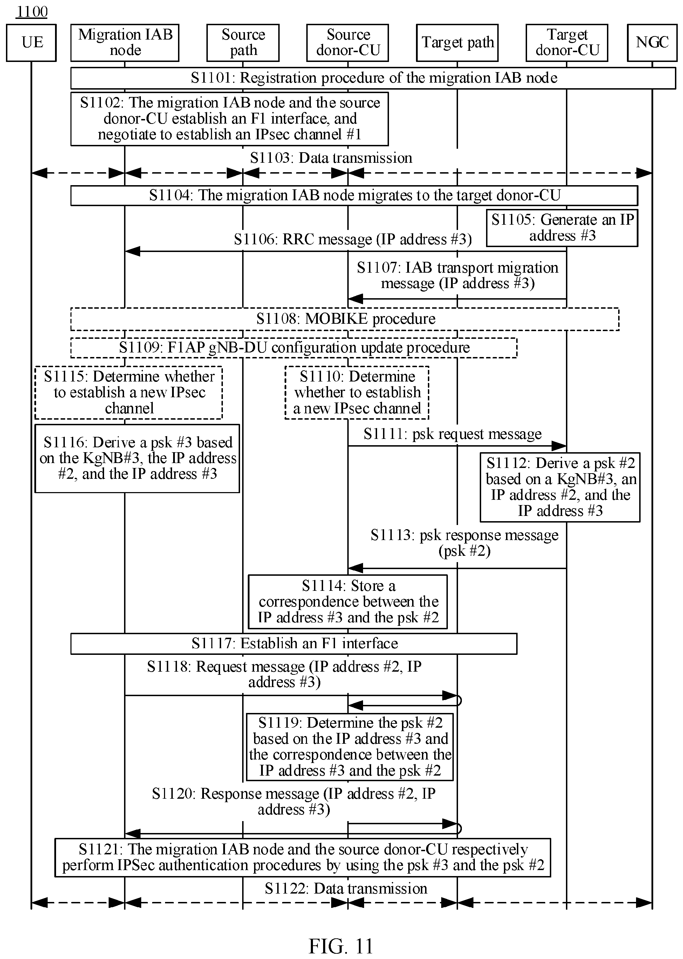

With reference to the embodiment in FIG. 5, FIG. 11 is an example flowchart of a method 1100 according to an embodiment of this application. The method 1100 may be another possible implementation of the method 700.

In the method 1100, after a migration IAB node migrates from a source donor-CU to a target donor-CU, the source donor-CU requests to obtain a psk from the target donor-CU. The target donor-CU derives, based on a request of the source donor-CU, the psk by using a new root key determined by negotiating with the migration IAB node, and sends the derived psk to the source donor-CU. The source donor-CU negotiates with the migration IAB node about a new IPsec channel by using the psk obtained from the target donor-CU.

The following describes the method 1100 by using an example with reference to steps in FIG. 11.

S1101 to S1109 are similar to S501 to S509 in the method 500. For brevity, details are not described herein again.

Optionally, in S1110, the source donor-CU determines whether to establish a new IPsec channel.

Alternatively, S1110 may be described as follows: The source donor-CU determines whether to request a psk #2 from a target donor.

For example, when one or more of the following conditions are satisfied, the source donor-CU determines to establish the new IPsec channel, or in other words, determines to request the psk #2 from the target donor-CU.
(1) The source donor-CU receives an IP address #3. For example, the source donor-CU receives the IP address #3 from the target donor-CU in S1107, or the source donor-CU receives the IP address #3 from the migration IAB node.
(2) A local policy of the source donor-CU indicates the source donor-CU to establish the new IPsec channel. For example, the local policy is preset in the source donor-CU, to indicate that the source donor-CU needs to release an original IPsec channel (that is, an IPsec channel #1) and establish the new IPsec channel (that is, an IPsec channel #2) when the IAB node on the source donor-CU has migrated.
(3) A transport mode is used for the IPsec channel #1. For example, the transport mode is used for the IPsec channel #1 established in S1102.
(4) It is determined that a MOBIKE procedure fails. For example, in S1108, the migration IAB node receives a response message indicating that the MOBIKE procedure fails.
(5) It is determined that an F1AP gNB-DU configuration update procedure fails. For example, in S1109, the migration IAB node receives a response message indicating that the F1AP gNB-DU configuration update procedure fails.

When the source donor-CU determines to establish the new IPsec tunnel, the source donor-CU requests the psk #2 from the target donor-CU. In other words, the source donor-CU performs S1111.

In S1111, the source donor-CU sends a psk request message to the target donor-CU. Correspondingly, the target donor-CU receives the psk request message from the source donor-CU.

For example, the source donor-CU sends the psk request (psk request) message to the target donor-CU, where the psk request message includes an IP address #2 and the IP address #3, and the psk request message is used to request to obtain the psk #2, or in other words, the psk request message is used to request to obtain a psk derived by using the IP address #2, the IP address #3, and a root key determined after migration.

In S1112, the target donor-CU derives the psk #2 based on a KgNB#3, the IP address #2, and the IP address #3.

For example, the target donor-CU derives the psk #2 by using the KgNB#3 as a key and using the IP address #2 and the IP address #3 as input parameters.

In S1113, the target donor-CU sends a psk response message to the source donor-CU, where the psk response message includes the psk #2. Correspondingly, the source donor-CU receives the psk response message from the target donor-CU.

For example, the target donor-CU sends the psk response message to the target donor-CU after deriving the psk #2, where the psk response message includes the psk #2. Optionally, the psk #2 may further include the IP address #2 and/or the IP address #3.

In S1114, the source donor-CU stores a correspondence between the IP address #3 and the psk #2.

It may be understood that S1114 may be described as follows: The source donor-CU stores a correspondence between the IP address #2 and the psk #2, or the source donor-CU stores a correspondence between the IP address #2, the IP address #3, and the psk #2.

S1115 to S1122 are similar to S1013 to S1020 in the method 1000, and details are not described herein again.

In the method 1000 and the method 1100, after the target donor-CU negotiates with the migration IAB node to determine a new root key (that is, the KgNB#3 in the foregoing embodiment), the target donor-CU derives the psk #2 by using the KgNB#3, and the migration IAB node derives a psk #3 by using the KgNB#3. Because input keys and input parameters are the same, the psk #2 and the psk #3 are the same. After the source donor-CU obtains the psk #2 from the target donor-CU, the source donor-CU and the migration IAB node respectively negotiate to establish the IPsec channel #2 by using the psk #2 and the psk #3. Because the psk #2 and the psk #3 are the same, a case in which the IPsec channel #2 fails to be established because the psks used by the source donor-CU and the migration IAB node are different can be avoided.

In addition, because the psk #2 and the psk #3 are derived by using an updated root key (that is, the KgNB#3), freshness of the psk #2 and the psk #3 can be ensured, and security of the IPsec channel #2 can be improved.

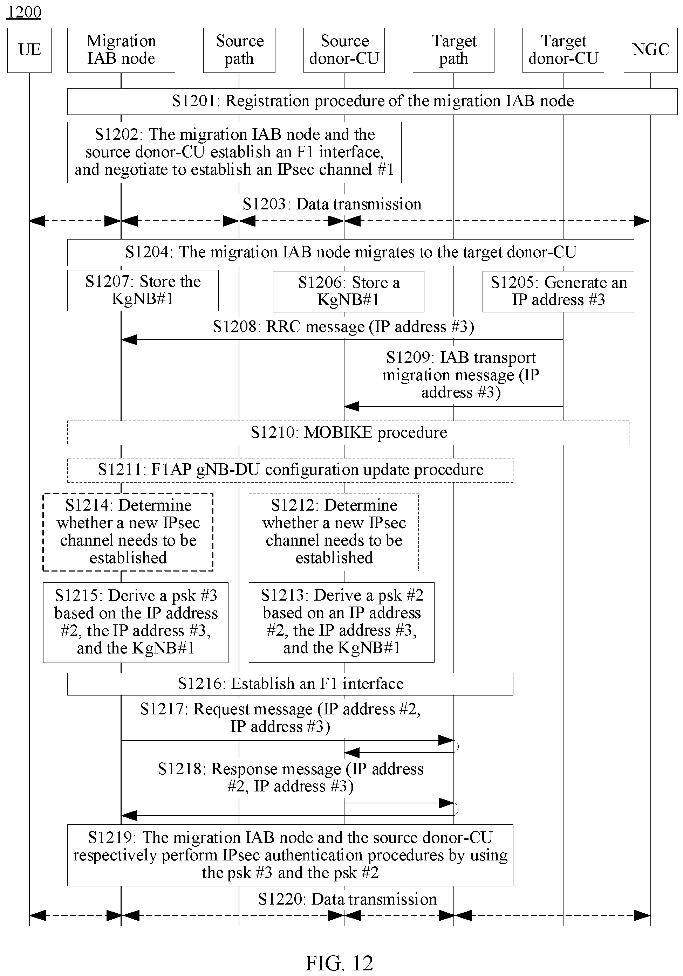

With reference to the embodiment in FIG. 5, FIG. 12 is a schematic flowchart of a method 1200 according to an embodiment of this application. The method 1200 may be a possible implementation of the method 800. For example, in the method 1200, an example in which the integrated access and backhaul node is a migration IAB node, the central unit of the source donor node is a source donor-CU, and the central unit of the target donor node is a target donor-CU is used for description. In addition, an example in which the first Internet protocol address is an IP address #3, the third pre-shared key is a psk #2, and the fourth pre-shared key is a psk #3 is used for description.

In the method 1200, after the migration IAB node migrates from the source donor-CU to the target donor-CU, the migration IAB node and the source donor-CU respectively derive new psks based on a root key (that is, a KgNB#1 in this embodiment of this application) used before migration, and then negotiate to establish a new IPsec channel by using the derived new psks.

The following describes the method 1200 by using an example with reference to steps in FIG. 12.

S1201 to S1205 are similar to S501 to S505 in the method 500. For brevity, details are not described herein again.

S1206: The source donor-CU stores the KgNB#1.

For example, the source donor-CU stores the KgNB#1 after migration is completed (that is, after S1204). The KgNB#1 is a root key used by the migration IAB node and the source donor-CU before S1204. In other words, the KgNB#1 is a root key used by the migration IAB node and the source donor-CU to derive a psk #1 used to generate an IPsec channel #1. In other words, the KgNB#1 is a root key used before the migration IAB node migrates from the source donor-CU to the target donor-CU.

Specifically, for example, in a handover scenario, the source donor-CU derives a new key KgNB#2 based on the KgNB#1 or a next hop parameter NH, and then sends a handover request to the target donor-CU. After the handover is completed, the source donor-CU stores the KgNB#1, or in other words, the source donor-CU retains the KgNB#1, or in other words, the source donor-CU does not delete the KgNB#1. For convenience, an example in which the source donor-CU stores the KgNB#1 is used for description subsequently.

For another example, in a reestablishment scenario, the source donor-CU derives a new key KgNB#2 based on the KgNB#1 or a next hop parameter NH, and then sends an Xn UE context response message to the target donor-CU. After reestablishment is completed, the source donor-CU stores the KgNB#1.

Optionally, in an implementation (denoted as Manner 1), the source donor-CU may further store indication information #2 corresponding to the KgNB#1, where the indication information #2 indicates that the KgNB#1 is used to derive, after the migration IAB node migrates, a psk used to establish a secure transmission channel between the migration IAB node and the source donor-CU. Alternatively, in another implementation (denoted as Manner 2), the source donor-CU may delete the KgNB#2, that is, the source donor-CU stores only the KgNB#1 but does not store the KgNB#2, and in this case, the source donor-CU may not store indication information #2. Alternatively, in still another implementation (denoted as Manner 3), the source donor-CU stores the KgNB#1 to a preset location, where a KgNB at the preset location is used to derive, after the migration IAB node migrates, a psk used to establish a secure transmission channel between the migration IAB node and the source donor-CU. Alternatively, in still another implementation (denoted as Manner 4), after determining that the migration IAB node has migrated (for example, after the source donor-CU sends the handover request to the target donor-CU, or after the source donor-CU receives a context request message from the target donor-CU), the source donor-CU marks a current IAB node (that is, the migration IAB node in this embodiment of this application) as an IAB node that has migrated. For example, an IP address may be used as an IAB node identifier, and when it is determined that the current node is the node that has migrated, a psk used to establish a secure transmission channel between the migration IAB node and the source donor-CU is derived by using an old KgNB (that is, the KgNB#1 in this embodiment of this application).

Optionally, before 1106, the source donor-CU may determine whether the KgNB#1 needs to be stored. In an implementation, when any one or more of the following conditions are satisfied, the source donor-CU determines to store the KgNB#1.
(1) The source donor-CU determines that a handover or reestablishment procedure has occurred on the migration IAB node. For example, in the handover scenario, the source donor-CU stores the KgNB#1 after sending a handover request message to the target donor-CU. For another example, in the reestablishment scenario, the source donor-CU stores the KgNB#1 after receiving a UE context request message from the target donor-CU.
(2) The source donor-CU establishes the IPsec channel #1 with the migration IAB node by using the psk #1 derived based on the KgNB#1. In other words, in S 1202, the migration IAB node and the source donor #1 negotiate to establish the IPsec channel #1 by using the psk #1, where the psk #1 is derived by using the KgNB#1.
(3) A transport mode is used for the IPsec channel #1. In other words, the transport mode is used for the IPsec channel #1 established in S1202.
(4) A local policy of the source donor-CU indicates the source donor-CU to establish a new IPsec tunnel. For example, the local policy is preset in the source donor-CU, where the local policy indicates the source donor-CU to release an original IPsec channel (that is, the IPsec channel #1) and establish the new IPsec channel (that is, an IPsec channel #2) when an IAB node (that is, the migration IAB node) accessing the source donor-CU has migrated.
(5) The source donor-CU determines that the node that has migrated is an IAB node, that is, the source donor determines that the migration IAB node in this embodiment of this application is an IAB node. For example, the source donor-CU receives an RRC message from the migration IAB node in a registration procedure of the migration IAB node, where the RRC message includes an IAB-indication information element, and the IAB-indication indicates that the migration IAB node is an IAB node. In this case, the source donor-CU stores the KgNB#1 based on the IAB-indication.

Optionally, when any one or more of the following conditions are satisfied, the source donor may delete the KgNB#1.
(1) Establishment of the IPsec channel #2 between the migration IAB node and the source donor-CU after migration is completed.
(2) The migration IAB node is disconnected from the source donor-CU after migration is completed.
(3) Calculation of the psk by using the KgNB#1 as an input key is completed (that is, after S1213 is completed) after migration is completed.

S1207: The migration IAB node stores the KgNB#1.

For example, after migration is completed (that is, after S1204), the migration IAB node stores the KgNB#1, or in other words, the migration IAB node retains the KgNB#1, or in other words, the migrated IAB node does not delete the KgNB#1. For convenience, an example in which the migration IAB node stores the KgNB#1 is used for description subsequently. For example, the migration IAB node stores the KgNB#1 after sending a reconfiguration complete message to the target donor-CU.

Optionally, in an implementation (denoted as Manner a), the migration IAB node may further store indication information #3 corresponding to the KgNB#1, where the indication information #3 indicates that the KgNB#1 is used to derive, after the migration IAB node migrates, a psk used to establish a secure transmission channel between the migration IAB node and the source donor-CU. Alternatively, in another implementation (denoted as Manner b), the migration IAB node stores the KgNB#1 to a preset location, where a KgNB at the preset location is used to derive, after the migration IAB node migrates, a psk used to establish a secure transmission channel between the migration IAB node and the source donor-CU.

Optionally, before 1207, the migration IAB node may determine whether the KgNB#1 needs to be stored. In an implementation, when any one or more of the following conditions are satisfied, the migration IAB node determines to store the KgNB#1.
(1) The migration IAB node establishes the IPsec channel #1 with the source donor-CU by using the psk #1 derived based on the KgNB#1.
(2) The transport mode is used for the IPsec tunnel #1.
(3) A local policy of the migration IAB node indicates the migration IAB node to establish a new IPsec channel when having migrated.

Optionally, when any one or more of the following conditions are satisfied, the migration IAB node may delete the KgNB#1.
(1) Establishment of an IPsec channel between the migration IAB node and the source donor-CU is completed (that is, S1217 and S1218 are completed) after migration is completed.
(2) The migration IAB node is disconnected from the source donor-CU after migration is completed.
(3) Calculation of the psk by using the first KgNB as the input key is completed (that is, S1215 is completed) after migration is completed.
(4) The migration IAB node performs a re-authentication procedure.

S1208 to S1211 are similar to S506 to S509 in the method 500, and S1212 is similar to S1110 in the method 1100. For brevity, details are not described herein again.

S1213: The source donor-CU derives the psk #2 based on an IP address #2, an IP address #3, and the KgNB#1.

For example, the source donor-CU derives the psk #2 by using the KgNB#1 stored in S1206 as a key and using the IP address #2 and the IP address #3 as input parameters.

Corresponding to Manner 1 in S1206, the source donor-CU determines, based on the indication information #2 corresponding to the KgNB#1, to derive the psk #2 by using the KgNB#1. Corresponding to Manner 2 in S1206, the source donor-CU determines, based on a locally stored KgNB (that is, the KgNB#1), to derive the psk #2 by using the KgNB#1. Corresponding to Manner 3 in S1206, the source donor-CU determines, based on the KgNB stored at the preset location, to derive the psk #2 by using the KgNB#1. Corresponding to Manner 4 in S1206, the source donor-CU determines, based on a mark, that the migration IAB node is an IAB node that has migrated, so that the source donor-CU determines to derive the psk #2 by using the KgNB#1.

S1214 is similar to S1115 in the method 1100, and details are not described herein again.

S1215: The migration IAB node derives the psk #2 based on the IP address #2, the IP address #3, and the KgNB#1.

For example, the migration IAB node derives the psk #3 by using the KgNB#1 stored in S1207 as a key and using the IP address #2 and the IP address #3 as input parameters.

Corresponding to Manner a in S1207, the migration IAB node determines, based on the indication information #3 corresponding to the KgNB#1, to derive the psk #2 by using the KgNB#1. Corresponding to Manner b in S1207, the migration IAB node determines, based on the KgNB stored at the preset location, to derive the psk #2 by using the KgNB#1. Alternatively, in another implementation, the migration IAB node may determine, based on an IP address, whether a peer end is the source donor-CU. For example, if the migration IAB node determines, based on the IP address #2, that the peer end is the source donor-CU, the migration IAB node determines to derive the psk #3 by using the KgNB#1; or if the migration IAB node determines, based on the IP address #2, that the peer end is not the source donor-CU, the migration IAB node determines to derive the psk #3 by using a KgNB#3.

S1216 and S1217 are similar to S1015 and S1016 in the method 1000, and S1218 and S1219 are similar to S1018 and S1019 in the method 1000. For brevity, details are not described herein again.

In the method 1200, before the migration IAB node migrates from the source donor-CU to the target donor-CU, the migration IAB node and the source donor-CU have a same root key (that is, the KgNB#1 in this embodiment of this application), and the migration IAB node and the source donor-CU may respectively derive, by using the KgNB#1, the psk #1 used to establish the IPsec channel #1. The migration IAB node and the source donor-CU may store the KgNB#1, for the migration IAB node and the source donor-CU to derive new psks after the migration IAB node migrates from the source donor-CU to the target donor-CU, so that the migration IAB node and the source donor-CU can negotiate to establish the IPsec channel #2 by using the new psks. Because the migration IAB node and the source donor-CU derive the new psks by using the same input key (both are the KgNB#1), the new psks derived by the migration IAB node and the source donor-CU are the same. Therefore, a case in which the IPsec channel #2 fails to be established because the psks used by the source donor-CU and the migration IAB node are different can be avoided.

In addition, compared with the method 1000 and the method 1100, in the method 1200, the target donor does not need to derive a new psk, and the source donor-CU does not need to obtain the new psk from the target donor-CU. Therefore, information exchange is reduced, and the psk is easier to maintain.

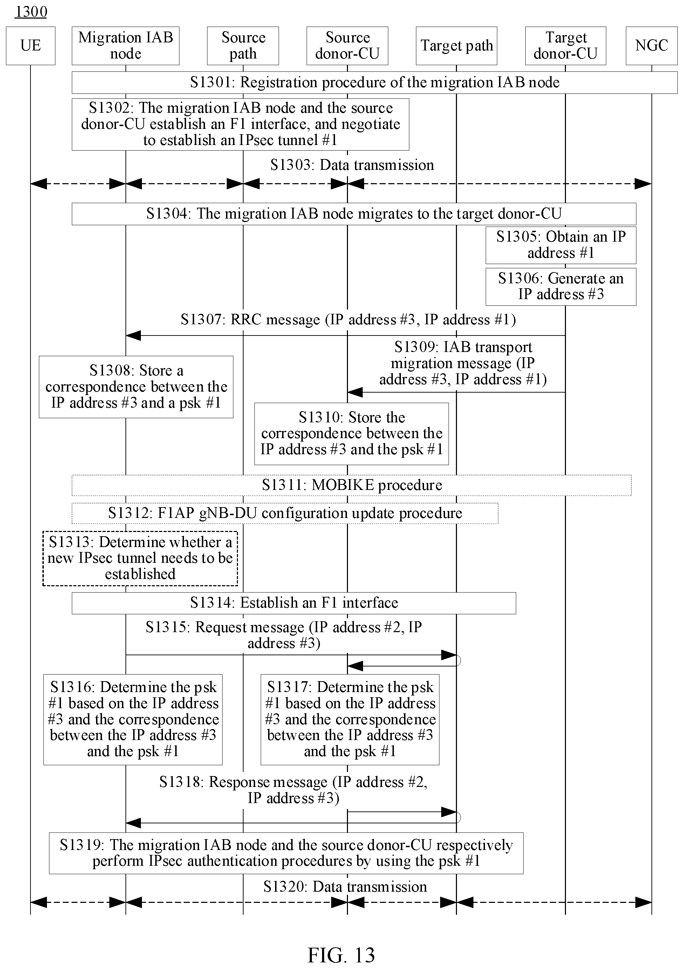

With reference to the embodiment in FIG. 5, FIG. 13 is a schematic flowchart of a method 1300 according to an embodiment of this application. The method 1300 may be a possible implementation of the method 900. For example, in the method 1300, an example in which the integrated access and backhaul node is a migration IAB node, the central unit of the source donor node is a source donor-CU, and the central unit of the target donor node is a target donor-CU is used for description. In addition, an example in which the fifth pre-shared key is a psk #1 is used for description.

In the method 1300, after the migration IAB node migrates from the source donor-CU to the target donor-CU, the migration IAB node and the source donor-CU negotiate to establish an IPsec channel #2 by using the psk #1, where the psk #1 is a psk used by the migration IAB node and the source donor-CU to negotiate to establish an IPsec channel #1 before the migration IAB node migrates.

The following describes the method 1300 by using an example with reference to steps in FIG. 13.

S1301 to S1304 are similar to S501 to S504 in the method 500. For brevity, details are not described herein again.

S1305: The target donor-CU obtains an IP address #1.

For example, the target donor-CU may obtain the IP address #1 from the source donor-CU. The target donor-CU may obtain the IP address #1 in a migration process of the migration IAB node (that is, in a process of S1304), or may obtain the IP address #1 after migration of the IAB node is completed (that is, after S1304 is completed). This is not limited in this application.

The IP address #1 herein is an IP address of the migration IAB node before migration. For details, refer to the descriptions of S502 in the method 500.

In an example, the source donor-CU may reuse an existing message to send the IP address #1 to the target donor-CU in the process of S1304. For example, in a handover scenario, the source donor-CU adds the IP address #1 to a handover request message when sending the handover request message to the target donor-CU. For another example, in a reestablishment scenario, the source donor-CU adds the IP address #1 to a UE context obtaining message when sending the UE context obtaining message to the target donor-CU. It may be understood that the source donor-CU may alternatively generate a new message to send the IP address #1 to the target donor-CU. This is not limited in this application.

In another example, the target donor-CU may send a request message to the source donor-CU, to request to obtain the IP address #1, and the source donor-CU sends the IP address #1 to the target donor-CU based on a request of the target donor-CU.

S1306: The target donor-CU generates an IP address #3.

S1306 is similar to S505 in the method 500, and details are not described herein again.

S1307: The target donor-CU sends an RRC message to the migration IAB node, where the RRC message carries the IP address #3 and the IP address #1. Correspondingly, the migration IAB node receives the RRC message from the target donor.

For example, the RRC message may be specifically an RRC reconfiguration (RRC Reconfiguration) message.

Optionally, there is a correspondence between the IP address #3 and the IP address #1, and the correspondence between the IP address #3 and the IP address #1 may be represented by {the IP address #3, the IP address #1}. A specific format of the correspondence may be shown in Table 6.

**Table 6**

| IE/Group Name | Presence | Range |
|---|---|---|
| IAB-donor-CU PSK Info Item IEs | | 1..< maxnoofPSKs > |
| ➢ old IAB-DU IP Address | M | |
| ➢ new IAB-DU IP Address | M | |

Table 6 includes two IAB donor-CU psk information elements (IAB-donor-CU PSK Info Item IEs): old IAB-DU IP Address and new IAB-DU IP Address, where the old IAB-DU IP Address indicates an IP address (that is, the IP address #1 in this embodiment of this application) used by the migration IAB node before migration, and the new IAB-DU IP Address indicates an IP address (that is, the IP address #3 in this embodiment of this application) generated by the target donor-CU for the migration IAB node after the migration IAB node migrates. The "Present" column in Table 6 represents a status corresponding to each element, where "M" represents mandatory, and "O" represents optional. Therefore, it can be learned from Table 6 that both the old IAB-DU IP Address and the new IAB-DU IP Address are mandatory elements. It may be understood that the IP address #1 may include one or more IP addresses, and the IP address #3 may also include one or more IP addresses. The following describes a possible example with reference to Table 7.

**Table 7**

| IP address #1 | IP address #3 |
|---|---|
| IP_9 | IP_12 |
| IP_10 | IP_13 |
| IP_11 | |

In the example provided in Table 7, the IP address #1 includes three IP addresses: IP_9, IP_10, and IP_11, and the IP address #3 includes two IP addresses: IP_12 and IP_13, where IP_9 corresponds to IP_12, and IP_10 corresponds to IP_13. In other words, in this example, the correspondence between the IP address #1 and the IP address #3 includes {IP_9, IP_121 and {IP_10, IP_13}. A specific format of the correspondence may be shown in Table 8.

**Table 8**

| IE/Group Name | Presence | Range |
|---|---|---|
| IAB-donor-CU PSK Info Item IEs | | 1..< maxnoofPSKs > |
| IP_9 | M | |
| IP_12 | M | |

| IAB-donor-CU PSK Info Item IEs | | 1..< maxnoofPSKs > |
|---|---|---|
| IP_10 | M | |
| IP_13 | M | |

The following describes another possible example with reference to Table 9.

**Table 9**

| IP address #1 | IP address #3 |
|---|---|
| IP_14 | IP_16 |
| IP_15 | IP_17 |
| | IP_18 |

In the example provided in Table 9, the IP address #1 includes two IP addresses: IP_14 and IP_15, and the IP address #3 includes three IP addresses: IP_16, IP_17, and IP_18, where IP_14 corresponds to IP_16, and IP_15 corresponds to IP_17. Because a quantity of IP addresses included in the IP address #3 is greater than a quantity of IP addresses included in the IP address #1, in this case, IP_18 may be set to correspond to either IP_14 or IP_15. For convenience, an example in which IP_18 corresponds to IP_14 is used for description subsequently. In other words, in this example, the correspondence between the IP address #3 and the IP address #1 includes {IP_9, IP_12}, {IP_10, IP_13}, and {IP_18, IP_14}.

S1308: The migration IAB node stores a correspondence between the IP address #3 and the psk #1.

For example, the migration IAB node obtains the correspondence between the IP address #3 and the IP address #1 after receiving the RRC message from the target donor-CU, and then the migration IAB node determines the corresponding psk #1 based on the IP address #1 (optionally, an IP address #2 is further included), and stores the correspondence between the IP address #3 and the psk #1 (that is, stores {the IP address #3, the psk #1}).

The migration IAB node may store the correspondence between the IP address #3 and the psk #1 after receiving the RRC message from the target donor-CU, or may store the correspondence between the IP address #3 and the psk #1 when any one or more of the following conditions are satisfied.
(1) The migration IAB node establishes an IPsec channel #1 with the source donor-CU by using the psk #1.
(2) A transport mode is used for the IPsec tunnel #1.
(3) A local policy of the migration IAB node indicates the migration IAB node to establish a new IPsec channel when having migrated.

In an implementation, the migration IAB node directly stores the correspondence of {the IP address #3, the psk #1}. In another implementation, the migration IAB node stores the correspondence of {the IP address #1, the psk #1} and the correspondence of {the IP address #3, the IP address #1}. In still another implementation, the migration IAB node may store the correspondence of {the IP address #3, the IP address #1, the psk #1}. In still another implementation, the migration IAB node stores the correspondence of {the IP address #3, the IP address #1, the IP address #2, the psk #1}. For ease of description, an example in which the migration IAB node stores the correspondence of {the IP address #3, the psk #1} is used for description subsequently.

With reference to the example shown in Table 7, if the IP address #2 includes one IP address: IP_14, psk #1 includes three psks: psk_9, psk_10, and psk_11. A specific case is shown in Table 10.

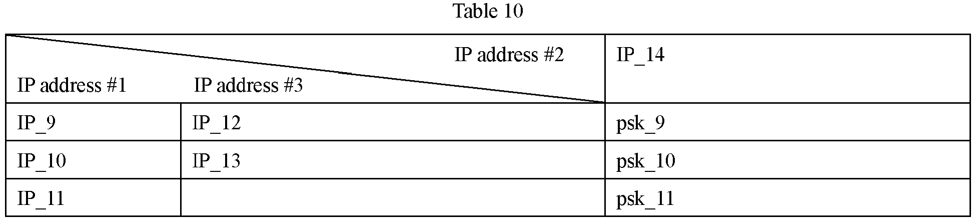

It can be learned from Table 10 that psk_9 corresponds to IP_9, IP_12, and IP_14, psk_10 corresponds to IP_10, IP_13, and IP_14, and psk_11 corresponds to IP_11 and IP_14.

Therefore, the correspondence that is between the IP address #3 and the psk #1 and that is stored by the migration IAB node includes {IP_12, psk_9} and {IP_13, psk_10}.

Optionally, the migration IAB node may further store a correspondence between the IP address #2, the IP address #3, and the psk #1, where the correspondence includes {IP_14, IP_12, psk_9} and {IP_14, IP_13, psk_10}.

With reference to the example provided in Table 9, if the IP address #2 includes two IP addresses: IP_19 and IP_20, the psk #1 includes four psks: psk_12, psk_13, psk_14, and psk_15. A specific case is shown in Table 11.

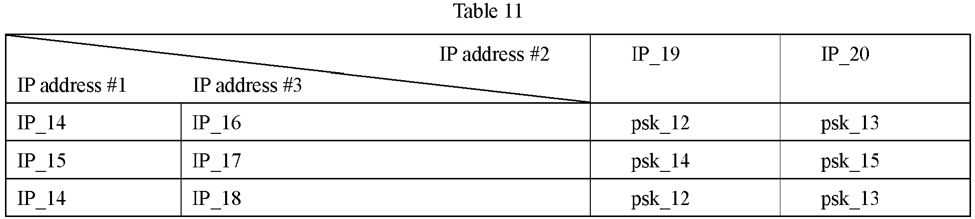

It can be learned from Table 11 that psk_12 corresponds to IP_14, IP_16, and IP_19, psk_13 corresponds to IP_14, IP_16, and IP_20, psk_14 corresponds to IP_15, IP_17, and IP_19, and psk_15 corresponds to IP_15, IP_17, and IP_20. Alternatively, psk_12 corresponds to IP_14, IP_18, and IP_19, and psk_13 corresponds to IP_14, IP_18, and IP_20.

In this case, the migration IAB node stores the correspondence between the IP address #2, the IP address #3, and the psk #1, where the correspondence includes {IP_19, IP_16, psk_12}, {IP_20, IP_16, psk_13}, {IP_19, IP_17, psk_14}, {IP_20, IP_17, psk_15}, {IP_19, IP_19, psk_12}, and {IP_20, IP_18, psk_13}.

S1309: The target donor-CU sends an IAB transport migration message to the source donor-CU, where the IAB transport migration message includes the IP address #3 and the IP address #1. Optionally, there is the correspondence between the IP address #3 and the IP address #1. For a specific implementation, refer to the descriptions of S1307. Details are not described herein again.

S1310: The source donor-CU stores the correspondence between the IP address #3 and the psk #1.

For example, the source donor-CU obtains the correspondence between the IP address #3 and the IP address #1 after receiving the IAB transport migration message from the target donor, and then the source donor-CU determines the corresponding psk #1 based on the IP address #1 (optionally, the IP address #2 is further included), and stores the correspondence between the IP address #3 and the psk #1. A specific example is similar to S1308. A difference lies in that S1310 is performed by the source donor-CU, and S1308 is performed by the migration IAB node.

The source donor-CU may store the correspondence between the IP address #3 and the psk #1 after receiving the IAB transport migration message from the target donor-CU, or may store the correspondence between the IP address #3 and the psk #1 when any one or more of the following conditions are satisfied.
(1) The source donor-CU determines that a handover or reestablishment procedure has occurred on the migration IAB node. For example, in the handover scenario, the source donor-CU stores the KgNB#1 after sending the handover request message to the target donor-CU. For another example, in the reestablishment scenario, the source donor-CU stores the KgNB#1 after receiving a UE context request message from the target donor-CU.
(2) The source donor-CU establishes the IPsec channel #1 with the migration IAB node by using the psk #1. In other words, in S1302, the migration IAB node and the source donor #1 negotiate to establish the IPsec channel #1 by using the psk #1, where the psk #1 is derived by using the KgNB#1.
(3) The transport mode is used for the IPsec channel #1. In other words, the transport mode is used for the IPsec channel #1 established in S1302.
(4) A local policy of the source donor-CU indicates the source donor-CU to establish a new IPsec tunnel. For example, the local policy is preset in the source donor-CU, where the local policy indicates the source donor-CU to release an original IPsec channel (that is, the IPsec channel #1) and establish the new IPsec channel (that is, an IPsec channel #2) when an IAB node (that is, the migration IAB node) accessing the source donor-CU has migrated.
(5) The source donor-CU determines that the node that has migrated is an IAB node, that is, the source donor determines that the migration IAB node in this embodiment of this application is an IAB node. For example, the source donor-CU receives an RRC message from the migration IAB node in a registration procedure of the migration IAB node, where the RRC message includes an IAB-indication information element, and the IAB-indication indicates that the migration IAB node is an IAB node. In this case, the source donor-CU stores the KgNB#1 based on the IAB-indication.

S1312 and S1313 are similar to S1011 to S1013 in the method 1000, and S1314 is similar to S1015 in the method 1000. Details are not described herein again.

Further, the migration IAB node and the source donor-CU negotiate to establish a secure transmission channel. For example, the migration IAB node establishes the secure transmission channel with the source donor-CU by using an IKEv2 PSK protocol. For convenience, the IPsec secure transmission channel herein is denoted as the IPsec channel #2. The following describes the process by using an example with reference to S1315 to S1317.

S1315: The migration IAB node sends a request message to the source donor-CU, where the request message includes the IP address #2 and the IP address #3. Correspondingly, the source donor-CU receives the request message from the migration IAB node.

S1316: The migration IAB node determines the psk #1 based on the IP address #3 and the correspondence between the IP address #3 and the psk #1.

For example, when the migration IAB node determines to initiate an IPsec channel establishment procedure to the source donor-CU by using the IP address #2 and the IP address #3, the migration IAB node may determine whether a psk corresponding to the IP address #3 (optionally, the IP address #2 is included) is stored. For example, when the migration IAB determines that the correspondence between the IP address #3 and the psk #1 is stored, the migration IAB node determines the psk #1 based on the IP address #3, and the correspondence between the IP address #3 and the psk #1. If the migration IAB node determines that no psk corresponding to the IP address #3 is stored, the migration IAB node needs to derive a new psk.

It may be understood that if the migration IAB node stores the correspondence between the IP address #2, the IP address #3, and the psk #1 in S1308, in S1316, the migration IAB node determines the psk #1 based on the IP address #2, the IP address #3, and the correspondence between the IP address #2, the IP address #3, and the psk #1.

It may be further understood that S1316 may be performed before S1315, or may be performed after S1315, or may be performed after S1318. This is not limited in this application.

S1317: The source donor-CU determines a psk #2 based on the IP address #3 and the correspondence between the IP address #3 and the psk #1.

For example, after receiving the request message from the migration IAB node, the source donor-CU determines the psk #1 based on the IP address #3 and the locally stored correspondence between the IP address #3 and the psk #1.

It may be understood that if the source donor-CU stores the correspondence between the IP address #2, the IP address #3, and the psk #1 in S1310, in S1317, the source donor-CU determines the psk #1 based on the IP address #2, the IP address #3, and the correspondence between the IP address #2, the IP address #3, and the psk #1.

It may be further understood that S1317 may be performed after S1315, or may be performed after S1318, or may be performed in a process of S1319. For example, the source donor-CU performs S1317 after receiving an authentication vector from the migration IAB node.

S1318 is similar to S1018 in the method 1000, and details are not described herein again.

S1319: The migration IAB node and the source donor-CU respectively perform IPsec authentication procedures by using the psk #1.

For a specific process, refer to S1019 in the method 1000. A difference lies in that in S1019, the migration IAB node and the source donor-CU perform the IPsec authentication procedures by using the psk #3 and the psk #2, while in S1319, both the migration IAB node and the source donor-CU perform the IPsec authentication procedures by using the psk #1.

S1320 is similar to S1020 in the method 1000. For brevity, details are not described herein again.

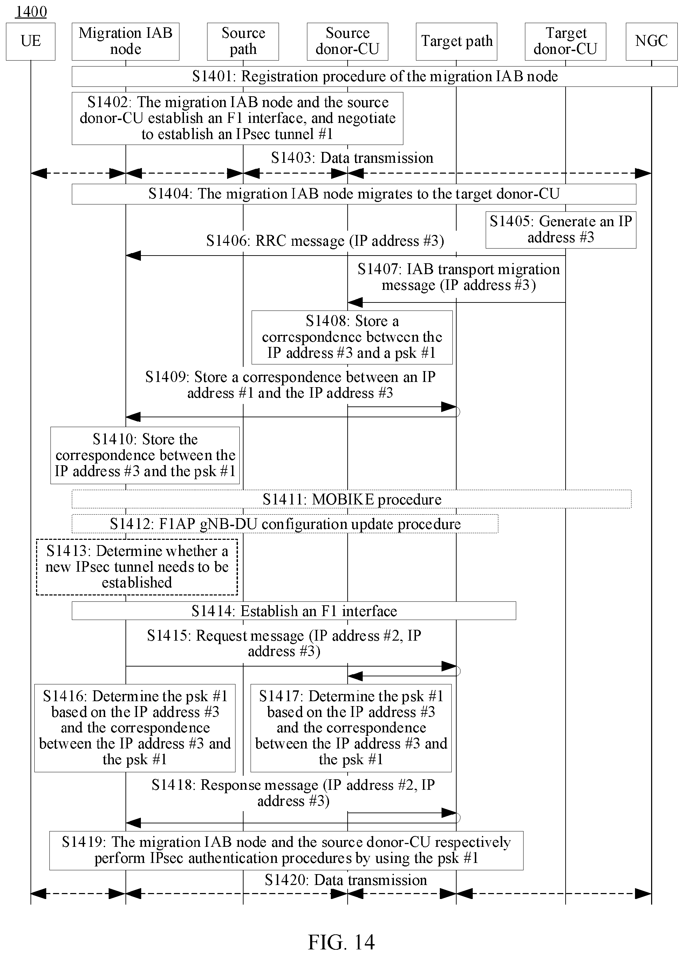

FIG. 14 is a schematic flowchart of the method 1400 according to an embodiment of this application. In the method 1400, after a migration IAB node migrates from a source donor-CU to a target donor-CU, a psk #1 is used to negotiate to establish an IPsec channel #2, where the psk #1 is a psk used by the migration IAB node and the source donor-CU to negotiate to establish an IPsec channel #1 before the migration IAB node migrates.

The following describes the method 1400 by using an example with reference to steps in FIG. 14.

S1401 to S1407 are similar to S501 to S507 in the method 500. For brevity, details are not described herein again.

S1408: The source donor-CU stores a correspondence between an IP address #3 and the psk #1.

For example, the source donor-CU determines a correspondence between the IP address #3 and an IP address #1 after receiving the IP address #3 from the target donor-CU, where the correspondence indicates to negotiate to establish the IPsec channel #2 corresponding to the IP address #3 by using a psk (that is, the psk #1) corresponding to the IP address #1. In other words, when the migration IAB node requests to establish the IPsec channel #2 by using the IP address #3 as a source IP address, the source donor-CU performs an IPsec authentication procedure by using the psk #1.

Further, the source donor-CU stores the correspondence between the IP address #3 and the psk #1.

Optionally, the source donor-CU may alternatively store a correspondence between an IP address #2, an IP address #3, and the psk #1, where the correspondence indicates to negotiate to establish the IPsec channel #2 corresponding to the IP address #2 and the IP address #3 by using the psk #1. In other words, when the migration IAB node requests to establish the IPsec channel #2 by using the IP address #3 as a source IP address and using the IP address #2 as a target IP address, the source donor-CU performs an IPsec authentication procedure by using the psk #1.

S1409: The source donor-CU sends a correspondence between an IP address #1 and the IP address #3 to the migration IAB node through a target path.

For a specific format of the correspondence, refer to the descriptions of S1307 in the method 1300. Details are not described herein again.

Optionally, when the source donor-CU stores the correspondence between the IP address #2, the IP address #3, and the psk #1 in S1408, the source donor-CU may send the correspondence between the IP address #1, the IP address #2, and the IP address #3 to the migration IAB node through the target path in S1409.

It may be understood that the source donor-CU may directly send the correspondence between the IP address #3 and the psk #1 (or the correspondence between the IP address #3, the IP address #2, and the psk #1) to the migration IAB node in S1409. This is not limited in this application.

S1410: The migration IAB node stores the correspondence between the IP address #3 and the psk #1.

S1410 is similar to S1308 in the method 1300, and details are not described herein again.

S1411 to S1420 are similar to S1311 to S1320 in the method 1300, and details are not described herein again.

In the method 1300 and the method 1400, before the migration IAB node migrates from the source donor-CU to the target donor-CU, the migration IAB node and the source donor-CU negotiate to establish the IPsec channel #1 by using a same psk (that is, the psk #1 in this embodiment of this application). After migration, the migration IAB node and the source donor-CU still negotiate to establish the new IPsec channel #2 by using the psk #1. Therefore, a case in which the IPsec channel #2 fails to be established because psks used by the source donor-CU and the migration IAB node are different can be avoided.

In addition, after the migration IAB node migrates, the migration IAB node and the source donor-CU do not need to derive new psks again, so that computing overheads can be reduced.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

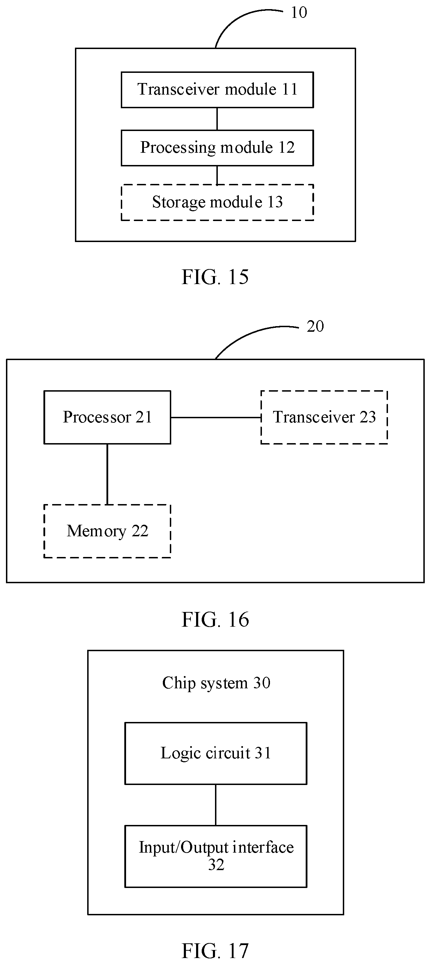

FIG. 15 is a schematic block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements an action of a device or a network element in the foregoing method embodiments.

In a first design, the apparatus 10 may correspond to the central unit of the target donor node in the foregoing method embodiments (for example, the central unit of the target donor node in the method 700 to the method 900, or the target donor-CU in the method 500 and the method 1000 to the method 1400), or a component (for example, a chip) of the central unit of the target donor node.

The apparatus 10 may implement steps or procedures performed by the central unit of the target donor node in the foregoing method embodiments. The transceiver module 11 may be configured to perform receiving and sending related operations of the central unit of the target donor node in the foregoing method embodiments. The processing module 12 may be configured to perform processing related operations of the central unit of the target donor node in the foregoing method embodiments.

In a second design, the apparatus 10 may correspond to the central unit of the source donor node in the foregoing method embodiments (for example, the central unit of the source donor node in the method 700 to the method 900, or the source donor-CU in the method 500 and the method 1000 to the method 1400), or a component (for example, a chip) of the central unit of the source donor node.

The apparatus 10 may implement steps or procedures performed by the central unit of the source donor node in the foregoing method embodiments. The transceiver module 11 may be configured to perform receiving and sending related operations of the central unit of the source donor node in the foregoing method embodiments. The processing module 12 may be configured to perform processing related operations of the central unit of the source donor node in the foregoing method embodiments.

In a third design, the apparatus 10 may correspond to the integrated access and backhaul node in the foregoing method embodiments (for example, the integrated access and backhaul node in the method 700 to the method 900, or the migration IAB node in the method 500 and the method 1000 to the method 1400), or may be a component (for example, a chip) of the integrated access and backhaul node.

The apparatus 10 may implement steps or procedures performed by the integrated access and backhaul node in the foregoing method embodiments. The transceiver module 11 may be configured to perform receiving and sending related operations of the integrated access and backhaul node in the foregoing method embodiments. The processing module 12 may be configured to perform processing related operations of the integrated access and backhaul node in the foregoing method embodiments.

It should be understood that a specific process in which the modules perform the foregoing corresponding steps has been described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically the central unit of the target donor node in the foregoing embodiments, and may be configured to perform procedures and/or steps corresponding to the central unit of the target donor node in the foregoing method embodiments. Alternatively, the apparatus 10 may be specifically the central unit of the source donor node in the foregoing embodiments, and may be configured to perform procedures and/or steps corresponding to the central unit of the source donor node in the foregoing method embodiments. Alternatively, the apparatus 10 may be specifically the integrated access and backhaul node in the foregoing embodiments, and may be configured to perform procedures and/or steps corresponding to the integrated access and backhaul node in the foregoing method embodiments. To avoid repetition, details are not described herein again.

The apparatus 10 in each of the foregoing solutions has a function of implementing corresponding steps performed by the device in the foregoing methods (for example, the central unit of the target donor node, the central unit of the source donor node, or the integrated access and backhaul node). The function may be implemented by hardware, or may be implemented by hardware executing corresponding software. The hardware or software includes one or more modules corresponding to the foregoing function. For example, the transceiver module may alternatively be a transceiver (for example, a sending unit in the transceiver module may alternatively be a transmitter, and a receiving unit in the transceiver module may alternatively be a receiver), and another unit such as the processing module may alternatively be a processor, to respectively perform receiving and sending operations and processing related operations in the method embodiments.

In addition, the transceiver module 11 may alternatively be a transceiver circuit (for example, may include a receiving circuit and a sending circuit), and the processing module may be a processing circuit.

FIG. 16 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 16, the apparatus 20 further includes the memory 22. The memory 22 is configured to store the computer program or the instructions and/or the data. The memory 22 may be integrated with the processor 21, or may be disposed separately. Optionally, there are one or more memories 22.

Optionally, as shown in FIG. 16, the apparatus 20 further includes a transceiver 23. The transceiver 23 is configured to receive and/or send a signal. For example, the processor 21 is configured to control the transceiver 23 to receive and/or send the signal.

In a solution, the apparatus 20 is configured to implement operations performed by the central unit of the target donor node in the foregoing method embodiments.

In another solution, the apparatus 20 is configured to implement operations performed by the central unit of the source donor node in the foregoing method embodiments.

In another solution, the apparatus 20 is configured to implement operations performed by the integrated access and backhaul node in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor. Alternatively, the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the storage described herein is intended to include, but is not limited to, these and any other appropriate type of storage.

FIG. 17 is a diagram of a chip system 30 according to an embodiment of this application. The chip system 30 (or referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the central unit of the target donor node in the foregoing method embodiments (for example, the central unit of the target donor node in FIG. 5 to FIG. 7, or the target donor-CU in FIG. 8 and FIG. 10 to FIG. 14).

For example, the logic circuit 31 is configured to implement processing related operations performed by the central unit of the target donor node in the foregoing method embodiments, for example, processing related operations performed by the central unit of the target donor node in the embodiments shown in FIG. 5 to FIG. 7, or processing related operations performed by the target donor-CU in any one of the embodiments shown in FIG. 8 and FIG. 9 to FIG. 14. The input/output interface 32 is configured to implement sending and/or receiving related operations performed by the central unit of the target donor node in the foregoing method embodiments, for example, sending and/or receiving related operations performed by the central unit of the target donor node in the embodiments shown in FIG. 5 to FIG. 7, or sending and/or receiving related operations performed by the target donor-CU in any one of the embodiments shown in FIG. 8 and FIG. 9 to FIG. 14.

In another solution, the chip system 30 is configured to implement operations performed by the central unit of the source donor node in the foregoing method embodiments (for example, the central unit of the source donor node in FIG. 5 to FIG. 7, or the source donor-CU in FIG. 8 and FIG. 10 to FIG. 14).

For example, the logic circuit 31 is configured to implement processing related operations performed by the central unit of the source donor node in the foregoing method embodiments, for example, processing related operations performed by the central unit of the source donor node in the embodiments shown in FIG. 5 to FIG. 7, or processing related operations performed by the source donor-CU in any one of the embodiments shown in FIG. 8 and FIG. 10 to FIG. 14. The input/output interface 32 is configured to implement sending and/or receiving related operations performed by the central unit of the source donor node in the foregoing method embodiments, for example, sending and/or receiving related operations performed by the central unit of the source donor node in the embodiments shown in FIG. 5 to FIG. 7, or sending and/or receiving related operations performed by the source donor-CU in any one of the embodiments shown in FIG. 8 and FIG. 9 to FIG. 14.

In another solution, the chip system 30 is configured to implement operations performed by the integrated access and backhaul node in the foregoing method embodiments (the integrated access and backhaul node in FIG. 5 to FIG. 7, or the migration IAB node in FIG. 8 and FIG. 9 to FIG. 14).

For example, the logic circuit 31 is configured to implement processing related operations performed by the migration IAB node in the foregoing method embodiments, for example, processing related operations performed by the migration IAB node in the embodiments shown in FIG. 5 to FIG. 7, or processing related operations performed by the migration IAB node in any one of the embodiments shown in FIG. 8 and FIG. 9 to FIG. 14. The input/output interface 32 is configured to implement sending and/or receiving related operations performed by the migration IAB node in the foregoing method embodiments, for example, sending and/or receiving related operations performed by the migration IAB node in the embodiments shown in FIG. 5 to FIG. 7, or sending and/or receiving related operations performed by the migration IAB node in any one of the embodiments shown in FIG. 8 and FIG. 9 to FIG. 14.

An embodiment of this application further provides a computer-readable storage medium. The computer-readable storage medium stores computer instructions for implementing the method performed by a device in the foregoing method embodiments.

For example, when the computer program is executed by a computer, the computer is enabled to implement the method performed by the central unit of the target donor node in the foregoing method embodiments.

For another example, when the computer program is executed by a computer, the computer is enabled to implement the method performed by the central unit of the source donor node in the foregoing method embodiments.

For another example, when the computer program is executed by a computer, the computer is enabled to implement the method performed by the integrated access and backhaul node in the foregoing method embodiments.

An embodiment of this application further provides a computer program product, including instructions. When the instructions are executed by a computer, the method performed by a device (for example, the central unit of the target donor node, the central unit of a source donor node, or the integrated access and backhaul node) in the foregoing method embodiments is implemented.

An embodiment of this application further provides a communication system, including the foregoing central unit of the target donor node and the foregoing central unit of the source donor node. Optionally, the foregoing integrated access and backhaul node is further included.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication system, used in a scenario in which an integrated access and backhaul node migrates from a central unit of a source donor node to a central unit of a target donor node, wherein the system comprises the central unit of the target donor node and the central unit of the source donor node, wherein
the central unit of the target donor node is configured to: derive a first pre-shared key based on a first root key, a first Internet protocol address of the integrated access and backhaul node, and a second Internet protocol address of the central unit of the source donor node, and send the first pre-shared key to the central unit of the source donor node; and
the central unit of the source donor node is configured to: receive the first pre-shared key from the central unit of the target donor node, and perform security authentication on the integrated access and backhaul node based on the first pre-shared key, to establish a first secure transmission channel between the central unit of the source donor node and the integrated access and backhaul node.

2. The system according to claim 1, wherein
the central unit of the target donor node is further configured to send address information corresponding to the first pre-shared key to the central unit of the source donor node, wherein the address information comprises the first Internet protocol address and/or the second Internet protocol address; and
the central unit of the source donor node is further configured to: receive the address information from the central unit of the target donor node, and store a correspondence between the first pre-shared key and the address information.

3. The system according to claim 2, wherein that the central unit of the source donor node is configured to perform security authentication on the integrated access and backhaul node based on the first pre-shared key comprises:
the central unit of the source donor node is configured to: receive a request message from the integrated access and backhaul node, wherein the request message is used to request to establish the secure transmission channel, and the request message comprises the address information; determine the first pre-shared key based on the address information and the correspondence between the first pre-shared key and the address information; and perform security authentication on the integrated access and backhaul node based on the first pre-shared key.

4. The system according to any one of claims 1 to 3, wherein
the central unit of the source donor node is further configured to send the second Internet protocol address to the central unit of the target donor node; and
the central unit of the target donor node is further configured to receive the second Internet protocol address from the central unit of the source donor node.

5. The system according to claim 4, wherein that the central unit of the source donor node is further configured to send the second Internet protocol address to the central unit of the target donor node comprises:
the central unit of the source donor node is further configured to send a handover request message to the central unit of the target donor node, wherein the handover request message comprises the second Internet protocol address, and the handover request message is used to request handover of the integrated access and backhaul node from the central unit of the source donor node to the central unit of the target donor node; and
that the central unit of the target donor node is further configured to receive the second Internet protocol address from the central unit of the source donor node comprises:
the central unit of the target donor node is further configured to receive, from the central unit of the source donor node, the handover request message comprising the second Internet protocol address.

6. The system according to claim 4, wherein
the central unit of the target donor node is further configured to: receive a reestablishment request message from the integrated access and backhaul node, wherein the reestablishment request message is used to request to establish a radio resource control connection between the integrated access and backhaul node and the central unit of the target donor node; and send a context request message to the central unit of the source donor node in response to the reestablishment request message, wherein the context request message is used to request to obtain a context of the integrated access and backhaul node;
that the central unit of the source donor node is further configured to send the second Internet protocol address to the central unit of the target donor node comprises: the central unit of the source donor node is further configured to: receive the context request message from the target donor node, and send a context response message to the central unit of the target donor node in response to the context request message, wherein the context response message comprises the context of the integrated access and backhaul node, and the context comprises the second Internet protocol address; and
that the central unit of the target donor node is further configured to receive the second Internet protocol address from the central unit of the source donor node comprises:
the central unit of the target donor node is further configured to receive the context of the integrated access and backhaul node from the central unit of the source donor node, wherein the context comprises the second Internet protocol address.

7. The system according to any one of claims 1 to 6, wherein the central unit of the source donor node is further configured to send a key request message to the central unit of the target donor node, wherein the key request message is used to request to obtain the first pre-shared key; and
the central unit of the target donor node is further configured to receive the key request message from the central unit of the source donor node.

8. The system according to any one of claims 1 to 7, wherein the communication system further comprises the integrated access and backhaul node, wherein the integrated access and backhaul node is configured to: derive a second pre-shared key based on the first root key, the first Internet protocol address, and the second Internet protocol address, wherein the second pre-shared key is the same as the first pre-shared key; and perform security authentication on the central unit of the source donor node based on the second pre-shared key, to establish the first secure transmission channel.

9. The system according to any one of claims 1 to 8, wherein the central unit of the target donor node is further configured to: receive a migration complete message from the integrated access and backhaul node, wherein the migration complete message indicates that the integrated access and backhaul node completes migration from the central unit of the source donor node to the central unit of the target donor node; send a path switching request message to an access and mobility management function network element in response to the migration complete message, wherein the path switching request message comprises identification information of the integrated access and backhaul node; receive a path switching response message from the access and mobility management function network element, wherein the path switching response message comprises a next hop parameter; and derive the first root key based on the next hop parameter.

10. The system according to any one of claims 1 to 9, wherein the first Internet protocol address is address information generated by a network management device or the central unit of the target donor node for a distributed unit of the integrated access and backhaul node after the integrated access and backhaul node migrates from the central unit of the source donor node to the central unit of the target donor node.

11. The system according to any one of claims 1 to 9, wherein the central unit of the target donor node is further configured to generate the first Internet protocol address for a distributed unit of the integrated access and backhaul node after the integrated access and backhaul node migrates from the central unit of the source donor node to the central unit of the target donor node.

12. The system according to claim 11, wherein the central unit of the target donor node is further configured to send the first Internet protocol address to the integrated access and backhaul node.

13. A communication method, wherein the method is applied to a scenario in which a central unit of an integrated access and backhaul node migrates from a source donor node to a central unit of a target donor node, and the method comprises:
deriving, by the central unit of the target donor node, a first pre-shared key based on a first root key, a first Internet protocol address of the integrated access and backhaul node, and a second Internet protocol address of a central unit of the source donor node, wherein the first pre-shared key is used to establish a secure transmission channel between the integrated access and backhaul node and the central unit of the source donor node; and
sending, by the central unit of the target donor node, the first pre-shared key to the central unit of the source donor node.

14. The method according to claim 13, wherein the method further comprises:
sending, by the central unit of the target donor node, address information corresponding to the first pre-shared key to the central unit of the source donor node, wherein the address information comprises the first Internet protocol address and/or the second Internet protocol address.

15. The method according to claim 13 or 14, wherein the method further comprises:
receiving, by the central unit of the target donor node, a key request message from the central unit of the source donor node, wherein the key request message is used to request to obtain the first pre-shared key.

16. The method according to any one of claims 13 to 15, wherein before the deriving a first pre-shared key based on a first root key, a first Internet protocol address of the integrated access and backhaul node, and a second Internet protocol address of a central unit of the source donor node, the method further comprises:
receiving, by the central unit of the target donor node, the second Internet protocol address from the central unit of the source donor node.

17. The method according to claim 16, wherein the receiving the second Internet protocol address from the central unit of the source donor node comprises:
receiving, by the central unit of the target donor node, a handover request message from the central unit of the source donor node, wherein the handover request message comprises the second Internet protocol address, and the handover request message is used to request handover of the integrated access and backhaul node from the central unit of the source donor node to the central unit of the target donor node.

18. The method according to claim 16, wherein the receiving the second Internet protocol address from the central unit of the source donor node comprises:
receiving, by the central unit of the target donor node, a reestablishment request message from the integrated access and backhaul node, wherein the reestablishment request message is used to request to establish a radio resource control connection between the integrated access and backhaul node and the central unit of the target donor node;
sending, by the central unit of the target donor node, a context request message to the central unit of the source donor node in response to the reestablishment request message, wherein the context request message is used to request to obtain a context of the integrated access and backhaul node; and
receiving, by the central unit of the target donor node, a context response message from the central unit of the source donor node, wherein the context response message comprises the context of the integrated access and backhaul node, and the context comprises the second Internet protocol address.

19. The method according to any one of claims 13 to 18, wherein the method further comprises:
receiving, by the central unit of the target donor node, a migration complete message from the integrated access and backhaul node, wherein the migration complete message indicates that the integrated access and backhaul node completes migration from the central unit of the source donor node to the central unit of the target donor node;
sending, by the central unit of the target donor node, a path switching request message to an access and mobility management function network element in response to the migration complete message, wherein the path switching request message comprises identification information of the integrated access and backhaul node;
receiving, by the central unit of the target donor node, a path switching response message from the access and mobility management function network element, wherein the path switching response message comprises a next hop parameter; and
deriving, by the central unit of the target donor node, the first root key based on the next hop parameter.

20. The method according to any one of claims 13 to 18, wherein the method further comprises:
generating, by the central unit of the target donor node, the first Internet protocol address for a distributed unit of the integrated access and backhaul node after the integrated access and backhaul node migrates from the central unit of the source donor node to the central unit of the target donor node.

21. The method according to claim 20, wherein the method further comprises:
sending, by the central unit of the target donor node, the first Internet protocol address to the integrated access and backhaul node.

22. A communication method, wherein the method is applied to a scenario in which a central unit of an integrated access and backhaul node migrates from a source donor node to a central unit of a target donor node, and the method comprises:
receiving, by a central unit of the source donor node, a first pre-shared key from the central unit of the target donor node; and
performing, by the central unit of the source donor node, security authentication on the integrated access and backhaul node based on the first pre-shared key, to establish a first secure transmission channel between the central unit of the source donor node and the integrated access and backhaul node.

23. The method according to claim 22, wherein the performing, by the central unit of the source donor node, security authentication on the integrated access and backhaul node based on the first pre-shared key, to establish a first secure transmission channel between the central unit of the source donor node and the integrated access and backhaul node comprises:
after the central unit of the source donor node sends a handover request message to the central unit of the target donor node, or after the central unit of the source donor node receives a context request message from the target donor node, performing, by the central unit of the source donor node, security authentication on the integrated access and backhaul node based on the first pre-shared key, to establish the first secure transmission channel, wherein the handover request message is used to request handover of the integrated access and backhaul node from the central unit of the source donor node to the central unit of the target donor node, and the context request message is used to request a context of the integrated access and backhaul node.

24. The method according to claim 22 or 23, wherein the first pre-shared key is different from a fifth pre-shared key, wherein the fifth pre-shared key is used to establish a second secure transmission channel between the central unit of the source donor node and the integrated access and backhaul node before the integrated access and backhaul node migrates from the central unit of the source donor node to the central unit of the target donor node.

25. The method according to any one of claims 22 to 24, wherein the method further comprises:
receiving, by the central unit of the source donor node from the central unit of the target donor node, address information corresponding to the first pre-shared key, wherein the address information comprises a first Internet protocol address of the integrated access and backhaul node and/or a second Internet protocol address of the central unit of the target donor node; and
storing, by the central unit of the source donor node, a correspondence between the first pre-shared key and the address information.

26. The method according to claim 25, wherein the performing, by the central unit of the source donor node, security authentication on the integrated access and backhaul node based on the first pre-shared key, to establish a first secure transmission channel between the central unit of the source donor node and the integrated access and backhaul node comprises:
receiving, by the central unit of the source donor node, a request message from the integrated access and backhaul node, wherein the request message is used to request to establish the first secure transmission channel, and the request message comprises the address information;
determining, by the central unit of the source donor node, the first pre-shared key based on the address information and the correspondence between the first pre-shared key and the address information; and
performing, by the central unit of the source donor node, security authentication on the integrated access and backhaul node based on the first pre-shared key.

27. The method according to any one of claims 22 to 26, wherein before the receiving, by a central unit of the source donor node, a first pre-shared key from the central unit of the target donor node, the method further comprises:
sending, by the central unit of the source donor node, a key request message to the central unit of the target donor node, wherein the key request message is used to request to obtain the first pre-shared key.

28. The method according to any one of claims 22 to 27, wherein the method further comprises:
sending, by the central unit of the source donor node, the second Internet protocol address of the central unit of the source donor node to the central unit of the target donor node, wherein the second Internet protocol address is used to generate the first pre-shared key.

29. The method according to claim 28, wherein the sending the second Internet protocol address of the central unit of the source donor node to the central unit of the target donor node comprises:
sending, by the central unit of the source donor node, the handover request message to the central unit of the target donor node, wherein the handover request message comprises the second Internet protocol address, the handover request message is used to request handover of the integrated access and backhaul node from the central unit of the source donor node to the central unit of the target donor node, and the handover request message comprises the second Internet protocol address.

30. The method according to claim 28, wherein the sending, by the central unit of the source donor node, the second Internet protocol address of the central unit of the source donor node to the central unit of the target donor node comprises:
receiving, by the central unit of the source donor node, the context request message from the target donor node, wherein the context request message is used to request the context of the integrated access and backhaul node; and
sending, by the central unit of the source donor node, a context response message to the central unit of the target donor node in response to the context request message, wherein the context response message comprises the context of the integrated access and backhaul node, and the context comprises the second Internet protocol address.

31. A communication apparatus, wherein the apparatus comprises one or more functional modules, and the one or more functional modules are configured to perform the method according to any one of claims 13 to 21, or are configured to perform the method according to any one of claims 22 to 30.

32. A communication apparatus, comprising:
a processor, configured to execute a computer program stored in a memory, so that the apparatus performs the method according to any one of claims 13 to 21, or the apparatus performs the method according to any one of claims 22 to 30.

33. A computer program product, wherein the computer program product comprises instructions used to perform the method according to any one of claims 13 to 21, or the computer program product comprises instructions used to perform the method according to any one of claims 22 to 30.

34. A computer-readable storage medium, wherein the computer-readable storage medium stores a computer program; and when the computer program is run on a computer, the computer is enabled to perform the method according to any one of claims 13 to 21, or the computer is enabled to perform the method according to any one of claims 22 to 30.

35. A communication method, applied to a scenario in which an integrated access and backhaul node migrates from a central unit of a source donor node to a central unit of a target donor node, wherein the method comprises:
deriving, by the central unit of the target donor node, a first pre-shared key based on a first root key, a first Internet protocol address of the integrated access and backhaul node, and a second Internet protocol address of the central unit of the source donor node, and sending the first pre-shared key to the central unit of the source donor node; and
receiving, by the central unit of the source donor node, the first pre-shared key from the central unit of the target donor node, and performing security authentication on the integrated access and backhaul node based on the first pre-shared key, to establish a first secure transmission channel between the central unit of the source donor node and the integrated access and backhaul node.
